# EUROPEAN PATENT APPLICATION

(11) **EP 4 840 625 A1**
(43) Date of publication of application: **18.11.2026**
(21) Application number: 25176510.3
(22) Date of filing: 14.05.2025
(51) Int. Cl.: B32B 3/26, B32B 3/30, B32B 27/08, B32B 27/10, B32B 27/32, B65D 65/40

(54) **SHEET-LIKE COMPOSITE FOR DIMENSIONALLY STABLE FOOD OR DRINK PRODUCT CONTAINERS WITH A BARRIER LAYER WITH A HOLE-COVERING REGION INCLUDING SUB-REGIONS OF FIRST AND SECOND KINDS**

(71) Applicant: SIG Services AG, 8212 Neuhausen am Rheinfall (CH)
(72) Inventor: WITTKOWSKI, Aline, 52441 Linnich (DE); BISCHOFF, Jörg, 52441 Linnich (DE); BERG, Eugen, 52441 Linnich (DE); TONN, Harry, 52441 Linnich (DE); LEUFEN, Richard, 52441 Linnich (DE)
(74) Representative: Herzog IP Patentanwalts GmbH

(57) **Abstract**

The invention pertains to a sheet-like composite (100) comprising:
a. a carrier layer (103),
b. a barrier layer (104), and
c. an inner polymer layer H (105);

wherein the carrier layer (103) has a through-hole (108) which is completely covered by the barrier layer (104); wherein a thickness of a barrier substrate layer (106) is a two-dimensional function; wherein the hole-covering region (109) comprises sub-regions of a first kind (304);
wherein either:
a] each sub-region of the first kind (304) includes exactly the positions at which the two-dimensional function has a local minimum; or
b] each sub-region of the first kind (304) includes exactly the positions at which the two-dimensional function has a local maximum;
wherein in each sub-region of the first kind (304) a thickness of a barrier material layer (107) does not differ by more than 20 % from an average thickness of the barrier material layer (107).

The invention further refers to methods (600, 700, 900) for producing a sheet-like composite (100), a container precursor (800) and a closed container (1000), to the products (100, 800, 1000) of these methods (600, 700, 900), a container precursor (800), a closed container (1000), uses of the sheet-like composite (100), a sonotrode, and a combination of a sonotrode and an anvil, and to a barrier layer, and to a method for treating a barrier layer.

## Description

### FIELD OF THE INVENTION

The present invention refers to a sheet-like composite comprising a layer sequence which comprises the following layers, superimposed to one another, in the following order from an outer surface of the sheet-like composite to an inner surface of the sheet-like composite:
a. a carrier layer,
b. a barrier layer, and
c. an inner polymer layer H;

wherein the carrier layer has a through-hole which is completely covered at least by a hole-covering region of the barrier layer; wherein the barrier layer comprises a sublayer sequence which comprises:
   - a barrier material layer, and
   - a barrier substrate layer
as sublayers which are superimposed to one another; wherein a thickness of the barrier substrate layer is a two-dimensional function of a position on a surface of the barrier substrate layer which faces away from the barrier material layer; wherein the hole-covering region of the barrier layer comprises a plurality of sub-regions of a first kind; wherein either:
   a] each sub-region of the first kind includes exactly the positions on the surface of the barrier substrate layer which faces away from the barrier material layer at which the two-dimensional function has a local minimum; or
   b] each sub-region of the first kind includes exactly the positions on the surface of the barrier substrate layer which faces away from the barrier material layer at which the two-dimensional function has a local maximum;
wherein in each sub-region of the first kind a thickness of the barrier material layer does not differ by more than 20 % from an average thickness of the barrier material layer.

The invention further refers to methods for producing a sheet-like composite, a container precursor and a closed container, to the products of these methods, to a container precursor, to a closed container, to a use of the sheet-like composite, to a use of a sonotrode, to a use of a combination of a sonotrode and an anvil, to a barrier layer, and to a method for treating a barrier layer.

### BACKGROUND

For some time, foodstuffs have been preserved, whether they be foodstuffs for human consumption or else animal feed products, by storing them either in a can or in a jar closed by a lid. In this case, shelf life can be increased firstly by separately and very substantially sterilising the foodstuff and the container in each case, here the jar or can, and then introducing the foodstuff into the container and closing the container. However, these measures of increasing the shelf life of foodstuffs, which have been tried and tested over a long period, have a series of disadvantages, for example the need for another sterilisation later on. Cans and jars, because of their essentially cylindrical shape, have the disadvantage that very dense and space-saving storage is not possible. Moreover, cans and jars have considerable intrinsic weight, which leads to increased energy expenditure in transport. Moreover, production of glass, tinplate or aluminium, even when the raw materials used for the purpose are recycled, necessitates quite a high expenditure of energy. In the case of jars, an aggravating factor is elevated expenditure on transport. The jars are usually prefabricated in a glass factory and then have to be transported to the facility where the foodstuff is dispensed with utilisation of considerable transport volumes. Furthermore, jars and cans can be opened only with considerable expenditure of force or with the aid of tools and hence in a rather laborious manner. In the case of cans, there is a high risk of injury emanating from sharp edges that arise on opening. In the case of jars, it is a repeated occurrence that broken glass gets into the foodstuff in the course of filling or opening of the filled jars, which can lead in the worst case to internal injuries on consumption of the foodstuff. In addition, both cans and jars have to be labelled for identification and promotion of the foodstuff contents. The jars and cans cannot be printed directly with information and promotional messages. In addition to the actual printing, a substrate is thus needed for the purpose, a paper or suitable film, as is a securing means, an adhesive or sealant.

Other packaging systems are known from the prior art, in order to store food and drink products over a long period with minimum impairment. These are containers produced from sheet-like composites - frequently also referred to as laminates. Sheet-like composites of this kind are frequently constructed from an outer polymer layer, a carrier layer usually consisting of cardboard or paper which imparts dimensional stability to the container, an adhesion promoter layer, a barrier layer and one or more inner polymer layers, as disclosed inter alia in WO 90/09926 A2. As the carrier layer imparts rigidity and dimensional stability to the container produced from the laminate, these laminate containers are to be seen in a line of development with the above-mentioned glasses and jars. In this, the above-mentioned laminate containers differ severely from pouches and bags produced from thinner foils without carrier layer. The dimensionally stable laminate containers already have many advantages over the conventional jars and cans. Nevertheless, there are opportunities for improvement in the case of these packaging systems too.

For instance, aluminium foil has been used for the barrier layer for decades. This has been motivated by the superior barrier performance of several µm thick aluminium foil with respect to oxygen, water vapour and light. Aluminium, however, is a material which is comparatively energy- and resource-intensive to produce. Moreover, the aluminium foil also renders recycling of the laminate after use of the prior art container comparatively energy-intensive. Lately, these drawbacks have become increasingly relevant. Different polymers have been tested for the barrier layer. So far, however, none of these turned out suitable to replace the aluminium foil in standard laminates for long shelf-life containers. Recently, prefabricated barrier films with a polymer substrate that has been coated with a thin layer of a material, that provides barrier action, have attracted considerable interest. Such barrier films often provide good barrier properties and the materials used are more eco-friendly than aluminium foil.

In order to ease opening of foodstuff containers, the packaging laminates of the prior art often have a hole in the carrier layer which is overcoated by the barrier layer and the polymer layers.

Such a hole is referred to as overcoated hole (OCH) in the art. The OCHs of containers from laminates with an aluminium foil as barrier layer can be opened reliably by piercing a drinking straw through the hole-covering layers. Larger pouring holes are often created with an opening aid which is glued to the container and destroys the hole-covering membrane by cutting or tearing. Tests have shown that holes for drinking straws and also pouring holes are not that easily created if the aluminium foil is replaced by one of the above-described barrier films. It turned out that, if the membrane formed by the hole-covering layers in the OCH does not include an aluminium foil, a greater force has to be applied to pierce through the membrane with a drinking straw. Destroying the hole-covering membrane with a conventional opening aid has also proven to be more difficult.

In the prior art, it is known to thermally treat the hole-covering membrane of the laminate to improve opening properties of the container. In particular, it is known to blow hot air onto the laminate to change the molecular structure of the polymer layers. This technique requires careful control of the temperature and flow of the hot air and of the distance of the nozzle, which ejects the hot air, from the laminate. This is because the working window of this technique is rather narrow. If too much thermal power is applied to the laminate, it is easily damaged. Leaking containers or containers with reduced barrier properties, for example against oxygen, and thus reduced shelf-life may result. If the thermal power is too low, the opening properties will not be improved to a sufficient degree. In addition, the hot air technique cannot be applied to a barrier film as such because the heat would shrink and deform the film. Therefore, the hot air can only be applied to the complete laminate. The production lines which process the laminate are designed for a specific container format (shape and volume). This means that production lines for all container formats need to be equipped with the hot air technology. It would, of course, be much more efficient if the barrier film could be treated before it is incorporated into the laminate. This would minimise the effort to implement the treatment technology for all container formats.

This may be possible if needles or knives are used to perforate the substrate of the barrier film mechanically instead of using hot air. Here, however the working window is also narrow. The substrate layer to be perforated is very thin, often 10 to 20 µm thin. If, in addition to the perforation of the substrate, the barrier coating on the substrate is damaged, the barrier properties and thus the shelf-life of the container are greatly reduced. In addition, the pointed or sharp perforation tools suffer from wear which reduces service life. For all these reasons, this technique, is not suitable for industrial application in its current state.

### OBJECTS

In general, it is an object of the present invention to at least partly overcome a disadvantage arising from the prior art. In particular, an object of the present invention is improving the pierce-ability of polymer-based barrier films whilst, at the same time, ideally not affecting the barrier properties of such films.

It is a further object of the invention to provide an eco-friendlier packaging laminate, from which dimensionally stable food or drink product containers with reliably high shelf-life can be produced, where the container can be opened with as little effort as possible, preferably with a drinking straw or a conventional opening aid. According to a further object of the invention, the aforementioned packaging laminate allows to produce the containers by a process which:
- reliably results in liquid-tightness and a high oxygen barrier,
- can easily be adapted to different container formats,
- is as robust as possible with regard to thermal and mechanical tolerances,
- can be carried out with devices whose service life is limited as little as possible by mechanical wear, and/or
- has an as high as possible production rate.

A further object of the invention is it to provide the aforementioned process.

### DETAILED DESCRIPTION OF THE INVENTION

A contribution to at least partly fulfilling at least one, preferably more than one, of the above-mentioned objects is made by any of the embodiments of the invention.

A 1^{st} embodiment of the invention is a sheet-like composite comprising a layer sequence which comprises the following layers, superimposed to one another, in the following order from an outer surface of the sheet-like composite to an inner surface of the sheet-like composite:
a. a carrier layer,
b. a barrier layer, and
c. an inner polymer layer H;

wherein the carrier layer has a through-hole which is completely covered at least by a hole-covering region of the barrier layer; wherein the barrier layer comprises a sublayer sequence which comprises:
   - a barrier material layer, and
   - a barrier substrate layer
as sublayers which are superimposed to one another; wherein a thickness of the barrier substrate layer is a two-dimensional function of a position on a surface of the barrier substrate layer which faces away from the barrier material layer; wherein the hole-covering region of the barrier layer comprises a plurality of sub-regions of a first kind; wherein either:
   a] each sub-region of the first kind includes exactly the positions on the surface of the barrier substrate layer which faces away from the barrier material layer at which the two-dimensional function has a local minimum; or
   b] each sub-region of the first kind includes exactly the positions on the surface of the barrier substrate layer which faces away from the barrier material layer at which the two-dimensional function has a local maximum.

Preferably, in each sub-region of the first kind a thickness of the barrier material layer does not differ by more than 20 %, more preferably more than 10 %, more preferably more than 5 %, even more preferably more than 3 %, in each case from an average thickness of the barrier material layer.

Thus, in each sub-region of the first kind, the two-dimensional function is essentially constant, i.e., the thickness of the barrier substrate layer is essentially constant. Each sub-region of the first kind is a contiguous sub-region of the hole-covering region of the barrier layer. In the above alternative a], the positions on the surface of the barrier substrate layer which form the respective sub-region of the first kind belong to the same local minimum of the two-dimensional function. Hence, each sub-region of the first kind corresponds to exactly one local minimum of the two-dimensional function. In the above alternative b], the positions on the surface of the barrier substrate layer which form the respective sub-region of the first kind belong to the same local maximum of the two-dimensional function. Hence, each sub-region of the first kind corresponds to exactly one local maximum of the two-dimensional function. In the above alternative a], the local minimum of each sub-region of the first kind is preferably also a global minimum of the two-dimensional function. In the above alternative b], the local maximum of each sub-region of the first kind is preferably also a global maximum of the two-dimensional function.

In a preferred embodiment of the sheet-like composite, the hole-covering region of the barrier layer comprises at least one sub-region of a second kind; wherein each sub-region of the first kind is at least partially, preferably fully, surrounded by a sub-region of the second kind; wherein either:
a] each sub-region of the second kind includes exactly the positions on the surface of the barrier substrate layer which faces away from the barrier material layer at which the two-dimensional function has a local maximum; or
b] each sub-region of the second kind includes exactly the positions on the surface of the barrier substrate layer which faces away from the barrier material layer at which the two-dimensional function has a local minimum;
wherein in each sub-region of the first kind a thickness of the barrier material layer does not differ by more than 20 %, preferably more than 10 %, more preferably more than 5 %, even more preferably more than 3 %, in each case from a thickness of the barrier material layer in in the sub-region of the second kind which is at least partially, preferably fully, surrounds the respective sub-region of the first kind. This preferred embodiment is a 2^{nd} embodiment of the invention, that preferably depends on the 1^{st} embodiment of the invention.

Thus, in each sub-region of the second kind, the two-dimensional function is essentially constant, i.e., the thickness of the barrier substrate layer is essentially constant. In the above alternative a], the positions on the surface of the barrier substrate layer which form the respective sub-region of the second kind belong to the same local maximum of the two-dimensional function. Hence, each sub-region of the second kind corresponds to exactly one local maximum of the two-dimensional function. In the above alternative b], the positions on the surface of the barrier substrate layer which form the respective sub-region of the second kind belong to the same local minimum of the two-dimensional function. Hence, each sub-region of the second kind corresponds to exactly one local minimum of the two-dimensional function. In the above alternative a] of the 2^{nd} embodiment, the local maximum of each sub-region of the second kind is preferably also a global maximum of the two-dimensional function. In the above alternative b] of the 2^{nd} embodiment, the local minimum of each sub-region of the second kind is preferably also a global minimum of the two-dimensional function. Preferably, the alternative a] of the 2^{nd} embodiment refers to the alternative a] of the 1^{st} embodiment, and the alternative b] of the 2^{nd} embodiment refers to the alternative b] of the 1^{st} embodiment. Each sub-region of the second kind is a contiguous sub-region of the hole-covering region of the barrier layer. Preferably, the hole-covering region of the barrier layer comprises exactly one sub-region of a second kind and this sub-region of the second kind at least partially, preferably fully, surrounds and directly adjoins each of the sub-regions of the first kind of the plurality of sub-regions of the first kind.

In a preferred embodiment of the sheet-like composite, the hole-covering region of the barrier layer comprises a plurality of sub-regions of a third kind; wherein each sub-region of the third kind is located between and directly adjoins a sub-region of the first kind and a sub-region of the second kind; wherein in each sub-region of the third kind a thickness of the barrier substrate layer is either:
a] between the local minimum in the sub-region of the first kind which directly adjoins the respective sub-region of the third kind and the local maximum in the sub-region of the second kind which directly adjoins the respective sub-region of the third kind; or
b] between the local maximum in the sub-region of the first kind which directly adjoins the respective sub-region of the third kind and the local minimum in the sub-region of the second kind which directly adjoins the respective sub-region of the third kind.

This preferred embodiment is a 3^{rd} embodiment of the invention, that preferably depends on the 2^{nd} embodiment of the invention.

**In** each sub-region of the third kind, the thickness of the barrier substrate layer preferably has a gradient. More preferably, according to the above alternative a] of the 3^{rd} embodiment, in each sub-region of the third kind the thickness of the barrier substrate layer, preferably monotonically, more preferably strictly monotonically, increases in a direction from the sub-region of the first kind which directly adjoins the respective sub-region of the third kind to the sub-region of the second kind which directly adjoins the respective sub-region of the third kind. Likewise it is preferred that, according to the above alternative b] of the 3^{rd} embodiment, in each sub-region of the third kind the thickness of the barrier substrate layer, preferably monotonically, more preferably strictly monotonically, decreases in a direction from the sub-region of the first kind which directly adjoins the respective sub-region of the third kind to the sub-region of the second kind which directly adjoins the respective sub-region of the third kind. Preferably, the alternative a] of the 3^{rd} embodiment refers to the alternative a] of the 1^{st} embodiment or to the alternative a] of the 2^{nd} embodiment or to both, and the alternative b] of the 3^{rd} embodiment refers to the alternative b] of the 1^{st} embodiment or to the alternative b] of the 2^{nd} embodiment or to both.

In a preferred embodiment of the sheet-like composite, either:
a] in each sub-region of the first kind the local minimum is less than the local maximum in the sub-region of the second kind which at least partially surrounds the respective sub-region of the first kind by at least 30 %, more preferably at least 40 %, more preferably at least 50 %, more preferably at least 60 %, more preferably at least 70 %, even more preferably at least 80 %, most more preferably at least 90 %, in each case of the local maximum; or
b] in each sub-region of the first kind the local maximum is more than the local minimum in the sub-region of the second kind which at least partially surrounds the respective sub-region of the first kind by at least 30 %, more preferably at least 40 %, more preferably at least 50 %, more preferably at least 60 %, more preferably at least 70 %, even more preferably at least 80 %, most more preferably at least 90 %, in each case of the local minimum.

This preferred embodiment is a 4^{th} embodiment of the invention, that preferably depends on the 2^{nd} or 3^{rd} embodiment of the invention.

Preferably, the alternative a] of the 4^{th} embodiment corresponds to one, preferably all, of the alternatives a] of the 1^{st} to 3^{rd} embodiments, and the alternative b] of the 4^{th} embodiment corresponds to one, preferably all, of the alternatives b] of the 1^{st} to 3^{rd} embodiments.

In a preferred embodiment of the sheet-like composite, the barrier layer has a first side and a further side which is opposite the first side; wherein either:
a] each sub-region of the first kind is part of a depression on the first side of the barrier layer; or
b] each sub-region of the first kind is part of a bulge on the first side of the barrier layer.

This preferred embodiment is a 5^{th} embodiment of the invention, that preferably depends on any of the preceding embodiments of the invention.

If a sub-region of the first kind is part of a depression, the depression preferably consists of the respective sub-region of the first kind and the sub-region of the third kind which directly adjoins this sub-region of the first kind. If a sub-region of the first kind is part of a bulge, the bulge preferably consists of the respective sub-region of the first kind and the sub-region of the third kind which directly adjoins this sub-region of the first kind. Preferably, the alternative a] of the 5^{th} embodiment corresponds to one, preferably all, of the alternatives a] of the 1^{st} to 4^{th} embodiments, and the alternative b] of the 5^{th} embodiment corresponds to one, preferably all, of the alternatives b] of the 1^{st} to 4^{th} embodiments. Preferably, the depressions or bulges have not been formed by removing material from the barrier substrate layer, such as by cutting or milling, or the deposition of additional material but, instead, by reshaping the barrier substrate layer. Reshaping of the barrier substrate can preferably be pressing and more preferably embossing.

In a preferred embodiment of the sheet-like composite, at least 50 %, preferably at least 60 %, more preferably at least 70 %, more preferably at least 80 %, more preferably at least 90 %, more preferably at least 95 %, most preferably 100 %, of the depressions on the first side of the barrier layer which include a sub-region of the first kind have a depth in the range from 20 to 2000 µm, preferably from 200 to 1500 µm, more preferably from 600 to 1100 µm. This preferred embodiment is a 6^{th} embodiment of the invention, that preferably depends on the 5^{th} embodiment of the invention.

In a preferred embodiment of the sheet-like composite, at least 50 %, preferably at least 60 %, more preferably at least 70 %, more preferably at least 80 %, more preferably at least 90 %, more preferably at least 95 %, most preferably 100 %, of the bulges on the first side of the barrier layer which include a sub-region of the first kind have a height in the range from 20 to 2000 µm, preferably from 200 to 1500 µm, more preferably from 600 to 1100 µm. This preferred embodiment is a 7^{th} embodiment of the invention, that preferably depends on the 5^{th} embodiment of the invention.

In a preferred embodiment of the sheet-like composite, in the hole-covering region, the further side of the barrier layer is essentially flat. This preferred embodiment is an 8^{th} embodiment of the invention, that preferably depends on any of the 5^{th} to 7^{th} embodiments of the invention.

Here, the term *"essentially flat"* means that, in the hole-covering region, the further side of the barrier layer does at least not have any depression or any bulge on the scale of the depressions or bulges which include the sub-regions of the first kind on the first side of the barrier layer. This may be obtained by pressing at least the hole-covering region of the barrier layer between an embossing surface, which has an embossing structure that acts on the first side of the barrier layer, and a flat surface, which acts on the further side of the barrier layer.

**In** a preferred embodiment of the sheet-like composite, either:
a] each sub-region of the first kind is part of a bulge on the further side of the barrier layer; or
b] each sub-region of the first kind is part of a depression on the further side of the barrier layer.

This preferred embodiment is a 9^{th} embodiment of the invention, that preferably depends on the 5^{th} to 7^{th} embodiments of the invention.

Preferably, the alternative a] of the 9^{th} embodiment corresponds to one, preferably all, of the alternatives a] of the 1^{st} to 5^{th} embodiments, and the alternative b] of the 9^{th} embodiment corresponds to one, preferably all, of the alternatives b] of the 1^{st} to 5^{th} embodiments. Preferably, the alternative a] of the 9^{th} embodiment corresponds at least to the alternative a] of the 5^{th} embodiment, and the alternative b] of the 9^{th} embodiment corresponds to at least the alternative b] of the 5^{th} embodiment. Preferably, each sub-region of the first kind is part of a depression on the first side of the barrier layer and of a corresponding bulge on the further side of the barrier layer. This may be obtained by pressing at least the hole-covering region of the barrier layer between a first embossing surface, which has a male embossing structure that acts on the first side of the barrier layer, and a further embossing surface, which has a female embossing structure, corresponding to the male embossing structure, where the female embossing structure acts on the further side of the barrier layer. Alternatively preferred, each sub-region of the first kind is part of a bulge on the first side of the barrier layer and of a corresponding depression on the further side of the barrier layer. This may be obtained by pressing at least the hole-covering region of the barrier layer between a first embossing surface, which has a female embossing structure that acts on the first side of the barrier layer, and a further embossing surface, which has a male embossing structure, corresponding to the female embossing structure, where the male embossing structure acts on the further side of the barrier layer.

**In** a preferred embodiment of the sheet-like composite, for at least 50 %, preferably at least 60 %, more preferably at least 70 %, more preferably at least 80 %, more preferably at least 90 %, more preferably at least 95 %, most preferably 100 %, of the sub-regions of the third kind a maximum of the smaller cutting angles between any tangent on the respective sub-region of the third kind on the side of the barrier substrate layer which faces away from the barrier material layer and the plane of the barrier layer in a cross-section through the layer sequence and through the respective sub-regions of the third kind is in the range from 20 to 90°. This preferred embodiment is a 10^{th} embodiment of the invention, that preferably depends on any of the 3^{rd} to 9^{th} embodiments of the invention.

Preferably, the maximum of the smaller cutting angles is in the range from 30 to 90°, more preferably from 40 to 90°, more preferably from 50 to 90°, more preferably from 60 to 90°, more preferably from 70 to 90°, more preferably from 75 to 85°. Alternatively preferred, the maximum of the smaller cutting angles is in the range from 80 to 90°, more preferably from 85 to 90°. Any tangent and the barrier plane in a cross-section include four cutting angles. Of these, two smaller cutting angles are identical and two larger cutting angles are identical. The sum of one smaller cutting angle and one larger cutting angle is 180°. The maximum of the smaller cutting angles is the smaller cutting angle which is closest to 90° depending on the position of the tangent on the depression or bulge in the cross-section. This maximum of the smaller cutting angles characterises the maximum slope of the two-dimensional function in the respective sub-region of the third kind. The higher the maximum of the smaller cutting angles the steeper the maximum slope of the two-dimensional function in the respective sub-region of the third kind.

In a preferred embodiment of the sheet-like composite, in each sub-region of the first kind the barrier substrate layer has a first density; wherein in the sub-region which at least partially surrounds and directly adjoins the respective sub-region of the first kind the barrier substrate layer has a further density; wherein each first density does not differ from the respective further density by more than 20 %, preferably more than 10 %, more preferably more than 5 %, even more preferably more than 3 %, of the respective further density. This preferred embodiment is an 11^{th} embodiment of the invention, that preferably depends on any of the preceding embodiments of the invention.

In a preferred embodiment of the sheet-like composite, the barrier substrate layer is on the side of the barrier material layer which faces the first side of the barrier layer. This preferred embodiment is a 12^{th} embodiment of the invention, that preferably depends on any of the 5^{th} to 11^{th} embodiments of the invention.

Preferably, the first side of the barrier layer is formed by the barrier substrate layer. Additionally or alternatively preferred, the further side of the barrier layer is formed by the barrier material layer.

In a preferred embodiment of the sheet-like composite, the barrier material layer is on the side of the barrier substrate layer which faces the further side of the barrier layer. This preferred embodiment is a 13^{th} embodiment of the invention, that preferably depends on any of the 5^{th} to 12^{th} embodiments of the invention.

In a preferred embodiment of the sheet-like composite, in plan view a share of the sum the surface areas of all sub-regions of the first kind of a total surface area of the hole-covering region of the barrier layer is in the range from 10 to 25 %, preferably from 12 to 22 %, more preferably from 14 to 20 %. This preferred embodiment is a 14^{th} embodiment of the invention, that preferably depends on any of the preceding embodiments of the invention.

In a preferred embodiment of the sheet-like composite, the plurality of sub-regions of the first kind consists of a number of sub-regions of the first kind which is at least 2, preferably at least 3, more preferably at least 5, more preferably at least 10, more preferably at least 20, more preferably at least 30, more preferably at least 40, more preferably at least 50, more preferably at least 60, more preferably at least 70, more preferably at least 80, even more preferably at least 90, most preferably at least 100. This preferred embodiment is a 15^{th} embodiment of the invention, that preferably depends on any of the preceding embodiments of the invention.

In a preferred embodiment of the sheet-like composite, at least one sub-region of the first kind of the plurality of sub-regions of the first kind has a distance from an edge of the through-hole in the carrier layer which is at least 10 %, preferably at least 20 %, more preferably at least 30 %, more preferably at least 40 %, most preferably at least 45 %, of a minimum diameter of the through-hole. This preferred embodiment is a 16^{th} embodiment of the invention, that preferably depends on any of the preceding embodiments of the invention.

Preferably, at least 10 %, preferably at least 20 %, more preferably at least 30 %, more preferably at least 40 %, more preferably at least 50 %, more preferably at least 60 %, more preferably at least 70 %, more preferably at least 80 %, more preferably at least 90 %, most preferably 100 %, of the sub-regions of the first kind of the plurality of sub-regions of the first kind have a distance from an edge of the through-hole in the carrier layer which is at least 10 %, preferably at least 20 %, more preferably at least 30 %, more preferably at least 40 %, most preferably at least 45 %, of a minimum diameter of the through-hole.

In a preferred embodiment of the sheet-like composite, a minimum distance between any two sub-regions of the first kind is in the range from 0.5 to 5 mm, preferably from 0.5 to 4 mm, more preferably from 0.5 to 3 mm, more preferably from 0.5 to 2.5 mm, more preferably from 0.5 to 2 mm, more preferably from 0.5 to 1.8 mm, more preferably from 0.5 to 1.6 mm, more preferably from 0.6 to 1.4 mm, more preferably from 0.7 to 1.3 mm, more preferably from 0.8 to 1.2 mm, most preferably from 0.9 to 1.1 mm. This preferred embodiment is a 17^{th} embodiment of the invention, that preferably depends on any of the preceding embodiments of the invention.

In a preferred embodiment of the sheet-like composite, in plan view the sub-regions of the first kind of the plurality of sub-regions of the first kind are distributed in a regular arrangement. This preferred embodiment is an 18^{th} embodiment of the invention, that preferably depends on any of the preceding embodiments of the invention.

In a preferred embodiment of the sheet-like composite, in plan view a surface area of each sub-region of the first kind is in the range from 0.5 to 5 mm², preferably from 0.5 to 4.5 mm², more preferably from 0.5 to 4 mm², more preferably from 0.5 to 3.5 mm², more preferably from 0.5 to 3 mm², more preferably from 0.5 to 2.5 mm², more preferably from 0.5 to 2 mm², more preferably from 0.5 to 1.8 mm², more preferably from 0.5 to 1.6 mm², more preferably from 0.5 to 1.4 mm², more preferably from 0.5 to 1.2 mm², more preferably from 0.5 to 1.0 mm², more preferably from 0.5 to 0.8 mm², more preferably from 0.6 to 0.7 mm². This preferred embodiment is a 19^{th} embodiment of the invention, that preferably depends on any of the preceding embodiments of the invention.

Alternatively preferred, in plan view a surface area of each sub-region of the first kind is in the range from 0.6 to 1.8 mm², more preferably from 0.7 to 1.7 mm², more preferably from 0.8 to 1.6 mm³, more preferably from 0.9 to 1.5 mm², more preferably from 1.0 to 1.4 mm², more preferably from 1.1 to 1.3 mm².

In a preferred embodiment of the sheet-like composite, in plan view the through-hole extends a first length in a first direction and a further length in a further direction; wherein:
- the first length is in the range from 1 to 40 mm, preferably from 2 to 35 mm, more preferably from 3 to 30 mm; or
- the further length is in the range from 1 to 40 mm, preferably from 2 to 35 mm, more preferably from 3 to 30 mm; or
- both.

This preferred embodiment is a 20^{th} embodiment of the invention, that preferably depends on any of the preceding embodiments of the invention.

Preferably, the first length is in a range from 2 to 20 mm, more preferably from 3 to 15 mm, more preferably from 3 to 10 mm, even more preferably from 3 to 8 mm. Additionally or alternatively preferred, the further length is in a range from 2 to 20 mm, preferably from 3 to 15 mm, more preferably from 3 to 10 mm, even more preferably from 3 to 8 mm. The first length and the further length may have the same value, but do not have to.

In a preferred embodiment of the sheet-like composite, in plan view each sub-region of the first kind has a polygonal shape or a round shape. This preferred embodiment is a 21^{st} embodiment of the invention, that preferably depends on any of the preceding embodiments of the invention.

Generally, each closed geometric shape is possible for the sub-regions of the first kind in plan view.

In a preferred embodiment of the sheet-like composite, the barrier substrate layer comprises a polymer, preferably in a proportion of at least 50 wt.-%, preferably at least 60 wt.-%, more preferably at least 70 wt.-%, more preferably at least 80 wt.-%, even more preferably at least 90 wt.-%, most preferably 100 wt.-%, based in each case on the weight of the barrier substrate layer. This preferred embodiment is a 22^{nd} embodiment of the invention, that preferably depends on any of the preceding embodiments of the invention.

In a preferred embodiment of the sheet-like composite, the polymer of the barrier substrate layer is selected from the group consisting of a polycondensate, a polyolefin, and a polyvinyl alcohol, or a combination of at least two thereof. This preferred embodiment is a 23^{rd} embodiment of the invention, that preferably depends on the 22^{nd} embodiment of the invention.

A preferred polyolefin is a polyethylene (PE) or a polypropylene (PP) or both. A preferred polycondensate is a polyester or a polyamide (PA) or both. A preferred polyester is a polyethylene terephthalate (PET), or a polylactide (PLA), or both. A preferred polyvinyl alcohol is a vinyl alcohol copolymer. A preferred vinyl alcohol copolymer is an ethylene-vinyl alcohol copolymer. A particularly preferred polymer of the barrier substrate layer is PE or PP, where PP is very particularly preferred.

In a preferred embodiment of the sheet-like composite, the polymer of the barrier substrate layer is oriented. This preferred embodiment is a 24^{th} embodiment of the invention, that preferably depends on the 22^{nd} or 23^{rd} embodiment of the invention.

A preferred oriented polymer is monoaxially oriented or biaxially oriented. A preferred oriented polyethylene is monoaxially oriented polyethylene (MoPE) or biaxially oriented polyethylene (BoPE). A preferred oriented polypropylene is monoaxially oriented polypropylene (MoPP) or biaxially oriented polypropylene (BoPP). A particularly preferred polymer of the barrier substrate layer is MoPE or BoPP.

In a preferred embodiment of the sheet-like composite, a melting temperature of the barrier substrate layer is in the range from 100 to 300 °C, preferably from 110 to 290 °C, more preferably from 120 to 280 °C, more preferably from 130 to 270 °C, more preferably from 140 to 260 °C, more preferably from 130 to 250 °C, more preferably from 130 to 240°C, more preferably from 130 to 230 °C, more preferably from 130 to 220 °C, more preferably from 130 to 210 °C, more preferably from 130 to 200 °C, more preferably from 130 to 190 °C, more preferably from 130 to 180°C, more preferably from 140 to 175 °C, even more preferably from 145 to 170 °C, most preferably from 150 to 165 °C. This preferred embodiment is a 25^{th} embodiment of the invention, that preferably depends on any of the preceding embodiments of the invention.

In a preferred embodiment of the sheet-like composite, the barrier material layer comprises, preferably consists of, at least one metal or at least one oxide. This preferred embodiment is a 26^{th} embodiment of the invention, that preferably depends on any of the preceding embodiments of the invention.

A preferred metal is aluminium. A particularly preferred barrier material layer comprises, preferably consists of, aluminium, AlOx or SiOx.

In a preferred embodiment of the sheet-like composite, the at least one oxide is an oxide of one selected from the group consisting of one or more metals, one or more semimetals and one or more nonmetals, or a combination of at least two of these. This preferred embodiment is a 27^{th} embodiment of the invention, that preferably depends on the 26^{th} embodiment of the invention.

In a preferred embodiment of the sheet-like composite, the barrier material layer has an average thickness in a range from 1 nm to 1 µm, preferably from 1 to 500 nm, more preferably from 1 to 300 nm, more preferably from 1 to 100 nm, more preferably from 1 to 90 nm, more preferably from 1 to 80 nm, more preferably from 1 to 70 nm, more preferably from 1 to 60 nm, more preferably from 1 to 50 nm, more preferably from 1 to 40 nm, more preferably from 1 to 30 nm, even more preferably from 1 to 20 nm, most preferably from 5 to 20 nm. This preferred embodiment is a 28^{th} embodiment of the invention, that preferably depends on any of the preceding embodiments of the invention.

In a preferred embodiment of the sheet-like composite, the barrier layer has an average thickness in a range from 5 to 50 µm, preferably from 10 to 50 µm, more preferably from 11 to 40 µm, more preferably from 12 to 30 µm, even more preferably from 15 to 20 µm, most preferably from 15 to 17 µm. This preferred embodiment is a 29^{th} embodiment of the invention, that preferably depends on any of the preceding embodiments of the invention.

In a preferred embodiment of the sheet-like composite, the barrier material layer is superimposed to the barrier substrate layer:
- on a side of the barrier substrate layer which faces the outer surface of the sheet-like composite; or
- on a side of the barrier substrate layer which faces the inner surface of the sheet-like composite.

This preferred embodiment is a 30^{th} embodiment of the invention, that preferably depends on any of the preceding embodiments of the invention.

In a preferred embodiment of the sheet-like composite, the inner polymer layer H comprises, preferably consists of, a LDPE, or a mPE, or a blend of both. This preferred embodiment is a 31^{st} embodiment of the invention, that preferably depends on any of the preceding embodiments of the invention.

A particularly preferred inner polymer layer H comprises, preferably consists of, a blend of a LDPE and a mPE.

In a preferred embodiment of the sheet-like composite, the inner polymer layer H comprises:
- the LDPE in a proportion of at least 10 wt.-%, preferably of at least 15 wt.-%, more preferably of at least 20 wt.-%, more preferably of at least 30 wt.-%, more preferably of at least 40 wt.-%, more preferably of at least 50 wt.-%, even more preferably of at least 60 wt.-%, most preferably of at least 65 wt.-%; or
- the mPE in a proportion of at least 10 wt.-%, preferably of at least 20 wt.-%, more preferably of at least 25 wt.-%, more preferably of at least 30 wt.-%, more preferably of at least 40 wt.-%, more preferably of at least 50 wt.-%, more preferably of at least 60 wt.-%, even more preferably of at least 70 wt.-%, most preferably of at least 75 wt.-%; or
- both;
wherein the proportions in wt.-% are in each case based on the total weight of the inner polymer layer H. This preferred embodiment is a 32^{nd} embodiment of the invention, that preferably depends on the 31^{st} embodiment of the invention.

In a preferred embodiment of the sheet-like composite, the layer sequence further comprises an inner polymer layer F which is disposed between the barrier layer and the inner polymer layer H. This preferred embodiment is a 33^{rd} embodiment of the invention, that preferably depends on any of the preceding embodiments of the invention.

In a preferred embodiment of the sheet-like composite, the inner polymer layer F comprises, preferably consists of, a one selected from the group, consisting of LDPE, mPE, and HDPE or a combination of at least two thereof. This preferred embodiment is a 34^{th} embodiment of the invention, that preferably depends on the 33^{rd} embodiment of the invention.

A particularly preferred inner polymer layer F comprises, preferably consists of, a blend of a LDPE and a mPE. Another particularly preferred inner polymer layer F comprises, preferably consists of, HDPE. A preferred inner polymer layer F comprises HDPE in a proportion in a range from 50 to 100 wt.-%, preferably from 60 to 100 wt.-%, more preferably from 70 to 100 wt.-%, more preferably from 80 to 100 wt.-%, more preferably from 90 to 100 wt.-%, based in each case based on the total weight of the inner polymer layer F.

In a preferred embodiment of the sheet-like composite, the inner polymer layer F comprises:
- the LDPE in a proportion from 0 to 60 wt.-%, preferably from 5 to 50 wt.-%, more preferably from 10 to 40 wt.-%, most preferably from 10 to 30 wt.-%; or
- the mPE in a proportion from 40 to 100 wt.-%, preferably from 50 to 95 wt.-%, more preferably from 60 to 90 wt.-%, most preferably from 70 to 90 wt.-%; or
- both;
wherein the proportions in wt.-% are in each case based on the total weight of the inner polymer layer F. This preferred embodiment is a 35^{th} embodiment of the invention, that preferably depends on the 34^{th} embodiment of the invention.

In a preferred embodiment of the sheet-like composite, the inner polymer layer F comprises no polymer with functional groups in a proportion of more than 10 wt.-%, preferably of more than 5 wt.-%, more preferably of more than 3 wt.-%, more preferably of more than 2 wt.-%, even more preferably of more than 1 wt.-%, in each case based on the weight of the inner polymer layer F. This preferred embodiment is a 36^{th} embodiment of the invention, that preferably depends on any of the 33^{rd} to 35^{th} embodiments of the invention.

Most preferably, the inner polymer layer F is essentially free from any polymer with functional groups. In this context, preferred functional groups are of the general formula OR or COOR, wherein in each case R is independently selected from the group consisting of H, C₁- to C₂₂-alkyl, and an aromatic moity, or a combination of two or more thereof. In a further preferred embodiment, the inner polymer layer F comprises no adhesion promoter polymer in a proportion of more than 10 wt.-%, preferably of more than 5 wt.-%, more preferably of more than 3 wt.-%, more preferably of more than 2 wt.-%, even more preferably of more than 1 wt.-%, in each case based on the weight of the inner polymer layer F. Most preferably, the inner polymer layer F is essentially free from any adhesion promoter polymer.

In a preferred embodiment of the sheet-like composite, the layer sequence further comprises an inner polymer layer G which is disposed between the barrier layer and the inner polymer layer H. This preferred embodiment is a 37^{th} embodiment of the invention, that preferably depends on any of the preceding embodiments of the invention.

In a preferred embodiment of the sheet-like composite, the inner polymer layer G comprises, preferably consists of, a LDPE, a HDPE, or a blend of both. This preferred embodiment is a 38^{th} embodiment of the invention, that preferably depends on the 37^{th} embodiment of the invention.

In a preferred embodiment of the sheet-like composite, the inner polymer layer G comprises:
- the HDPE in a proportion from 5 to 80 wt.-%, preferably from 10 to 70 wt.-%, more preferably from 20 to 60 wt.-%, most preferably from 30 to 50 wt.-%; or
- the LDPE in a proportion from 20 to 95 wt.-%, preferably from 30 to 90 wt.-%, more preferably from 40 to 80 wt.-%, most preferably from 50 to 70 wt.-%; or
- both;
wherein the proportions in wt.-% are in each case based on the total weight of the inner polymer layer G.

In a preferred embodiment of the sheet-like composite, the inner polymer layer G comprises the LDPE in a proportion from 20 to 100 wt.-%, preferably from 30 to 100 wt.-%, more preferably from 40 to 100 wt.-%, more preferably from 50 to 100 wt.-%, more preferably from 60 to 100 wt.-%, more preferably from 70 to 100 wt.-%, more preferably from 80 to 100 wt.-%, even more preferably from 90 to 100 wt.-%, most preferably from 95 to 100 wt.-%, in each case based on the total weight of the inner polymer layer G. This preferred embodiment is a 39^{th} embodiment of the invention, that preferably depends on the 38^{th} embodiment of the invention.

In a preferred embodiment of the sheet-like composite, the layer sequence further comprises an intermediate polymer layer D which is disposed between the carrier layer and the barrier layer. This preferred embodiment is a 40^{th} embodiment of the invention, that preferably depends on any of the preceding embodiments of the invention.

In a preferred embodiment of the sheet-like composite, the intermediate polymer layer D comprises an adhesion-promoter polymer in a proportion of at least 50 wt.-%, preferably of at least 60 wt.-%, more preferably of at least 70 wt.-%, even more preferably of at least 80 wt.-%, most preferably of at least 90 wt.-%, based in each case on the weight of the intermediate polymer layer D. This preferred embodiment is a 41^{st} embodiment of the invention, that preferably depends on the 40^{th} embodiment of the invention.

In a preferred embodiment of the sheet-like composite, the layer sequence further comprises an intermediate polymer layer C which is disposed between the carrier layer and the barrier layer. This preferred embodiment is a 42^{nd} embodiment of the invention, that preferably depends on any of the preceding embodiments of the invention.

In a preferred embodiment of the sheet-like composite, the intermediate polymer layer C comprises, preferably consists of, a HDPE, or a LDPE, or a blend of both. This preferred embodiment is a 43^{rd} embodiment of the invention, that preferably depends on the 42^{nd} embodiment of the invention.

In a preferred embodiment of the sheet-like composite, the intermediate polymer layer C comprises:
- the HDPE in a proportion from 0 to 80 wt.-%, preferably from 10 to 70 wt.-%, more preferably from 20 to 60 wt.-%, most preferably from 30 to 50 wt.-%; or
- the LDPE in a proportion from 20 to 100 wt.-%, preferably from 30 to 90 wt.-%, more preferably from 40 to 80 wt.-%, most preferably from 50 to 70 wt.-%; or
- both
wherein the proportions in wt.-% are in each case based on the total weight of the inner polymer layer C. This preferred embodiment is a 44^{th} embodiment of the invention, that preferably depends on the 43^{rd} embodiment of the invention.

A particularly preferred intermediate polymer layer C comprises the HDPE in a proportion from 30 to 50 wt.-% and the LDPE in a proportion from 50 to 70 wt.-%, in each case based on the total weight of the inner polymer layer C.

In a preferred embodiment of the sheet-like composite, the layer sequence further comprises an outer polymer layer A which is superimposed to the carrier layer on a side of the carrier layer which faces the outer surface of the sheet-like composite. This preferred embodiment is a 45^{th} embodiment of the invention, that preferably depends on any of the preceding embodiments of the invention.

In a preferred embodiment of the sheet-like composite, the outer polymer layer A comprises a polyolefin, preferably a polyethylene, more preferably a LDPE, in a proportion of at least 50 wt.-%, preferably of at least 60 wt.-%, more preferably of at least 70 wt.-%, even more preferably of at least 80 wt.-%, most preferably of at least 90 wt.-%, based in each case on the weight of the outer polymer layer A. This preferred embodiment is a 46^{th} embodiment of the invention, that preferably depends on the 45^{th} embodiment of the invention.

In a preferred embodiment of the sheet-like composite, the through-hole is completely covered by one selected from the group consisting of the outer polymer layer A, the intermediate polymer layer C, the intermediate polymer layer D, the barrier layer, the inner polymer layer F, the inner polymer layer G, and the inner polymer layer H, or by a combination of two or more, preferably all, thereof as a hole-covering layer or as hole-covering layers. This preferred embodiment is a 47^{th} embodiment of the invention, that preferably depends on any of the preceding embodiments of the invention.

In a preferred embodiment of the sheet-like composite, the hole-covering layers are joined to one another in the through-hole, preferably to an extent of at least 30 %, more preferably at least 70 % and most preferably at least 90 %, in each case of the area formed by the through-hole. This preferred embodiment is a 48^{th} embodiment of the invention, that preferably depends on the 47^{th} embodiment of the invention.

In a preferred embodiment of the sheet-like composite, the sheet-like composite further comprises a colour application which is superimposed to the carrier layer on a side of the carrier layer which faces away from the barrier layer. This preferred embodiment is a 49^{th} embodiment of the invention, that preferably depends on any of the preceding embodiments of the invention.

In a preferred embodiment of the sheet-like composite, the carrier layer comprises, preferably consists of, one selected from the group consisting of cardboard, paperboard and paper, or a combination of at least two of these. This preferred embodiment is a 50^{th} embodiment of the invention, that preferably depends on any of the preceding embodiments of the invention.

In a preferred embodiment of the sheet-like composite, the carrier layer includes a crease line. This preferred embodiment is a 51^{st} embodiment of the invention, that preferably depends on any of the preceding embodiments of the invention.

Preferably, along the crease line the carrier layer has a linear depression, preferably on the side of the carrier layer which faces the outer surface or on the side of the carrier layer which faces the inner surface. Preferably, the crease line is a straight crease line. Additionally or alternatively preferred, the crease line has a length of at least 1 cm, preferably of at least 2 cm, more preferably of at least 10 cm. A particularly preferred crease line extends essentially from a first cut edge of the sheet-like composite to a further cut edge, preferably opposite the first cut edge, of the sheet-like composite. Preferred first and further cut edges of the sheet-like composite are transversal cut edges of a blank. A crease line for folding the sheet-like composite to obtain a longitudinal fold edge of a container is referred to as longitudinal crease line. In the case of a blank, the longitudinal crease lines often extend from a first transversal cut edge of the blank to a further transversal cut edge of the blank opposite the first transversal cut edge.

In a preferred embodiment of the sheet-like composite, the sheet-like composite is a blank for producing a single container or a web for producing a plurality of containers. This preferred embodiment is a 52^{nd} embodiment of the invention, that preferably depends on any of the preceding embodiments of the invention.

In a preferred embodiment of the sheet-like composite, at least in each sub-region of the first kind, preferably in the hole-covering region, the barrier substrate layer does not have any through-hole. This preferred embodiment is a 53^{rd} embodiment of the invention, that preferably depends on any of the preceding embodiments of the invention.

Referring to at least each sub-region of the first kind, preferably to the entire hole-covering region of the barrier layer, this embodiment does not only exclude a through-hole in the barrier substrate layer of the scale of the through-hole in the carrier layer, but also smaller through-holes, such as a perforation or a pinhole.

A 54^{th} embodiment of the invention is a method for producing a sheet-like composite, the method comprising as method steps:
a) providing a carrier layer;
b) creating a through-hole in the carrier layer;
c) superimposing, preferably laminating, a barrier layer to a side of the carrier layer which, in the sheet-like composite, faces an inner surface of the sheet-like composite, thereby completely covering the through-hole in the carrier layer with a hole-covering region of the barrier layer; and
d) superimposing, preferably extrusion coating, a polymer composition H to the barrier layer on a side of the barrier layer which faces away from the carrier layer, thereby obtaining an inner polymer layer H from the polymer composition H;

wherein the barrier layer comprises a sublayer sequence which comprises:
   - a barrier material layer, and
   - a barrier substrate layer
as sublayers which are superimposed to one another; wherein the method additionally includes a treatment step which comprises pressing at least the hole-covering region of the barrier layer between a first tool surface of a first tool and a further tool surface of a further tool; wherein the first tool surface comprises a plurality of areas of a first kind and at least one area of a second kind; wherein either:
   A) each area of the first kind is elevated with respect to an area of the second kind which at least partially, preferably fully, surrounds the respective area of the first kind, or
   B) each area of the first kind is lowered with respect to an area of the second kind which at least partially, preferably fully, surrounds the respective area of the first kind.

Preferably, the method is a method for producing the sheet-like composite of the invention according to any of its embodiments. Preferably the method is a method of producing a sheet-like composite, preferably the sheet-like composite of the invention according to any of its embodiments. Preferably, one selected from the group consisting of the carrier layer, the barrier material layer, the barrier substrate layer, the barrier layer, and the inner polymer layer H, or a combination of at least two thereof is designed or arranged or both according to one of the embodiments of the sheet-like composite of the invention. Preferably, the method step d) includes melt extruding the polymer composition H. The superimposing in method step c) is accomplished preferably in the form of laminating. Preferably, the carrier layer is provided in method step a) in rolled-up form forming a roll.

Each area of the first and second kinds is a contiguous area of the first tool surface. Preferably, the same single area of the second kind at least partially, preferably fully, surrounds each of the areas of the first kind of the plurality of areas of the first kind. Preferably, the through-hole is created mechanically, more preferably by punching, or by a laser. Preferably, either:
A) each area of the first kind is elevated at a constant height with respect to an area of the second kind which at least partially, preferably fully, surrounds the respective area of the first kind, or
B) each area of the first kind is lowered at a constant depth with respect to an area of the second kind which at least partially, preferably fully, surrounds the respective area of the first kind.

Preferably, the preceding alternative A) refers to the alternative A) of the 54^{th} embodiment, and the preceding alternative B) refers to the alternative B) of the 54^{th} embodiment.

In a preferred embodiment of the method, in the treatment step the further tool surface vibrates:
- at a frequency in the range from 10 to 100 kHz, more preferably from 10 to 90 kHz, more preferably from 10 to 80 kHz, more preferably from 10 to 70 kHz, more preferably from 10 to 60 kHz, more preferably from 10 to 50 kHz, more preferably from 10 to 40 kHz, more preferably from 20 to 40 kHz, even more preferably from 25 to 35 kHz, most preferably of about 30 kHz; or
- with an amplitude in the range from 3 to 100 µm, more preferably from 3 to 90 µm, more preferably from 3 to 80 µm, more preferably from 3 to 70 µm, more preferably from 3 to 60 µm, more preferably from 3 to 50 µm, more preferably from 3 to 40 µm, more preferably from 3 to 30 µm, even more preferably from 5 to 30 µm most preferably from 10 to 20 µm; or
- both.

This preferred embodiment is a 55^{th} embodiment of the invention, that preferably depends on the 54^{th} embodiment of the invention.

In a preferred embodiment of the method, the first tool or the further tool or each of both is a lifting tool or a roller. This preferred embodiment is a 56^{th} embodiment of the invention, that preferably depends on the 54^{th} or 55^{th} embodiment of the invention.

In a preferred embodiment of the method, the first tool is a first roller and the further tool is a further roller; wherein in the treatment step the first roller rotates in a first direction and the further roller rotates in a further direction which is opposite to the first direction. This preferred embodiment is a 57^{th} embodiment of the invention, that preferably depends on any of the 54^{th} to 56^{th} embodiments of the invention.

In a preferred embodiment of the method, the further tool is a sonotrode and the first tool is a counter-tool to the sonotrode. This preferred embodiment is a 58^{th} embodiment of the invention, that preferably depends on any of the 54^{th} to 57^{th} embodiments of the invention.

The counter-tool to the sonotrode is also referred to as an anvil. A particularly preferred counter-tool is an embossing tool, preferably an embossing roller. A preferred sonotrode is a rotary sonotrode.

In a preferred embodiment of the method, in the treatment step the barrier layer moves at a speed of more than 0 m/min, preferably at a speed of at least 10 m/min, more preferably of at least 50 m/min, more preferably at a speed in the range from 50 to 900 m/min, more preferably from 100 to 900 m/min, more preferably from 200 to 900 m/min, more preferably from 300 to 900 m/min, more preferably from 400 to 900 m/min, preferably from 500 to 750 m/min, more preferably from 600 to 700 m/min. This preferred embodiment is a 59^{th} embodiment of the invention, that preferably depends on any of the 54^{th} to 58^{th} embodiments of the invention.

In a preferred embodiment of the method, in the treatment step the barrier substrate layer is on a side of the barrier material layer which faces the first tool surface. This preferred embodiment is a 60^{th} embodiment of the invention, that preferably depends on any of the 54^{th} to 59^{th} embodiments of the invention.

The above-described measure may ensure that the areas of the first kind of the first tool surface have an embossing effect primarily on the barrier substrate layer and not primarily, preferably not at all, on the barrier material layer.

In a preferred embodiment of the method, the treatment step is conducted before the method step c). This preferred embodiment is a 61^{st} embodiment of the invention, that preferably depends on any of the 54^{th} to 60^{th} embodiments of the invention.

In a preferred embodiment of the method, in the treatment step a single ply of the barrier layer is pressed between the first tool surface and the further tool surface. This preferred embodiment is a 62^{nd} embodiment of the invention, that preferably depends on the 61^{st} embodiment of the invention.

In a preferred embodiment of the method, the treatment step is conducted after the method step c). This preferred embodiment is a 63^{rd} embodiment of the invention, that preferably depends on any of the 54^{th} to 60^{th} embodiments of the invention.

In a preferred embodiment of the method, in the treatment step a single ply of the sheet-like composite is pressed between the first tool surface and the further tool surface. This preferred embodiment is a 64^{th} embodiment of the invention, that preferably depends on the 63^{rd} embodiment of the invention.

In a preferred embodiment of the method, in the treatment step at least the hole-covering region of the barrier layer is pressed between the first tool surface and the further tool surface with a contact force in the range from 50 N to 1kN, preferably from 80 to 600 N, more preferably from 100 to 550 N, more preferably from 120 to 500 N, more preferably from 150 to 450 N, more preferably from 160 to 440 N, more preferably from 170 to 430 N, more preferably from 180 to 420 N, even more preferably from 190 to 410 N, most preferably from 200 to 400 N. This preferred embodiment is a 65^{th} embodiment of the invention, that preferably depends on any of the 54^{th} to 64^{th} embodiments of the invention.

In a preferred embodiment of the method, the treatment step further comprises heating the barrier substrate layer at least in the hole-covering region of the barrier layer. This preferred embodiment is a 66^{th} embodiment of the invention, that preferably depends on any of the 54^{th} to 65^{th} embodiments of the invention.

Preferably, in the treatment step the barrier substrate layer is heated at least in the hole-covering region of the barrier layer while at least the hole-covering region is pressed between the first tool surface and the further tool surface. Additionally or alternatively preferred, in the treatment step a surface area of the barrier substrate layer which amounts to at least 80 %, preferably at least 90 %, more preferably at least 95 %, of a surface area of the hole-covering region of the barrier layer is heated. Additionally or alternatively preferred, in the treatment step a temperature of the barrier substrate layer in the hole-covering region is increased by at least 50 K, preferably at least 60 K, more preferably at least 70 K, more preferably at least 80 K, more preferably at least 90 K, more preferably at least 100 K. Additionally or alternatively preferred, in the treatment step a temperature of the barrier substrate layer in the hole-covering region is increased above a Vicat softening temperature of the barrier substrate layer.

In a preferred embodiment of the method, the heating of the barrier substrate layer at least in the hole-covering region of the barrier layer is effected by an ultrasound treatment. This preferred embodiment is a 67^{th} embodiment of the invention, that preferably depends on the 66^{th} embodiment of the invention.

In a preferred embodiment of the method, either:
A) each area of the first kind is elevated with respect to an area of the second kind which at least partially, preferably fully, surrounds the respective area of the first kind by a height in the range from 20 to 2000 µm, preferably from 200 to 1500 µm, more preferably from 600 to 1100 µm; or
B) each area of the first kind is lowered with respect to an area of the second kind which at least partially, preferably fully, surrounds the respective area of the first kind by a depth in the range from 20 to 2000 µm, preferably from 200 to 1500 µm, more preferably from 600 to 1100 µm.

This preferred embodiment is a 68^{th} embodiment of the invention, that preferably depends on any of the 54^{th} to 67^{th} embodiments of the invention.

Preferably, the alternative A) of the 68^{th} embodiment refers to the alternative A) of the 54^{th} embodiment, and the alternative B) of the 68^{th} embodiment refers to the alternative B) of the 54^{th} embodiment.

In a preferred embodiment of the method, in plan view a share of the sum the surface areas of all areas of the first kind of a total surface area of the first tool surface is in the range from 10 to 25 %, preferably from 12 to 22 %, more preferably from 14 to 20 %. This preferred embodiment is a 69^{th} embodiment of the invention, that preferably depends on any of the 54^{th} to 68^{th} embodiments of the invention.

In a preferred embodiment of the method, a minimum distance between any two areas of the first kind is in the range from 0.5 to 5 mm, preferably from 0.5 to 4 mm, more preferably from 0.5 to 3 mm, more preferably from 0.5 to 2.5 mm, more preferably from 0.5 to 2 mm, more preferably from 0.5 to 1.8 mm, more preferably from 0.5 to 1.6 mm, more preferably from 0.6 to 1.4 mm, more preferably from 0.7 to 1.3 mm, more preferably from 0.8 to 1.2 mm, most preferably from 0.9 to 1.1 mm. This preferred embodiment is a 70^{th} embodiment of the invention, that preferably depends on any of the 54^{th} to 69^{th} embodiments of the invention.

In a preferred embodiment of the method, in plan view the areas of the first kind of the plurality of areas of the first kind are distributed in a regular arrangement on the first tool surface. This preferred embodiment is a 71^{st} embodiment of the invention, that preferably depends on any of the 54^{th} to 70^{th} embodiments of the invention.

In a preferred embodiment of the method, in plan view a surface area of each area of the first kind is in the range from 0.5 to 5 mm², preferably from 0.5 to 4.5 mm², more preferably from 0.5 to 4 mm², more preferably from 0.5 to 3.5 mm², more preferably from 0.5 to 3 mm², more preferably from 0.5 to 2.5 mm², more preferably from 0.5 to 2 mm², more preferably from 0.5 to 1.8 mm², more preferably from 0.5 to 1.6 mm², more preferably from 0.5 to 1.4 mm², more preferably from 0.5 to 1.2 mm², more preferably from 0.5 to 1.0 mm², more preferably from 0.5 to 0.8 mm², more preferably from 0.6 to 0.7 mm². This preferred embodiment is a 72^{nd} embodiment of the invention, that preferably depends on any of the 54^{th} to 71^{st} embodiments of the invention.

Alternatively preferred, in plan view a surface area of each area of the first kind is in the range from 0.6 to 1.8 mm², more preferably from 0.7 to 1.7 mm², more preferably from 0.8 to 1.6 mm³, more preferably from 0.9 to 1.5 mm², more preferably from 1.0 to 1.4 mm², more preferably from 1.1 to 1.3 mm².

In a preferred embodiment of the method, in plan view each area of the first kind has a polygonal shape or a round shape. This preferred embodiment is a 73^{rd} embodiment of the invention, that preferably depends on any of the 54^{th} to 72^{nd} embodiments of the invention.

Generally, each closed geometric shape is possible for the areas of the first kind in plan view.

In a preferred embodiment of the method, the barrier layer has:
- an oxygen transmission rate in a range from 0.02 to 100 cm³ oxygen / (m² · day · atm) , preferably from 0.03 to 90 cm³ oxygen / (m² · day · atm), preferably from 0.04 to 80 cm³ oxygen / (m² · day · atm), preferably from 0.05 to 70 cm³ oxygen / (m² · day · atm), preferably from 0.06 to 60 cm³ oxygen / (m² · day · atm), preferably from 0.07 to 55 cm³ oxygen / (m² · day · atm) , preferably from 0.08 to 50 cm³ oxygen / (m² · day · atm), preferably from 0.09 to 40 cm³ oxygen / (m² · day · atm), preferably from 0.1 to 30 cm³ oxygen / (m² · day · atm), preferably from 0.12 to 20 cm³ oxygen / (m² · day · atm), more preferably from 0.14 to 15 cm³ oxygen / (m² · day · atm), more preferably from 0.16 to 10 cm³ oxygen / (m² · day · atm), more preferably from 0.18 to 5 cm³ oxygen / (m² · day · atm), more preferably from 0.2 to 3 cm³ oxygen / (m² · day · atm), more preferably from 0.22 to 2 cm³ oxygen / (m² · day · atm), more preferably from 0.25 to 1 cm³ oxygen / (m² · day · atm), more preferably from 0.3 to 0.9 cm³ oxygen / (m² · day · atm), even more preferably from 0.35 to 0.9 cm³ oxygen / (m² · day · atm), most preferably from 0.4 to 0.8 cm³ oxygen / (m² · day · atm); or
- a water vapour transmission rate in a range from 0.01 to 40 g H₂O / (m² · day), preferably from 0.01 to 20 g H₂O / (m² · day), more preferably from 0.01 to 10 g H₂O / (m² · day), more preferably from 0.01 to 5 g H₂O / (m² · day), more preferably from 0.01 to 3 g H₂O / (m² · day), more preferably from 0.01 to 2 g H₂O / (m² · day), more preferably from 0.01 to 1 g H₂O / (m² · day), more preferably from 0.01 to 0.9 g H₂O / (m² · day), more preferably from 0.01 to 0.8 g H₂O / (m² · day), more preferably from 0.01 to 0.7 g H₂O / (m² · day), more preferably from 0.01 to 0.6 g H₂O / (m² · day), more preferably from 0.01 to 0.5 g H₂O / (m² · day), more preferably from 0.01 to 0.4 g H₂O / (m² · day), more preferably from 0.01 to 0.3 g H₂O / (m² · day), even more preferably from 0.01 to 0.2 g H₂O / (m² · day), most preferably from 0.05 to 0.2 g H₂O / (m² · day); or
- both.

This preferred embodiment is a 74^{th} embodiment of the invention, that preferably depends on any of the 54^{th} to 73^{rd} embodiments of the invention.

Alternatively preferred, the barrier layer has an oxygen transmission rate in a range from 2 to 100 cm³ oxygen / (m² · day · atm), more preferably from 5 to 95 cm³ oxygen / (m² · day · atm) more preferably from 10 to 90 cm³ oxygen / (m² · day · atm).

In a preferred embodiment of the method, in the method step c), the barrier layer is laminated to the carrier layer with a polymer composition C or a polymer composition D or both as laminating agents, thereby obtaining an intermediate polymer layer C from the polymer composition C, or an intermediate polymer layer D from the polymer composition D, or both. This preferred embodiment is a 75^{th} embodiment of the invention, that preferably depends on any of the 54^{th} to 74^{th} embodiments of the invention.

Preferably, the intermediate polymer layer C, or the intermediate polymer layer D or both is/are designed or arranged or both according to one of the embodiments of the sheet-like composite of the invention. Preferably, the method step c) includes melt extruding the polymer composition C or the polymer composition D or both. Preferably, the polymer composition C and the polymer composition D are co-extruded, preferably to the carrier layer.

In a preferred embodiment of the method, in the method step c) the through-hole is covered by the intermediate polymer layer C as a hole-covering layer, or by the intermediate polymer layer D as a hole-covering layer, or by both. This preferred embodiment is a 76^{th} embodiment of the invention, that preferably depends on the 75^{th} embodiment of the invention.

In a preferred embodiment of the method, in the method step d) the through-hole is covered by the inner polymer layer H as a hole-covering layer. This preferred embodiment is a 77^{th} embodiment of the invention, that preferably depends on any of the 54^{th} to 76^{th} embodiments of the invention.

In a preferred embodiment of the method, in the method the hole-covering layers are joined to one another in the through-hole, preferably to an extent of at least 30 %, more preferably at least 70 % and most preferably at least 90 %, in each case of the area formed by the through-hole. This preferred embodiment is a 78^{th} embodiment of the invention, that preferably depends on any of the 54^{th} to 77^{th} embodiments of the invention.

In a preferred embodiment of the method, the method step d) further comprises superimposing, preferably extrusion coating, a polymer composition F to the barrier layer on the side of the barrier layer which faces away from the carrier layer such that an inner polymer layer F, which is obtained from the polymer composition F, is disposed between the barrier layer and the inner polymer layer H. This preferred embodiment is a 79^{th} embodiment of the invention, that preferably depends on any of the 54^{th} to 78^{th} embodiments of the invention.

Preferably, the inner polymer layer F is designed or arranged or both according to one of the embodiments of the sheet-like composite of the invention. Preferably, in the method step d) the through-hole is covered by the inner polymer layer F as a hole-covering layer. Additionally, in the method step d) the inner polymer layer F is preferably joined to one selected from the group consisting of the outer polymer layer A, the intermediate polymer layer C, the intermediate polymer layer D, the barrier layer, the inner polymer layer G, and the inner polymer layer H, or to each of a combination of at least two thereof in the through-hole, preferably to an extent of at least 30 %, more preferably at least 70 % and most preferably at least 90 %, in each case of the area formed by the through-hole. Preferably, in the method step d) the polymer composition F is coated directly onto the barrier layer. Additionally or alternatively preferred, superimposing the polymer composition F to the barrier layer in the method step d) includes melt extrusion coating the polymer composition F, preferably by coextruding at least the polymer composition F and the polymer composition H, more preferably by coextruding at least the polymer composition F, the polymer composition G and the polymer composition H.

In a preferred embodiment of the method, the method step d) further comprises superimposing, preferably extrusion coating, a polymer composition G to the barrier layer on the side of the barrier layer which faces away from the carrier layer such that an inner polymer layer G, which is obtained from the polymer composition G, is disposed between the barrier layer and the inner polymer layer H. This preferred embodiment is a 80^{th} embodiment of the invention, that preferably depends on any of the 54^{th} to 79^{th} embodiments of the invention.

Preferably, the inner polymer layer G is designed or arranged or both according to one of the embodiments of the sheet-like composite of the invention. Preferably, the inner polymer layer G is disposed between the inner polymer layer F and the inner polymer layer H. Preferably, in the method step d) the through-hole is covered by the inner polymer layer G as a hole-covering layer. In the method step d) the inner polymer layer G is preferably joined to one selected from the group consisting of the outer polymer layer A, the intermediate polymer layer C, the intermediate polymer layer D, the barrier layer, the inner polymer layer F, and the inner polymer layer H, or to each of a combination of at least two thereof in the through-hole, preferably to an extent of at least 30 %, more preferably at least 70 % and most preferably at least 90 %, in each case of the area formed by the through-hole. Preferably, superimposing the polymer composition G to the barrier layer in the method step d) includes melt extrusion coating the polymer composition G, preferably by coextruding at least the polymer composition G and the polymer composition H, more preferably by coextruding at least the polymer composition F, the polymer composition G and the polymer composition H.

In a preferred embodiment of the method, the method comprises a further step of superimposing, preferably extrusion coating, a polymer composition A to a side of the carrier layer which, in the sheet-like composite, faces an outer surface of the sheet-like composite, thereby obtaining an outer polymer layer A from the polymer composition A. This preferred embodiment is an 81^{st} embodiment of the invention, that preferably depends on any of the 54^{th} to 80^{th} embodiments of the invention.

Preferably, the further step is conducted after the method step b), or prior to the method step c), or both. Particularly preferably, the further step is conducted between the method steps b) and c). Preferably, the outer polymer layer A is designed or arranged or both according to one of the embodiments of the sheet-like composite of the invention.

In a preferred embodiment of the method, in the further step the through-hole is covered by the outer polymer layer A as a hole-covering layer. This preferred embodiment is an 82^{nd} embodiment of the invention, that preferably depends on the 81^{st} embodiment of the invention.

Additionally, in the further step the outer polymer layer A is preferably joined to one selected from the group consisting of the intermediate polymer layer C, the intermediate polymer layer D, the barrier layer, the inner polymer layer F, the inner polymer layer G, and the inner polymer layer H, or to each of a combination of at least two thereof in the through-hole, preferably to an extent of at least 30 %, more preferably at least 70 % and most preferably at least 90 %, in each case of the area formed by the through-hole.

In a preferred embodiment of the method, the method comprises an additional step of superimposing, preferably printing, a colour application to a side of the carrier layer which, in the sheet-like composite, faces an outer surface of the sheet-like composite. This preferred embodiment is an 83^{rd} embodiment of the invention, that preferably depends on any of the 54^{th} to 82^{nd} embodiments of the invention.

In a preferred embodiment of the method, the additional step is conducted before the further step or after the further step. This preferred embodiment is an 84^{th} embodiment of the invention, that preferably depends on the 83^{rd} embodiment of the invention.

In a preferred embodiment of the method, the method further comprises a step of creating a crease line in the carrier layer. This preferred embodiment is an 85^{th} embodiment of the invention, that preferably depends on any of the 54^{th} to 84^{th} embodiments of the invention.

Preferably, along the crease line the carrier layer has a linear depression, preferably on the side of the carrier layer which, in the sheet-like composite, faces the outer surface or on the side of the carrier layer which, in the sheet-like composite, faces the inner surface. Preferably, the crease line is a straight crease line. Additionally or alternatively preferred, the crease line has a length of at least 1 cm, preferably of at least 2 cm, more preferably of at least 10 cm. A particularly preferred crease line extends essentially from a first cut edge of the sheet-like composite to a further cut edge, preferably opposite the first cut edge, of the sheet-like composite. Preferred first and further cut edges of the sheet-like composite are transversal cut edges of a blank. A crease line for folding the sheet-like composite to obtain a longitudinal fold edge of a container is referred to as longitudinal crease line. In the case of a blank, the longitudinal crease lines often extend from a first transversal cut edge of the blank to a further transversal cut edge of the blank opposite the first transversal cut edge.

In a preferred embodiment of the method, the step of creating the crease line in the carrier layer is conducted prior to the method step c), preferably prior to the further method step or after the additional method step or both. This preferred embodiment is an 86^{th} embodiment of the invention, that preferably depends on the 85^{th} embodiment of the invention.

In a preferred embodiment of the method, the method further comprises a step of separating the sheet-like composite into a multitude of blanks, wherein each of the blanks is for production of a single closed container. This preferred embodiment is an 87^{th} embodiment of the invention, that preferably depends on any of the 54^{th} to 84^{th} embodiments of the invention.

Preferably, the separating is conducted mechanically, more preferably by cutting or punching.

In a preferred embodiment of the method, the method is a method of producing the sheet-like composite of the invention, preferably according to any of the 1^{st} to 53^{rd} embodiments of the invention. This preferred embodiment is an 88^{th} embodiment of the invention, that preferably depends on any of the 54^{th} to 87^{th} embodiments of the invention.

In a preferred embodiment of the method, the first tool surface comprises a plurality of areas of a third kind, wherein each area of the third kind is located between and directly adjoins an area of the first kind and an area of the second kind; wherein either:
A) in each area of the third kind a height with respect to the area of the second kind which directly adjoins the respective area of the third kind, preferably monotonically, more preferably strictly monotonically, increases in a direction from the area of the second kind which directly adjoins the respective area of the third kind to the area of the first kind which directly adjoins the respective area of the third kind, or
B) in each area of the third kind a depth with respect to the area of the second kind which directly adjoins the respective area of the third kind, preferably monotonically, more preferably strictly monotonically, increases in a direction from the area of the second kind which directly adjoins the respective area of the third kind to the area of the first kind which directly adjoins the respective area of the third kind.

This preferred embodiment is an 89^{th} embodiment of the invention, that preferably depends on any of the 54^{th} to 88^{th} embodiments of the invention.

Each area of the third kind is a contiguous area of the first tool surface. Preferably, the alternative A) of the 89^{th} embodiment refers to the alternative A) of the 54^{th} embodiment or of the 68^{th} embodiment or of both, and the alternative B) of the 89^{th} embodiment refers to the alternative B) of the 54^{th} embodiment or of the 68^{th} embodiment or of both.

In a preferred embodiment of the method, for at least 50 %, preferably at least 60 %, more preferably at least 70 %, more preferably at least 80 %, more preferably at least 90 %, more preferably at least 95 %, most preferably 100 %, of the areas of the third kind a maximum of the smaller cutting angles which any first tangent and any further tangent include is in the range from 20 to 90°, wherein each first tangent and each further tangent are tangents on the first tool surface in a cross-section through the first tool, wherein each first tangent is a tangent in the respective area of the third kind, wherein each further tangent is a tangent in an area of the second kind which directly adjoins the respective area of the third kind. This preferred embodiment is a 90^{th} embodiment of the invention, that preferably depends on the 89^{th} embodiment of the invention.

The first and further tangents which include the smaller cutting angles are tangents in the same cross-section. Preferably, the maximum of the smaller cutting angles which any first tangent and any further tangent include is in the range from 20 to 70°, more preferably from 30 to 60°, more preferably from 40 to 50°. Alternatively preferred, the maximum of the smaller cutting angles which any first tangent and any further tangent include is in the range from 70 to 90°, more preferably from 80 to 90°. Any first and further tangents include four cutting angles. Of these, two smaller cutting angles are identical and two larger cutting angles are identical. The sum of one smaller cutting angle and one larger cutting angle is 180°. The maximum of the smaller cutting angles is the smaller cutting angle which is closest to 90° depending on the position of the first tangent in the respective area of the third kind. Preferably, the position of each further tangent is directly adjacent to the respective area of the third kind. The maximum of the smaller cutting angles characterises the maximum slope of the first tool surface in the area of the third kind. The higher the maximum of the smaller cutting angles the steeper the maximum slope. Herein, a position of a tangent means the location at which the tangent contacts the respective surface.

In a preferred embodiment of the method, no area of the first kind has an angle that is less than 10°, preferably less than 20°, more preferably less than 30°, more preferably less than 40°, more preferably less than 45°, more preferably less than 50°, more preferably less than 60°, most preferably less than 70°, on the side of the respective area of the first kind facing the first tool in any cross-section through the respective area of the first kind. This preferred embodiment is a 91^{st} embodiment of the invention, that preferably depends on any of the 54^{th} to 90^{th} embodiments of the invention.

The preceding angle characterises a tip of the first tool surface in the respective area of the first kind. Preferably, this tip is flat. In this case the preceding angle is 180°. Preferably, the tip of the first tool surface in each area of the first kind is rounded. The 91^{st} embodiment preferably refers to the alternative A) of the 54^{th} embodiment.

A 92^{nd} embodiment of the invention is a sheet-like composite which is obtainable by the preceding method of the invention, preferably according to any of the 54^{th} to 91^{st} embodiments of the invention.

A 93^{rd} embodiment of the invention is a container precursor comprising:
- a sheet-like region of the sheet-like composite of the invention, preferably according to any of the 1^{st} to 53^{rd}, and 92^{nd} embodiments of the invention, wherein the sheet-like region comprises the through-hole, or
- the sheet-like composite of the invention, preferably according to any of the 1^{st} to 53^{rd}, and 92^{nd} embodiments of the invention.

In a preferred embodiment of the container precursor, the sheet-like region or the sheet-like composite in each case comprises at least two folds, preferably at least 3 folds, more preferably at least 4 folds. This preferred embodiment is a 94^{th} embodiment of the invention, that preferably depends on the 93^{rd} embodiment of the invention.

The preceding folds are preferably longitudinal folds.

In a preferred embodiment of the container precursor, the sheet-like region or the sheet-like composite comprises a first longitudinal edge and a further longitudinal edge, wherein the first longitudinal edge is joined to the further longitudinal edge, thereby forming a longitudinal seam of the container precursor. This preferred embodiment is a 95^{th} embodiment of the invention, that preferably depends on the 93^{rd} or 94^{th} embodiment of the invention.

A 96^{th} embodiment of the invention is a closed container comprising:
- a sheet-like region of the sheet-like composite of the invention, preferably according to any of the 1^{st} to 53^{rd}, and 92^{nd} embodiments of the invention, wherein the sheet-like region comprises the through-hole, or
- the sheet-like composite of the invention, preferably according to any of the 1^{st} to 53^{rd}, and 92^{nd} embodiments of the invention.

**In** a preferred embodiment of the closed container, the sheet-like region or the sheet-like composite in each case comprises at least two folds, preferably at least 3 folds, more preferably at least 4 folds. This preferred embodiment is a 97^{th} embodiment of the invention, that preferably depends on the 96^{th} embodiment of the invention.

In a preferred embodiment of the closed container, the sheet-like region or the sheet-like composite comprises a first longitudinal edge and a further longitudinal edge, wherein the first longitudinal edge is joined to the further longitudinal edge, thereby forming a longitudinal seam of the closed container. This preferred embodiment is a 98^{th} embodiment of the invention, that preferably depends on the 96^{th} or 97^{th} embodiment of the invention.

In a preferred embodiment of the closed container, the closed container contains a food or drink product. This preferred embodiment is a 99^{th} embodiment of the invention, that preferably depends on any of the 96^{th} to 98^{th} embodiments of the invention.

In a preferred embodiment of the closed container, the closed container further comprises an opening aid. This preferred embodiment is a 100^{th} embodiment of the invention, that preferably depends on any of the 96^{th} to 99^{th} embodiments of the invention.

Preferably, the opening aid is designed and arranged to open the closed container through the hole-covering region or hole-covering regions which cover the through-hole in the carrier layer. Preferably, the opening aid is joined to the sheet-like region or the sheet-like composite. Further preferably, the opening aid is joined to a hole-covering region. Additionally or alternatively preferred, the opening aid at least partially surrounds the through-hole in the carrier layer.

A 101^{st} embodiment of the invention is a method comprising, as method steps:
a. providing:
   A. a sheet-like region of the sheet-like composite of the invention, preferably according to any of the 1^{st} to 53^{rd}, and 92^{nd} embodiments of the invention, wherein the sheet-like region comprises the through-hole, a first longitudinal edge and a further longitudinal edge, or
   B. the sheet-like composite of the invention, preferably according to any of the 1^{st} to 53^{rd}, and 92^{nd} embodiments of the invention, wherein the sheet-like composite comprises a first longitudinal edge and a further longitudinal edge;
b. folding the sheet-like region or the sheet-like composite; and
c. contacting and joining the first longitudinal edge to the further longitudinal edge, thereby obtaining a longitudinal seam.

Preferably, at least two, more preferably at least 3, most preferably 4, longitudinal folds are obtained by the folding action in step b. The preceding method preferably is a process for producing a container precursor, preferably a method of producing a container precursor. The container precursor preferably is the container precursor of the invention according to any one of its embodiments.

A 102^{nd} embodiment of the invention is a container precursor which is obtainable by the preceding method of the invention, preferably according to the 101^{st} embodiment of the invention.

A 103^{rd} embodiment of the invention is a method comprising, as method steps:
A] providing the container precursor of the invention, preferably according to any of the 93^{rd} to 95^{th} and 102^{nd} embodiments of the invention;
B] forming a base region of the container precursor by folding the sheet-like region or the sheet-like composite;
C] closing the base region;
D] filling the container precursor with a food or drink product; and
E] closing the container precursor in a top region, thereby obtaining a closed container.

The preceding method preferably is a method for producing a closed container, preferably a method of producing a closed container. The closed container preferably is the closed container of the invention according to any one of its embodiments. The closing in the method step C] preferably comprises a sealing, more preferably a hot air sealing. The closing in the method step E] preferably comprises a sealing, more preferably an ultrasound sealing.

In a preferred embodiment of the method, the closing in the method step C] or E] or in both comprises a sealing method, wherein the sealing method is effected by one selected from the group consisting of irradiation, contacting with a hot solid, inducement of mechanical vibration, and contacting with a hot gas, or by a combination of at least two of these. This preferred embodiment is a 104^{th} embodiment of the invention, that preferably depends on the 103^{rd} embodiment of the invention.

In this case, a different sealing method from the aforementioned group may be used in the method step C] from that in the method step E] and vice versa. However, it is also possible to use the same sealing method in both the of the steps C] and E].

In a preferred embodiment of the method, the method further comprises a method step of
F] joining an opening aid to the closed container.

This preferred embodiment is a 105^{th} embodiment of the invention, that preferably depends on the 103^{rd} or 104^{th} embodiment of the invention.

A 106^{th} embodiment of the invention is a closed container which is obtainable by the preceding method of the invention, preferably according to any of the 103^{rd} to 105^{th} embodiments of the invention.

A 107^{th} embodiment of the invention is a use of the sheet-like composite of the invention, preferably according to any of the 1^{st} to 53^{rd}, and 92^{nd} embodiments of the invention, for production of a food or drink product container.

A 108^{th} embodiment of the invention is a use of a sonotrode as the further tool in the method of the invention, preferably according to any of the 54^{th} to 91^{st} embodiments of the invention.

A 109^{th} embodiment of the invention is a use of a combination of a sonotrode and an anvil for treating at least a region of a single ply of a barrier layer; where the anvil comprises a plurality of areas of a first kind and at least one area of a second kind; wherein either:
A) each area of the first kind is elevated with respect to an area of the second kind which at least partially, preferably fully, surrounds the respective area of the first kind, or
B) each area of the first kind is lowered with respect to an area of the second kind which at least partially, preferably fully, surrounds the respective area of the first kind.

Each area of the first and second kinds is a contiguous area of the anvil. Preferably, the same single area of the second kind at least partially, preferably fully, surrounds each of the areas of the first kind of the plurality of areas of the first kind. Preferably, either:
A) each area of the first kind is elevated at a constant height with respect to an area of the second kind which at least partially, preferably fully, surrounds the respective area of the first kind, or
B) each area of the first kind is lowered at a constant depth with respect to an area of the second kind which at least partially, preferably fully, surrounds the respective area of the first kind.

Preferably, the preceding alternative A) refers to the alternative A) of the 109^{th} embodiment, and the preceding alternative B) refers to the alternative B) of the 109^{th} embodiment.

In a preferred embodiment of the use, the sonotrode or the anvil or each of both is a lifting tool or a roller. This preferred embodiment is a 110^{th} embodiment of the invention, that preferably depends on the 109^{th} embodiment of the invention.

In a preferred embodiment of the use, treating at least the region of the single ply of the barrier layer comprises pressing at least the region of the barrier layer between the first tool surface of the anvil and a further tool surface of the sonotrode. This preferred embodiment is a 111^{th} embodiment of the invention, that preferably depends on the 109^{th} or 110^{th} embodiment of the invention.

In a preferred embodiment of the use, in the pressing is conducted at a contact force in the range from 50 N to 1kN, preferably from 80 to 600 N, more preferably from 100 to 550 N, more preferably from 120 to 500 N, more preferably from 150 to 450 N, more preferably from 160 to 440 N, more preferably from 170 to 430 N, more preferably from 180 to 420 N, even more preferably from 190 to 410 N, most preferably from 200 to 400 N. This preferred embodiment is a 112^{th} embodiment of the invention, that preferably depends on the 111^{th} embodiment of the invention.

In a preferred embodiment of the use, during treating the sonotrode vibrates:
- at a frequency in the range from 10 to 100 kHz, more preferably from 10 to 90 kHz, more preferably from 10 to 80 kHz, more preferably from 10 to 70 kHz, more preferably from 10 to 60 kHz, more preferably from 10 to 50 kHz, more preferably from 10 to 40 kHz, more preferably from 20 to 40 kHz, even more preferably from 25 to 35 kHz, most preferably of about 30 kHz; or
- with an amplitude in the range from 3 to 100 µm, more preferably from 3 to 90 µm, more preferably from 3 to 80 µm, more preferably from 3 to 70 µm, more preferably from 3 to 60 µm, more preferably from 3 to 50 µm, more preferably from 3 to 40 µm, more preferably from 3 to 30 µm, even more preferably from 5 to 30 µm most preferably from 10 to 20 µm; or
- both.

This preferred embodiment is a 113^{th} embodiment of the invention, that preferably depends on any of the 109^{th} to 112^{th} embodiments of the invention.

In a preferred embodiment of the use, the anvil is a first roller and the sonotrode is a further roller; wherein during treating the first roller rotates in a first direction and the further roller rotates in a further direction which is opposite to the first direction. This preferred embodiment is a 114^{th} embodiment of the invention, that preferably depends on any of the 109^{th} to 113^{th} embodiments of the invention.

In a preferred embodiment of the use, during treating the barrier layer moves at a speed of more than 0 m/min, preferably at a speed of at least 10 m/min, more preferably of at least 50 m/min, more preferably at a speed in the range from 50 to 900 m/min, more preferably from 100 to 900 m/min, more preferably from 200 to 900 m/min, more preferably from 300 to 900 m/min, more preferably from 400 to 900 m/min, preferably from 500 to 750 m/min, more preferably from 600 to 700 m/min. This preferred embodiment is a 115^{th} embodiment of the invention, that preferably depends on any of the 109^{th} to 114^{th} embodiments of the invention.

In a preferred embodiment of the use, the barrier layer is in the form of a web with a length and width which is perpendicular to the length; wherein the region of the barrier layer is a stripe which is elongated in a direction of the length of the web. This preferred embodiment is a 116^{th} embodiment of the invention, that preferably depends on any of the 109^{th} to 115^{th} embodiments of the invention.

In a preferred embodiment of the use, the barrier layer comprises a sublayer sequence which comprises:
- a barrier material layer, and
- a barrier substrate layer
as sublayers which are superimposed to one another. This preferred embodiment is a 117^{th} embodiment of the invention, that preferably depends on any of the 109^{th} to 116^{th} embodiments of the invention.

In a preferred embodiment of the use, at the time of treating the at least region of the single ply of the barrier layer, the barrier substrate layer is on a side of the barrier material layer which faces the first tool surface. This preferred embodiment is a 118^{th} embodiment of the invention, that preferably depends on the 117^{th} embodiment of the invention.

In a preferred embodiment of the use, either:
A) each area of the first kind is elevated with respect to an area of the second kind which at least partially, preferably fully, surrounds the respective area of the first kind by a height in the range from 20 to 2000 µm, preferably from 200 to 1500 µm, more preferably from 600 to 1100 µm; or
B) each area of the first kind is lowered with respect to an area of the second kind which at least partially, preferably fully, surrounds the respective area of the first kind by a depth in the range from 20 to 2000 µm, preferably from 200 to 1500 µm, more preferably from 600 to 1100 µm.

This preferred embodiment is a 119^{th} embodiment of the invention, that preferably depends on any of the 109^{th} to 118^{th} embodiments of the invention.

Preferably, the alternative A) of the 119^{th} embodiment refers to the alternative A) of the 109^{th} embodiment, and the alternative B) of the 119^{th} embodiment refers to the alternative B) of the 109^{th} embodiment.

In a preferred embodiment of the use, in plan view a share of the sum the surface areas of all areas of the first kind of a total surface area of the first tool surface is in the range from 10 to 25 %, preferably from 12 to 22 %, more preferably from 14 to 20 %. This preferred embodiment is a 120^{th} embodiment of the invention, that preferably depends on any of the 109^{th} to 119^{th} embodiments of the invention.

In a preferred embodiment of the use, a minimum distance between any two areas of the first kind is in the range from 0.5 to 5 mm, preferably from 0.5 to 4 mm, more preferably from 0.5 to 3 mm, more preferably from 0.5 to 2.5 mm, more preferably from 0.5 to 2 mm, more preferably from 0.5 to 1.8 mm, more preferably from 0.5 to 1.6 mm, more preferably from 0.6 to 1.4 mm, more preferably from 0.7 to 1.3 mm, more preferably from 0.8 to 1.2 mm, most preferably from 0.9 to 1.1 mm. This preferred embodiment is a 121^{st} embodiment of the invention, that preferably depends on any of the 109^{th} to 120^{th} embodiments of the invention.

In a preferred embodiment of the use, in plan view the areas of the first kind of the plurality of areas of the first kind are distributed in a regular arrangement on the first tool surface. This preferred embodiment is a 122^{nd} embodiment of the invention, that preferably depends on any of the 109^{th} to 121^{st} embodiments of the invention.

In a preferred embodiment of the use, in plan view a surface area of each area of the first kind is in the range from 0.5 to 5 mm², preferably from 0.5 to 4.5 mm², more preferably from 0.5 to 4 mm², more preferably from 0.5 to 3.5 mm², more preferably from 0.5 to 3 mm², more preferably from 0.5 to 2.5 mm², more preferably from 0.5 to 2 mm², more preferably from 0.5 to 1.8 mm², more preferably from 0.5 to 1.6 mm², more preferably from 0.5 to 1.4 mm², more preferably from 0.5 to 1.2 mm², more preferably from 0.5 to 1.0 mm², more preferably from 0.5 to 0.8 mm², more preferably from 0.6 to 0.7 mm². This preferred embodiment is a 123^{rd} embodiment of the invention, that preferably depends on any of the 109^{th} to 122^{nd} embodiments of the invention.

In a preferred embodiment of the use, in plan view each area of the first kind has a polygonal shape or a round shape. This preferred embodiment is a 124^{th} embodiment of the invention, that preferably depends on any of the 109^{th} to 123^{rd} embodiments of the invention.

In a preferred embodiment of the use, the anvil comprises a plurality of areas of a third kind, wherein each area of the third kind is located between and directly adjoins an area of the first kind and an area of the second kind; wherein either:
A) in each area of the third kind a height with respect to the area of the second kind which directly adjoins the respective area of the third kind, preferably monotonically, more preferably strictly monotonically, increases in a direction from the area of the second kind which directly adjoins the respective area of the third kind to the area of the first kind which directly adjoins the respective area of the third kind, or
B) in each area of the third kind a depth with respect to the area of the second kind which directly adjoins the respective area of the third kind, preferably monotonically, more preferably strictly monotonically, increases in a direction from the area of the second kind which directly adjoins the respective area of the third kind to the area of the first kind which directly adjoins the respective area of the third kind.

This preferred embodiment is a 125^{th} embodiment of the invention, that preferably depends on any of the 109^{th} to 124^{th} embodiments of the invention.

Each area of the third kind is a contiguous area of the anvil. Preferably, the alternative A) of the 125^{th} embodiment refers to the alternative A) of the 109^{th} embodiment or of the 119^{th} embodiment or of both, and the alternative B) of the 125^{th} embodiment refers to the alternative B) of the 109^{th} embodiment or of the 119^{th} embodiment or of both.

In a preferred embodiment of the use, for at least 50 %, preferably at least 60 %, more preferably at least 70 %, more preferably at least 80 %, more preferably at least 90 %, more preferably at least 95 %, most preferably 100 %, of the areas of the third kind a maximum of the smaller cutting angles which any first tangent and any further tangent include is in the range from 20 to 90°, wherein each first tangent and each further tangent are tangents on the anvil in a cross-section through the anvil, wherein each first tangent is a tangent in the respective area of the third kind, wherein each further tangent is a tangent in an area of the second kind which directly adjoins the respective area of the third kind. This preferred embodiment is a 126^{th} embodiment of the invention, that preferably depends on the 125^{th} embodiment of the invention.

The first and further tangents which include the smaller cutting angles are tangents in the same cross-section. Preferably, the maximum of the smaller cutting angles which any first tangent and any further tangent include is in the range from 20 to 70°, more preferably from 30 to 60°, more preferably from 40 to 50°. Alternatively preferred, the maximum of the smaller cutting angles which any first tangent and any further tangent include is in the range from 70 to 90°, more preferably from 80 to 90°. Any first and further tangents include four cutting angles. Of these, two smaller cutting angles are identical and two larger cutting angles are identical. The sum of one smaller cutting angle and one larger cutting angle is 180°. The maximum of the smaller cutting angles is the smaller cutting angle which is closest to 90° depending on the position of the first tangent on the respective area of the third. Preferably, the position of each further tangent is directly adjacent to the respective area of the third kind. The maximum of the smaller cutting angles characterises the maximum slope of the anvil in the area of the third kind. The higher the maximum of the smaller cutting angles the steeper the maximum slope. Herein, a position of a tangent means the location at which the tangent contacts the respective surface.

In a preferred embodiment of the use, no area of the first kind has an angle that is less than 10°, preferably less than 20°, more preferably less than 30°, more preferably less than 40°, more preferably less than 45°, more preferably less than 50°, more preferably less than 60°, most preferably less than 70°, on the side of the respective area of the first kind facing the first tool in any cross-section through the respective area of the first kind. This preferred embodiment is a 127^{th} embodiment of the invention, that preferably depends on any of the 109^{th} to 126^{th} embodiments of the invention.

The preceding angle characterises a tip of the anvil in the respective area of the first kind. Preferably, this tip is flat. In this case the preceding angle is 180°. Preferably, the tip of the anvil in each area of the first kind is rounded. The 127^{th} embodiment preferably refers to one, preferably all, of the alternatives A) of the 109^{th,} 119^{th} and 125^{th} embodiments.

A 128^{th} embodiment of the invention is a barrier layer, which comprises a sublayer sequence comprising:
- a barrier material layer, and
- a barrier substrate layer

as sublayers which are superimposed to one another;
wherein, on a side of the barrier substrate layer which faces away from the barrier material layer, the barrier layer comprises a plurality of depressions or a plurality of bulges.

In a preferred embodiment, the preceding barrier layer has the features of the barrier layer in any of the 1^{st} to 53^{rd} embodiments of the invention.

In a preferred embodiment of the barrier layer, at least 50 %, preferably at least 60 %, more preferably at least 70 %, more preferably at least 80 %, more preferably at least 90 %, more preferably at least 95 %, most preferably 100 %, of the depressions of the plurality of depressions have a depth in the range from 20 to 2000 µm, preferably from 200 to 1500 µm, more preferably from 600 to 1100 µm. This preferred embodiment is a 129^{th} embodiment of the invention, that preferably depends on the 128^{th} embodiment of the invention.

In a preferred embodiment of the barrier layer, at least 50 %, preferably at least 60 %, more preferably at least 70 %, more preferably at least 80 %, more preferably at least 90 %, more preferably at least 95 %, most preferably 100 %, of the bulges of the plurality of bulges have a height in the range from 20 to 2000 µm, preferably from 200 to 1500 µm, more preferably from 600 to 1100 µm. This preferred embodiment is a 130^{th} embodiment of the invention, that preferably depends on the 128^{th} or 129^{th} embodiment of the invention.

In a preferred embodiment of the barrier layer, on a side of the barrier material layer which faces away from the barrier substrate layer, the barrier layer is essentially flat. This preferred embodiment is an 131^{st} embodiment of the invention, that preferably depends on any of the 128^{th} to 130^{th} embodiments of the invention.

Here, the term *"essentially flat"* means that, the respective side of the barrier layer does at least not have any depression or any bulge on the scale of the depressions or bulges according to any of the 128^{th} to 130^{th} embodiments.

In a preferred embodiment of the barrier layer, for at least 50 %, preferably at least 60 %, more preferably at least 70 %, more preferably at least 80 %, more preferably at least 90 %, more preferably at least 95 %, most preferably 100 %, of the depressions of the plurality of depressions, or of the bulges of the plurality of bulges a maximum of the smaller cutting angles between any tangent on the respective depression or bulge and the plane of the barrier layer in a cross-section through the barrier layer and through the respective depression or bulge is in the range from 20 to 90°. This preferred embodiment is a 132^{nd} embodiment of the invention, that preferably depends on any of the 128^{th} to 131^{st} embodiments of the invention.

Preferably, the maximum of the smaller cutting angles is in the range from 30 to 90°, more preferably from 40 to 90°, more preferably from 50 to 90°, more preferably from 60 to 90°, more preferably from 70 to 90°, more preferably from 75 to 85°. Alternatively preferred, the maximum of the smaller cutting angles is in the range from 80 to 90°, more preferably from 85 to 90°.

In a preferred embodiment of the barrier layer, a minimum distance between any two depressions of the plurality of depressions, or between any two bulges of the plurality of bulges is in the range from 0.5 to 5 mm, preferably from 0.5 to 4 mm, more preferably from 0.5 to 3 mm, more preferably from 0.5 to 2.5 mm, more preferably from 0.5 to 2 mm, more preferably from 0.5 to 1.8 mm, more preferably from 0.5 to 1.6 mm, more preferably from 0.6 to 1.4 mm, more preferably from 0.7 to 1.3 mm, more preferably from 0.8 to 1.2 mm, most preferably from 0.9 to 1.1 mm. This preferred embodiment is a 133^{rd} embodiment of the invention, that preferably depends on any of the 128^{th} to 132^{nd} embodiments of the invention.

In a preferred embodiment of the barrier layer, in plan view the depressions of the plurality of depressions, or the bulges of the plurality of bulges are distributed in a regular arrangement. This preferred embodiment is an 134^{th} embodiment of the invention, that preferably depends on any of the 128^{th} to 133^{rd} embodiments of the invention.

In a preferred embodiment of the barrier layer, in plan view a surface area of each depression of the plurality of depressions, or a surface area of each bulge of the plurality of bulges is in the range from 0.5 to 5 mm², preferably from 0.5 to 4.5 mm², more preferably from 0.5 to 4 mm², more preferably from 0.5 to 3.5 mm², more preferably from 0.5 to 3 mm², more preferably from 0.5 to 2.5 mm², more preferably from 0.5 to 2 mm², more preferably from 0.5 to 1.8 mm², more preferably from 0.5 to 1.6 mm², more preferably from 0.5 to 1.4 mm², more preferably from 0.5 to 1.2 mm², more preferably from 0.5 to 1.0 mm², more preferably from 0.5 to 0.8 mm², more preferably from 0.6 to 0.7 mm². This preferred embodiment is a 135^{th} embodiment of the invention, that preferably depends on any of the 128^{th} to 134^{th} embodiments of the invention.

Alternatively preferred, in plan view a surface area of each depression of the plurality of depressions, or a surface area of each bulge of the plurality of bulges is in the range from 0.6 to 1.8 mm², more preferably from 0.7 to 1.7 mm², more preferably from 0.8 to 1.6 mm³, more preferably from 0.9 to 1.5 mm², more preferably from 1.0 to 1.4 mm², more preferably from 1.1 to 1.3 mm².

In a preferred embodiment of the barrier layer, in plan view each depression of the plurality of depressions, or each bulge of the plurality of bulges has a polygonal shape or a round shape. This preferred embodiment is a 136^{th} embodiment of the invention, that preferably depends on any of the 128^{th} to 135^{th} embodiments of the invention.

Generally, each closed geometric shape is possible for the depressions of the plurality of depressions and for the bulges of the plurality of bulges in plan view.

In a preferred embodiment of the barrier layer, the barrier substrate layer comprises a polymer, preferably in a proportion of at least 50 wt.-%, preferably at least 60 wt.-%, more preferably at least 70 wt.-%, more preferably at least 80 wt.-%, even more preferably at least 90 wt.-%, most preferably 100 wt.-%, based in each case on the weight of the barrier substrate layer. This preferred embodiment is a 137^{th} embodiment of the invention, that preferably depends on any of the 128^{th} to 136^{th} embodiments of the invention.

In a preferred embodiment of the barrier layer, the polymer of the barrier substrate layer is selected from the group consisting of a polycondensate, a polyolefin, and a polyvinyl alcohol, or a combination of at least two thereof. This preferred embodiment is a 138^{th} embodiment of the invention, that preferably depends on the 137^{th} embodiment of the invention.

A preferred polyolefin is a polyethylene (PE) or a polypropylene (PP) or both. A preferred polycondensate is a polyester or a polyamide (PA) or both. A preferred polyester is a polyethylene terephthalate (PET), or a polylactide (PLA), or both. A preferred polyvinyl alcohol is a vinyl alcohol copolymer. A preferred vinyl alcohol copolymer is an ethylene-vinyl alcohol copolymer. A particularly preferred polymer of the barrier substrate layer is PE or PP, where PP is very particularly preferred.

In a preferred embodiment of the barrier layer, the polymer of the barrier substrate layer is oriented. This preferred embodiment is a 139^{th} embodiment of the invention, that preferably depends on the 137^{th} or 138^{th} embodiment of the invention.

A preferred oriented polymer is monoaxially oriented or biaxially oriented. A preferred oriented polyethylene is monoaxially oriented polyethylene (MoPE) or biaxially oriented polyethylene (BoPE). A preferred oriented polypropylene is monoaxially oriented polypropylene (MoPP) or biaxially oriented polypropylene (BoPP). A particularly preferred polymer of the barrier substrate layer is MoPE or BoPP.

In a preferred embodiment of the barrier layer, a melting temperature of the barrier substrate layer is in the range from 100 to 300 °C, preferably from 110 to 290 °C, more preferably from 120 to 280 °C, more preferably from 130 to 270 °C, more preferably from 140 to 260 °C, more preferably from 130 to 250 °C, more preferably from 130 to 240 °C, more preferably from 130 to 230 °C, more preferably from 130 to 220 °C, more preferably from 130 to 210 °C, more preferably from 130 to 200 °C, more preferably from 130 to 190 °C, more preferably from 130 to 180 °C, more preferably from 140 to 175 °C, even more preferably from 145 to 170 °C, most preferably from 150 to 165 °C. This preferred embodiment is a 140^{th} embodiment of the invention, that preferably depends on any of the 128^{th} to 139^{th} embodiments of the invention.

In a preferred embodiment of the barrier layer, the barrier material layer comprises, preferably consists of, at least one metal or at least one oxide. This preferred embodiment is a 141^{st} embodiment of the invention, that preferably depends on any of the 128^{th} to 140^{th} embodiments of the invention.

A preferred metal is aluminium. A particularly preferred barrier material layer comprises, preferably consists of, aluminium, AlOx or SiOx.

In a preferred embodiment of the barrier layer, the at least one oxide is an oxide of one selected from the group consisting of one or more metals, one or more semimetals and one or more nonmetals, or a combination of at least two of these. This preferred embodiment is a 142^{nd} embodiment of the invention, that preferably depends on the 141^{st} embodiment of the invention.

In a preferred embodiment of the barrier layer, the barrier material layer has an average thickness in a range from 1 nm to 1 µm, preferably from 1 to 500 nm, more preferably from 1 to 300 nm, more preferably from 1 to 100 nm, more preferably from 1 to 90 nm, more preferably from 1 to 80 nm, more preferably from 1 to 70 nm, more preferably from 1 to 60 nm, more preferably from 1 to 50 nm, more preferably from 1 to 40 nm, more preferably from 1 to 30 nm, even more preferably from 1 to 20 nm, most preferably from 5 to 20 nm. This preferred embodiment is a 143^{rd} embodiment of the invention, that preferably depends on any of the 128^{th} to 142^{nd} embodiments of the invention.

In a preferred embodiment of the barrier layer, the barrier layer has an average thickness in a range from 5 to 50 µm, preferably from 10 to 50 µm, more preferably from 11 to 40 µm, more preferably from 12 to 30 µm, even more preferably from 15 to 20 µm, most preferably from 15 to 17 µm. This preferred embodiment is a 144^{th} embodiment of the invention, that preferably depends on any of the 128^{th} to 143^{rd} embodiments of the invention.

In a preferred embodiment of the barrier layer, the barrier layer has:
- an oxygen transmission rate in a range from 0.02 to 100 cm³ oxygen / (m² · day · atm) , preferably from 0.03 to 90 cm³ oxygen / (m² · day · atm), preferably from 0.04 to 80 cm³ oxygen / (m² · day · atm), preferably from 0.05 to 70 cm³ oxygen / (m² · day · atm), preferably from 0.06 to 60 cm³ oxygen / (m² · day · atm), preferably from 0.07 to 55 cm³ oxygen / (m² · day · atm) , preferably from 0.08 to 50 cm³ oxygen / (m² · day · atm), preferably from 0.09 to 40 cm³ oxygen / (m² · day · atm), preferably from 0.1 to 30 cm³ oxygen / (m² · day · atm), preferably from 0.12 to 20 cm³ oxygen / (m² · day · atm), more preferably from 0.14 to 15 cm³ oxygen / (m² · day · atm), more preferably from 0.16 to 10 cm³ oxygen / (m² · day · atm), more preferably from 0.18 to 5 cm³ oxygen / (m² · day · atm), more preferably from 0.2 to 3 cm³ oxygen / (m² · day · atm), more preferably from 0.22 to 2 cm³ oxygen / (m² · day · atm), more preferably from 0.25 to 1 cm³ oxygen / (m² · day · atm), more preferably from 0.3 to 0.9 cm³ oxygen / (m² · day · atm), even more preferably from 0.35 to 0.9 cm³ oxygen / (m² · day · atm), most preferably from 0.4 to 0.8 cm³ oxygen / (m² · day · atm); or
- a water vapour transmission rate in a range from 0.01 to 40 g H₂O / (m² · day), preferably from 0.01 to 20 g H₂O / (m² · day), more preferably from 0.01 to 10 g H₂O / (m² · day), more preferably from 0.01 to 5 g H₂O / (m² · day), more preferably from 0.01 to 3 g H₂O / (m² · day), more preferably from 0.01 to 2 g H₂O / (m² · day), more preferably from 0.01 to 1 g H₂O / (m² · day), more preferably from 0.01 to 0.9 g H₂O / (m² · day), more preferably from 0.01 to 0.8 g H₂O / (m² · day), more preferably from 0.01 to 0.7 g H₂O / (m² · day), more preferably from 0.01 to 0.6 g H₂O / (m² · day), more preferably from 0.01 to 0.5 g H₂O / (m² · day), more preferably from 0.01 to 0.4 g H₂O / (m² · day), more preferably from 0.01 to 0.3 g H₂O / (m² · day), even more preferably from 0.01 to 0.2 g H₂O / (m² · day), most preferably from 0.05 to 0.2 g H₂O / (m² · day); or
- both.

This preferred embodiment is a 145^{th} embodiment of the invention, that preferably depends on any of the 128^{th} to 144^{th} embodiments of the invention.

Alternatively preferred, the barrier layer has an oxygen transmission rate in a range from 2 to 100 cm³ oxygen / (m² · day · atm), more preferably from 5 to 95 cm³ oxygen / (m² · day · atm) more preferably from 10 to 90 cm³ oxygen / (m² · day · atm).

In a preferred embodiment of the barrier layer, the barrier layer is in the form of a web with a length and width which is perpendicular to the length; wherein the at least region of the barrier layer is a stripe which is elongated in a direction of the length of the web. This preferred embodiment is a 146^{th} embodiment of the invention, that preferably depends on any of the 128^{th} to 145^{th} embodiments of the invention.

Preferably, a width of the stripe is in the range from 0.5 to 20 cm, more preferably from 1 to 15 cm, more preferably from 2 to 10 cm, most preferably from 3 to 6 cm. Additionally or alternatively preferred, a length if the stripe is at least 0.5 m, more preferably at least 1 m, more preferably at least 5 m, more preferably at least 10 m.

In a preferred embodiment of the barrier layer, a thickness of the barrier substrate layer is a two-dimensional function of a position on a surface of the barrier substrate layer which faces away from the barrier material layer; wherein the at least region of the barrier layer comprises a plurality of sub-regions of a first kind; wherein either:
a] each sub-region of the first kind includes exactly the positions on the surface of the barrier substrate layer which faces away from the barrier material layer at which the two-dimensional function has a local minimum; or
b] each sub-region of the first kind includes exactly the positions on the surface of the barrier substrate layer which faces away from the barrier material layer at which the two-dimensional function has a local maximum.

This preferred embodiment is a 147^{th} embodiment of the invention, that preferably depends on any of the 128^{th} to 146^{th} embodiments of the invention.

Preferably, the sub-regions of the first kind of the above barrier layer are designed and arranged as the sub-regions of the first kind in any of the 1^{st} to 53^{rd} embodiments of the invention.

In a preferred embodiment of the barrier layer, in each sub-region of the first kind a thickness of the barrier material layer does not differ by more than 20 %, preferably more than 10 %, more preferably more than 5 %, even more preferably more than 3 %, in each case from an average thickness of the barrier material layer. This preferred embodiment is a 148^{th} embodiment of the invention, that preferably depends on the 147^{th} embodiment of the invention.

In a preferred embodiment of the barrier layer, the at least region of the barrier layer comprises at least one sub-region of a second kind; wherein each sub-region of the first kind is at least partially, preferably fully, surrounded by a sub-region of the second kind; wherein either:
a] each sub-region of the second kind includes exactly the positions on the surface of the barrier substrate layer which faces away from the barrier material layer at which the two-dimensional function has a local maximum; or
b] each sub-region of the second kind includes exactly the positions on the surface of the barrier substrate layer which faces away from the barrier material layer at which the two-dimensional function has a local minimum;
wherein in each sub-region of the first kind a thickness of the barrier material layer does not differ by more than 20 %, preferably more than 10 %, more preferably more than 5 %, even more preferably more than 3 %, in each case from a thickness of the barrier material layer in the sub-region of the second kind which is at least partially, preferably fully, surrounds the respective sub-region of the first kind. This preferred embodiment is a 149^{th} embodiment of the invention, that preferably depends on the 147^{th} or 148^{th} embodiment of the invention.

Preferably, the sub-regions of the second kind of the above barrier layer are designed and arranged as the sub-regions of the second kind in any of the 1^{st} to 53^{rd} embodiments of the invention.

**In** a preferred embodiment of the barrier layer, the at least region of the barrier layer comprises a plurality of sub-regions of a third kind; wherein each sub-region of the third kind is located between and directly adjoins a sub-region of the first kind and a sub-region of the second kind; wherein in each sub-region of the third kind a thickness of the barrier substrate layer is either:
a] between the local minimum in the sub-region of the first kind which directly adjoins the respective sub-region of the third kind and the local maximum in the sub-region of the second kind which directly adjoins the respective sub-region of the third kind; or
b] between the local maximum in the sub-region of the first kind which directly adjoins the respective sub-region of the third kind and the local minimum in the sub-region of the second kind which directly adjoins the respective sub-region of the third kind.

This preferred embodiment is a 150^{th} embodiment of the invention, that preferably depends on the 149^{th} embodiment of the invention.

Preferably, the sub-regions of the third kind of the above barrier layer are designed and arranged as the sub-regions of the third kind in any of the 1^{st} to 53^{rd} embodiments of the invention.

In a preferred embodiment of the barrier layer, either:
a] each sub-region of the first kind is part of a depression of the plurality of depressions; or
b] each sub-region of the first kind is part of a bulge of the plurality of bulges.

This preferred embodiment is a 151^{st} embodiment of the invention, that preferably depends on any of the 147^{th} to 150^{th} embodiments of the invention.

If a sub-region of the first kind is part of a depression, the depression preferably consists of the respective sub-region of the first kind and the sub-region of the third kind which directly adjoins this sub-region of the first kind. If a sub-region of the first kind is part of a bulge, the bulge preferably consists of the respective sub-region of the first kind and the sub-region of the third kind which directly adjoins this sub-region of the first kind.

A 152^{nd} embodiment of the invention is a method comprising as method steps:
a} providing a barrier layer which comprises a sublayer sequence comprising:
   - a barrier material layer, and
   - a barrier substrate layer
   as sublayers which are superimposed to one another; and
b} pressing at least a region of the barrier layer between a first tool surface of a first tool and a further tool surface of a further tool;
wherein the first tool surface comprises a plurality of areas of a first kind and at least one area of a second kind; wherein either:
A) each area of the first kind is elevated with respect to an area of the second kind which at least partially, preferably fully, surrounds the respective area of the first kind, or
B) each area of the first kind is lowered with respect to an area of the second kind which at least partially, preferably fully, surrounds the respective area of the first kind.

In an preferred embodiment of the preceding method, the first tool or the further tool or each of both is designed according to one of the 54^{th} to 91^{st} embodiments of the invention. Additionally or alternatively preferred, the barrier layer has the features of the barrier layer in any of the 1^{st} to 53^{rd} embodiments of the invention, preferably after step b}. Additionally or alternatively preferred, the barrier layer has the features of the barrier layer in any of the 54^{th} to 91^{st} embodiments of the invention, preferably before step b}, more preferably in step a}. Additionally or alternatively preferred, the barrier layer has the features of the barrier layer in any of the 128^{th} to 151^{st} embodiments of the invention, preferably after step b}.

In a preferred embodiment of the method, during the pressing in step b} the further tool surface vibrates:
- at a frequency in the range from 10 to 100 kHz, more preferably from 10 to 90 kHz, more preferably from 10 to 80 kHz, more preferably from 10 to 70 kHz, more preferably from 10 to 60 kHz, more preferably from 10 to 50 kHz, more preferably from 10 to 40 kHz, more preferably from 20 to 40 kHz, even more preferably from 25 to 35 kHz, most preferably of about 30 kHz; or
- with an amplitude in the range from 3 to 100 µm, more preferably from 3 to 90 µm, more preferably from 3 to 80 µm, more preferably from 3 to 70 µm, more preferably from 3 to 60 µm, more preferably from 3 to 50 µm, more preferably from 3 to 40 µm, more preferably from 3 to 30 µm, even more preferably from 5 to 30 µm most preferably from 10 to 20 µm; or
- both.

This preferred embodiment is a 153^{rd} embodiment of the invention, that preferably depends on the 152^{nd} embodiment of the invention.

In a preferred embodiment of the method, in step b} the barrier layer moves at a speed of more than 0 m/min, preferably at a speed of at least 10 m/min, more preferably of at least 50 m/min, more preferably at a speed in the range from 50 to 900 m/min, more preferably from 100 to 900 m/min, more preferably from 200 to 900 m/min, more preferably from 300 to 900 m/min, more preferably from 400 to 900 m/min, preferably from 500 to 750 m/min, more preferably from 600 to 700 m/min. This preferred embodiment is a 154^{th} embodiment of the invention, that preferably depends on the 152^{nd} or 153^{rd} embodiment of the invention.

In a preferred embodiment of the method, in step b} the barrier substrate layer is on a side of the barrier material layer which faces the first tool surface. This preferred embodiment is a 155^{th} embodiment of the invention, that preferably depends on any of the 152^{nd} to 154^{th} embodiments of the invention.

The above-described measure may ensure that the areas of the first kind of the first tool surface have an embossing effect primarily on the barrier substrate layer and not primarily, preferably not at all, on the barrier material layer.

In a preferred embodiment of the method, in step b} a single ply of the barrier layer is pressed between the first tool surface and the further tool surface. This preferred embodiment is a 156^{th} embodiment of the invention, that preferably depends on any of the 152^{nd} to 155^{th} embodiments of the invention.

In a preferred embodiment of the method, in step b} the at least region of the barrier layer is pressed between the first tool surface and the further tool surface with a contact force in the range from 50 N to 1kN, preferably from 80 to 600 N, more preferably from 100 to 550 N, more preferably from 120 to 500 N, more preferably from 150 to 450 N, more preferably from 160 to 440 N, more preferably from 170 to 430 N, more preferably from 180 to 420 N, even more preferably from 190 to 410 N, most preferably from 200 to 400 N. This preferred embodiment is a 157^{th} embodiment of the invention, that preferably depends on any of the 152^{nd} to 156^{th} embodiments of the invention.

In a preferred embodiment of the method, step b} further comprises heating the barrier substrate layer in the at least region of the barrier layer. This preferred embodiment is a 158^{th} embodiment of the invention, that preferably depends on any of the 152^{nd} to 157^{th} embodiments of the invention.

Preferably, in step b} the barrier substrate layer is heated in the at least region of the barrier layer while the at least region is pressed between the first tool surface and the further tool surface.

Additionally or alternatively preferred, in step b} a temperature of the barrier substrate layer in the at least region is increased by at least 50 K, preferably at least 60 K, more preferably at least 70 K, more preferably at least 80 K, more preferably at least 90 K, more preferably at least 100 K. Additionally or alternatively preferred, in step b} a temperature of the barrier substrate layer in the at least region is increased above a Vicat softening temperature of the barrier substrate layer.

In a preferred embodiment of the method, the heating of the barrier substrate layer in the at least region of the barrier layer is effected by an ultrasound treatment. This preferred embodiment is a 159^{th} embodiment of the invention, that preferably depends on the 158^{th} embodiment of the invention.

In a preferred embodiment of the method, the method is a method for treating the barrier layer. This preferred embodiment is a 160^{th} embodiment of the invention, that preferably depends on any of the 152^{nd} to 159^{th} embodiments of the invention.

Preferably, the method is a method for mechanically treating the barrier layer or for mechanically and thermally treating the barrier layer. A preferred form of thermally treating is treating with ultrasound.

Features described as preferred in one category of the invention, for example according to the sheet-like composite, are analogously preferred in an embodiment of the other categories according to the invention, such as the methods and the uses.

If herein a parameter differs or does not differ from another parameter by a certain percentage, this percentage is based on the other parameter.

### Sheet-like composite

All laminates, in particular sheet-like or planar laminates, which are conceivable within the context of the invention and which appear to the person skilled in the art to be suitable in the context of the invention for the production of dimensionally stable foodstuff containers are to be considered as sheet-like composites. Sheet-like composites for the manufacture of food or drink product containers are also referred to as laminates. Such sheet-like composites have a sequence of layers superimposing each other in a sheet-like or planar manner. The sheet-like composites are often composed of a thermoplastic polymer layer, a carrier layer, often made of cardboard or paper, which gives the container its dimensional stability, an optional thermoplastic polymer layer and/or an optional adhesion promoter layer, a barrier layer and at least one further thermoplastic polymer layer. Basically, *"sheet-like composite"* is used herein as a generic term that encompasses both, semi-endless roll material and a blank of such roll material. The blank is preferably designed to produce a single container. The sheet-like composite can be a flat or three-dimensional object. The latter is, in particular the case, if the sheet-like composite has been folded or rolled up.

### Layers of the sheet-like composite

The layers of the layer sequence have been joined to one another in a planar manner, preferably over their entire surfaces. Here, the area of the through-hole in the carrier layer or part of this area may make an exception. Two layers are joined together when their adhesion to each other exceeds Van der Waals forces of attraction. Preferably, layers joined to one another are one selected from the group consisting of joined to one another by coating, laminated together, sealed together, and glued together, or a combination of at least two thereof. Layers joined to one another by coating are preferably joined to one another by melt coating or by vapour deposition. A preferred melt coating is a melt extrusion coating.

Unless stated otherwise, in a layer sequence, every two layers of the layer sequence may follow one another indirectly, i.e. with one or at least two intermediate layers, or directly, i.e. with no intermediate layer. This is the case especially in the form of words in which one layer is superimposed to another layer, or one layer is joined to another layer. A form of words in which a layer sequence comprises enumerated layers means that at least the layers specified are present in the sequence specified. This form of words does not necessarily mean that these layers follow on directly from one another. A form of words in which two layers adjoin one another means that these two layers follow on from one another directly and hence with no intermediate layer. Generally, items which are adjacent to one another or adjoin one another, follow one another directly, i.e., without intermediate item.

### Carrier layer

The carrier layer used may be any material which appears suitable to a person skilled in the art for this purpose and which has sufficient strength and stiffness to impart stability to the container, made from the sheet-like composite, to such an extent that the container in the filled state essentially retains its shape (dimensional stability). Thus, the invention relates to the technical field of dimensionally stable food or drink product containers. Dimensionally stable containers of this kind should in principle be distinguished from pouches and bags, which are usually produced from thinner films.

For the carrier layer, as well as to a number of plastics, preference is given to plant-based fibrous materials, especially pulps, preferably limed, bleached and/or unbleached pulps, with paper, paperboard and cardboard being especially preferred. Thus, a preferred carrier layer comprises a multitude of fibres. The basis weight of the carrier layer is preferably in a range of 120 to 450 g/m², more preferably in a range of 130 to 400 g/m² and most preferably in a range of 150 to 380 g/m². The carrier layer preferably has a bending stiffness in a first direction in a range from 70 to 700 mN, more preferably from 80 to 650 mN. In the case of a carrier layer comprising a plurality of fibres, the first direction is preferably an orientation direction of the fibres. A carrier layer comprising a plurality of fibres further preferably has a bending stiffness in a further direction perpendicular to the first direction in a range from 10 to 350 mN, more preferably from 20 to 300 mN. A preferred planar composite with the carrier layer has a bending stiffness in the first direction in a range of 100 to 700 mN. Further preferably, the aforementioned planar composite has a bending stiffness in the further direction in a range of 50 to 500 mN.

A preferred cardboard generally has a single or multi-layer structure and may be coated on one or both sides with one or more cover layers. Furthermore, a preferred cardboard has a residual moisture content of less than 20 % by weight, preferably from 2 to 15 % by weight and particularly preferably from 4 to 10 % by weight based on the total weight of the cardboard. A particularly preferred cardboard has a multi-layer structure. Furthermore, the cardboard preferably has on the surface facing the environment at least one, but particularly preferably at least two, cover layers known to the skilled person as a *"coating"* or *"paper coating"* (in German: *"Strich"*)*.* Furthermore, a preferred cardboard has a Scott-Bond value (according to Tappi 569) in a range from 100 to 360 J/m², preferably from 120 to 350 J/m² and particularly preferably from 135 to 310 J/m². The above ranges make it possible to provide a composite from which a container can be folded with high tightness, easily and to low tolerances.

Preferably, the carrier layer comprises at least 2, more preferably at least 3, particularly preferably exactly 3 or 5, sub-layers, each of a fibre-containing material, wherein the sub-layers are superimposed to one another and joined to one another. The fibre-containing materials of the individual sub-layers may differ at least partially from one another or may all be the same. A further particularly preferred carrier layer comprises, as superimposed and interconnected sub-layers of a sub-layer sequence, preferably in a direction from an outer side of the carrier layer to an inner side of the carrier layer, a first sub-layer comprising a fibrous material, a second sub-layer comprising a fibrous material and a third sub-layer comprising a fibrous material. The fibre-containing materials of the first to third sub-layers may be the same or different from each other. Furthermore, in addition to the aforementioned layer sequence, a preferred carrier layer includes at least one cover layer as a further sub-layer. Preferably, the layer sequence of first to third sub-layers is superimposed on an outer side of the carrier layer with at least one cover layer as a further sub-layer. Alternatively or additionally preferred, the layer sequence of first to third sub-layers is superimposed on an inner side of the carrier layer with at least one cover layer as a further sub-layer. Preferably, an average fibre length of the plurality of fibres of the fibrous material of the first sub-layer is less than an average fibre length of the plurality of fibres of the fibrous material of the third sub-layer, preferably by 0.1 to 3 mm, more preferably by 0.5 to 2.5 mm, most preferably by 1 to 2.0 mm.

The terms *"paperboard", "cardboard"* and *"paper"* are used herein according to the definitions in the standard DIN 6735:2010. In addition, cardboard is preferably a material that has a combination of properties of paper and paperboard. Further, cardboard preferably has a basis weight in a range of 150 to 600 g/m².

### Cover layer

A preferred cover layer is a *"paper coating"* (in German: *"Strich").* In papermaking, a *"paper coating",* also referred to as *"coating",* is a cover layer comprising inorganic solid particles, preferably pigments and additives. The *"paper coating"* is preferably applied as a liquid phase, preferably as a suspension or dispersion, to a surface of a paper- or cardboard-comprising layer. A preferred dispersion is an aqueous dispersion. A preferred suspension is an aqueous suspension. Another preferred liquid phase includes inorganic solid particles, preferably pigments; a binder; and additives. A preferred pigment is selected from the group consisting of calcium carbonate, kaolin, talc, silicate, a plastic pigment and titanium dioxide. A preferred kaolin is a calcined kaolin. A preferred calcium carbonate is one selected from the group consisting of marble, chalk and a precipitated calcium carbonate (PCC) or a combination of at least two thereof. A preferred silicate is a layered silicate. A preferred plastic pigment is spherical, preferably hollow spherical. A preferred binder is one selected from the group consisting of styrene-butadiene, acrylate, acrylonitrile, a starch and a polyvinyl alcohol or a combination of at least two thereof, acrylate being preferred. A preferred starch is one selected from the group consisting of cationically modified, anionically modified, and fragmented or a combination of at least two thereof. A preferred additive is one selected from the group consisting of a rheology modifier, a shade dye, an optical brightener, a carrier, a flocculant, a deaerator, and a surface energy modifier, or a combination of at least two thereof. A preferred deaerator is a coating colour deaerator, preferably silicone-based or fatty acid-based or both. A preferred surface energy modifier is a surfactant.

### Barrier layer

The barrier layer preferably has sufficient barrier action against oxygen or water vapour or both to allow the production of foodstuff containers from the sheet-like composite. Accordingly, the barrier layer is preferably an oxygen barrier layer or a water vapour barrier layer or both. An oxygen barrier layer has a barrier effect against transmission of oxygen. A water vapour barrier layer has a barrier effect against transmission of water vapour. For this purpose, the barrier layer comprises the barrier material layer. The name of this layer refers to the barrier material layer comprising the material which provides the barrier action. The barrier material layer is a coating or deposited layer which needs a substrate. For this purpose, the barrier layer comprises the barrier substrate layer. The barrier layer mandatorily comprises the barrier material layer and the barrier substrate layer. A preferable barrier layer additionally comprises a further polymer layer which is disposed between the barrier material layer and the barrier substrate layer in the sub-layer sequence. The barrier layer preferably is a prefabricated barrier film which preferably has been laminated to the carrier layer, preferably using the intermediate polymer layer C or the intermediate polymer layer D or both as laminating agents. The barrier layer, preferably, adjoins the inner polymer layer F.

Preferably, the barrier layer has an oxygen transmission rate (OTR) in a range from 0.02 to 40 cm³ oxygen / (m² · day · atm), preferably from 0.03 to 20 cm³ oxygen / (m² · day · atm), more preferably from 0.03 to 10 cm³ oxygen / (m² · day · atm), more preferably from 0.03 to 5 cm³ oxygen / (m² · day · atm), more preferably from 0.03 to 3 cm³ oxygen / (m² · day · atm), more preferably from 0.035 to 2 cm³ oxygen / (m² · day · atm), more preferably from 0.1 to 1 cm³ oxygen / (m² · day · atm), more preferably from 0.2 to 0.9 cm³ oxygen / (m² · day · atm), even more preferably from 0.3 to 0.9 cm³ oxygen / (m² · day · atm), most preferably from 0.4 to 0.8 cm³ oxygen / (m² · day · atm). Additionally or alternatively preferred, the barrier layer has a water vapour transmission rate (WVTR) in a range from 0.01 to 40 g H₂O / (m² · day), preferably from 0.01 to 20 g H₂O / (m² · day), more preferably from 0.01 to 10 g H₂O / (m² · day), more preferably from 0.01 to 5 g H₂O / (m² · day), more preferably from 0.01 to 3 g H₂O / (m² · day), more preferably from 0.01 to 2 g H₂O / (m² · day), more preferably from 0.01 to 1 g H₂O / (m² · day), more preferably from 0.01 to 0.9 g H₂O / (m² · day), more preferably from 0.01 to 0.8 g H₂O / (m² · day), more preferably from 0.01 to 0.7 g H₂O / (m² · day), more preferably from 0.01 to 0.6 g H₂O / (m² · day), more preferably from 0.01 to 0.5 g H₂O / (m² · day), more preferably from 0.01 to 0.4 g H₂O / (m² · day), more preferably from 0.01 to 0.3 g H₂O / (m² · day), even more preferably from 0.01 to 0.2 g H₂O / (m² · day), most preferably from 0.05 to 0.2 g H₂O / (m² · day).

The plane of the barrier layer is a plane in which the barrier layer extends in a sheet-like manner in the flat sheet-like composite. In the flat, i.e., not folded or bent, sheet-like composite the plane of the barrier layer is preferably essentially parallel to both surfaces on opposite sides of the barrier layer.

### Barrier substrate layer

The barrier layer mandatorily comprises the barrier material layer and the barrier substate layer. The barrier substate layer serves as substrate for the barrier material layer. In particular, the barrier substate layer imparts stability to the barrier layer to such an extent that the barrier layer can be rolled up and further processed, in particular laminated, to the carrier layer, substantially without the barrier material layer suffering damage from mechanical stress. In this context, the barrier substrate layer is preferably suitable for being coated with a barrier material to allow for an average thickness of the barrier material layer in the range from 1 nm to 1 µm, preferably from 1 to 500 nm, more preferably from 1 to 300 nm, more preferably from 1 to 100 nm, more preferably from 1 to 90 nm, more preferably from 1 to 80 nm, more preferably from 1 to 70 nm, more preferably from 1 to 60 nm, more preferably from 1 to 50 nm, more preferably from 1 to 40 nm, more preferably from 1 to 30 nm, even more preferably from 1 to 20 nm, most preferably from 5 to 20 nm. Preferably, a surface of the barrier substate layer is sufficiently smooth for this purpose. A preferred barrier layer comprises the barrier substrate layer in a proportion in the range from 95 to 99.99 wt.-%, preferably from 97 to 99.97 wt.-%, more preferably from 98 to 99.95 wt.-%, even more preferably from 99 to 99.9 wt.-%, most preferably from 99.5 to 99.9 wt.-%, based in each case on the weight of the barrier layer.

Preferably, the barrier substrate layer comprises a polyolefin in a proportion in the range from 50 to 100 wt.-%, preferably from 60 to 100 wt.-%, more preferably from 70 to 100 wt.-%, more preferably from 80 to 100 wt.-%, more preferably from 90 to 100 wt.-%, even more preferably from 95 to 100 wt.-%, most preferably from 98 to 100 wt.-%, in each case based on the weight of the barrier substrate layer. Preferably, the barrier substrate layer consists of the polyolefin. A preferred polyolefin of the barrier substrate layer is a polyethylene (PE) or a polypropylene (PP) or both, where PP is particularly preferred. The polyolefin of the barrier substrate layer is preferably oriented. The oriented polyolefin has preferably been monoaxially oriented or biaxially oriented. A particularly preferred polyolefin is a monoaxially oriented PE (MoPE) or a biaxially oriented polypropylene (BoPP).

Preferably, the barrier substrate layer is a polyolefin layer. A polyolefin layer is a layer which essentially consists of one selected from the group consisting of a polyolefin homopolymer, a polyolefin copolymer, a mixture of polyolefin homopolymers, and a mixture of polyolefin co-polymers, or a combination of at least two thereof. A preferred the barrier substrate layer is a polyethylene layer. A polyethylene layer is a layer which essentially consists of one selected from the group consisting of a polyethylene homopolymer, a polyethylene copolymer, a mixture of polyethylene homopolymers, and a mixture of polyethylene copolymers, or a combination of at least two thereof. Another preferred the barrier substrate layer is a polypropylene layer. A polypropylene layer is a layer which essentially consists of one selected from the group consisting of a polypropylene homopolymer, a polypropylene copolymer, a mixture of polypropylene homopolymers, and a mixture of polypropylene copolymers, or a combination of at least two thereof. Additionally or alternatively preferred, the barrier substrate layer is monoaxially oriented or biaxially oriented. A particularly preferred barrier substrate layer is a monoaxially oriented polyethylene layer. Another particularly preferred barrier substrate layer is a biaxially oriented polypropylene layer.

### Barrier material layer

The barrier material layer used may be any material which is suitable for a person skilled in the art for this purpose and which has sufficient barrier action, especially with respect to oxygen or water vapour or both. For this purpose, the barrier material layer preferably comprises a barrier material in a proportion of at least 50 wt.-%, preferably of at least 60 wt.-%, more preferably of at least 70 wt.-%, more preferably of at least 80 wt.-%, more preferably of at least 90 wt.-%, more preferably of at least 95 wt.-%, even more preferably of at least 98 wt.-%, most preferably of 100 wt.-%, based in each case on the weight of the barrier material layer, wherein the barrier material provides the barrier action with respect to oxygen or water vapour or both. Preferably, the barrier material layer consists of the barrier material. A preferred barrier layer comprises the barrier material layer or a barrier material in a proportion in the range from 0.01 to 5 wt.-%, preferably from 0.03 to 3 wt.-%, more preferably from 0.05 to 2 wt.-%, even more preferably from 0.1 to 1 wt.-%, most preferably from 0.1 to 0.5 wt.-%, based in each case on the weight of the barrier layer.

The barrier material layer is preferably an uninterrupted layer. Additionally or alternatively preferred, the barrier material layer is a film or a coating. Here, a preferred film is a thin film. A thin film is a film which is obtainable by thin-film deposition. Thus, a preferred barrier material layer is obtainable by deposition. A preferred deposition is a thin-film deposition. Most thin-film deposition techniques allow to control the layer thickness within a few tens of nanometres. A preferred technique of thin-film deposition is a physical deposition or a chemical deposition or both. Chemical deposition means that a fluid undergoes a chemical change at a solid surface, leaving a solid layer, here the barrier material layer. A preferred chemical deposition is based on a fluid selected from the group consisting of a liquid precursor, a gaseous precursor, and a plasma, or a combination of at least two thereof. A preferred chemical deposition which is based on a liquid precursor is plating, preferably electroplating, more preferably electrochemical deposition; chemical solution deposition (CSD), chemical bath deposition (CBD), spin coating, or dip coating. A preferred chemical deposition which is based on a gaseous precursor is chemical vapour deposition (CVD) or plasma enhanced chemical vapour deposition (PECVD). Physical deposition uses mechanical, electromechanical or thermodynamic means to produce a thin film of solid, here the barrier material layer. A preferred physical deposition is physical vapour deposition (PVD). Thus, the barrier material layer is preferably obtainable by depositing a barrier material onto the barrier substrate layer, or the further polymer layer which is superimposed on the barrier substrate layer. In any case, the barrier substrate layer acts as substrate for the barrier material which forms the barrier material layer.

A preferred barrier material is selected from the group consisting of an oxide, a metal, a silicon-containing compound and a barrier polymer, or a combination of at least two of these. A preferred oxide is an oxide of one selected from the group consisting of one or more metals, one or more semimetals and one or more nonmetals, or a combination of at least two of these. A preferred oxide of a metal is one selected from the group consisting of an aluminium oxide (AlOx), for example Al₂O₃; a magnesium oxide, for example MgO; a titanium oxide, for example TiO₂; a tin oxide, for example an indium tin oxide (ITO), Zn₂SnO₄, SnO, Sn₂O₃ and SnO₂; a zinc oxide, for example ZnO; and an indium oxide, for example an indium tin oxide (ITO), InO, In₂O₃ and InO₂, or a combination of at least two of these. A preferred oxide of a semimetal is a silicon oxide (SiOx), for example SiO₂. A preferred silicon-containing compound is a silicon nitride, for example Si₃N₄, or an organosilicon compound. A preferred organosilicon compound is a siloxane. A preferred barrier polymer is a vinyl polymer or a polyacrylic acid or both. A preferred vinyl polymer is a polyvinylidene chloride (PVDC) or a polyvinyl alcohol (PVOH) or both. A particularly preferred barrier material is aluminium, an aluminium oxide, a combination of multiple aluminium oxides, a silicon oxide, or a combination of multiple silicon oxides. A particularly preferred barrier material layer comprises, preferably consists of, aluminium, AlOx or SiOx.

### Hole-covering layer

A hole-covering layer is a layer of the sheet-like composite which comprises a hole-covering region, i.e., a region which covers the through-hole in the carrier layer. The term "hole-covering layer" refers to the entire layer, not only to its hole-covering region. This, the hole-covering region is the region of a hole-covering layer which covers the through-hole in the carrier layer.

### Polymer layers

In the following, the term *"polymer layer"* refers in particular to the outer polymer layer A, the intermediate polymer layers C and D and the inner polymer layers F, G and H. The *"outer"* in *"outer polymer layer A"* refers to the layer being superimposed to the carrier layer on a side of the carrier layer which faces away from the barrier layer, i.e. to the outer side of the carrier layer. The *"intermediate"* in *"intermediate polymer layer C",* and *"intermediate polymer layer D"* refers to the respective layer being located between the carrier layer and the barrier layer. The *"inner"* in *"inner polymer layer F", "inner polymer layer* G" and *"inner polymer layer H"* refers to the respective layer being superimposed to the barrier layer on a side of the barrier layer which faces away from the carrier layer, i.e. to the inner side of the barrier layer.

The polymer layers are each based on a polymer or a polymer blend, i.e., the polymer layers comprise a majority of the polymer or polymer blend. A preferred polymer is a thermoplastic polymer, more preferably a polyolefin. The polymer layers are preferably incorporated or applied into the sheet-like composite in an extrusion process, preferably by melt extrusion coating. In addition to the polymer or polymer blend, each polymer layer may comprise further constituents. The further constituents of the polymer layers are preferably constituents which do not adversely affect the behaviour of the polymer melt when applied as a layer. The further constituents may be, for example, inorganic compounds, such as metal salts, or further plastics, such as further thermoplastics.

In general, suitable polymers for the polymer layers are in particular those which are easy to process due to good extrusion behaviour. Among these, polymers obtained by chain polymerisation are suitable, in particular polyolefins, whereby cyclic olefin co-polymers (COC), polycyclic olefin co-polymers (POC), in particular polyethylene (PE) and polypropylene (PP), are particularly preferred and polyethylene is especially preferred. Among the polyethylenes, HDPE (high density polyethylene), MDPE (medium density polyethylene), LDPE (low density polyethylene), LLDPE (linear low density polyethylene) and VLDPE (very low density polyethylene) as well as blends of at least two of them are preferred. Suitable polymers, preferably, have a melt flow rate (MFR) in a range from 1 to 25 g/10 min, preferably in a range from 2 to 20 g/10 min and particularly preferably in a range from 2,5 to 15 g/10 min. Additionally or alternatively preferred, suitable polymer layers have a density in a range of 0.890 g/cm³ to 0.980 g/cm³, preferably in a range of 0.895 g/cm³ to 0.975 g/cm³, and more preferably in a range of 0.900 g/cm³ to 0.970 g/cm³. The polymer layers preferably have at least one melting temperature in a range from 80 to 155 °C, preferably in a range from 90 to 145 °C, and more preferably in a range from 95 to 135 °C.

### Outer polymer layer A

The outer polymer layer A preferably is a thermoplastic polymer layer. The outer polymer layer A preferably comprises, preferably consists of, at least one polyolefin, more preferably at least one polyethylene or at least one polypropylene or both. Preferred polyethylenes are LDPE and HDPE as well as mixtures thereof. A particularly preferred polyethylene is a LDPE. In this context, a preferred LDPE has a melt flow index in the range from 2 to 6 g/10 min, preferably from 3 to 5 g/10 min, more preferably from 3.5 to 4.5 g/10 min. Preferably, the outer polymer layer A comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, more preferably at least 90 % by weight, most preferably 100 % by weight, in each case based on the total weight of the outer polymer layer A. A preferred outer polymer layer A comprises at least 50 % by weight, preferably at least 60 % by weight, more preferably at least 70 % by weight, more preferably at least 80 % by weight, even more preferably at least 90 % by weight, most preferably 100 % by weight, in each case based on the weight of the outer polymer layer A, of one or more LDPEs. A preferred outer polymer layer A consists of one or more LDPEs. Preferably, the outer polymer layer A adjoins the carrier layer. Preferably, the outer polymer layer A covers the through-hole in the carrier layer as a hole-covering layer. Preferably, the outer polymer layer A is obtainable from a polymer composition A. A preferred polymer composition A is a polymer granulate or a polymer melt. Preferably, the polymer composition A consists of the same material or the same materials as the outer polymer layer A. If the outer polymer layer A consists of more than one material, the polymer composition A preferably consists of the same materials in the same proportions.

### Intermediate polymer layer C

The intermediate polymer layer C preferably is a thermoplastic polymer layer. The intermediate polymer layer C preferably comprises, preferably consists of, at least one polyolefin, more preferably at least one polyethylene or at least one polypropylene or both. Here, particularly preferred polyethylenes are LDPEs and HDPEs. In this context, a preferred LDPE has a melt flow index in the range from 2 to 6 g/10 min, preferably from 3 to 5 g/10 min, more preferably from 3.5 to 4.5 g/10 min. Preferably, the intermediate polymer layer C comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, more preferably at least 90 % by weight, most preferably 100 % by weight, in each case based on the total weight of the intermediate polymer layer C. A preferred polymer layer C comprises at least 50 % by weight, preferably at least 60 % by weight, more preferably at least 70 % by weight, more preferably at least 80 % by weight, even more preferably at least 90 % by weight, most preferably 100 % by weight, in each case based on the weight of the intermediate polymer layer C, of one or more PEs. Preferably, the intermediate polymer layer C is disposed between the carrier layer and the intermediate polymer layer D. Additionally or alternatively preferred, the intermediate polymer layer C adjoins the carrier layer or the intermediate polymer layer D or both. Preferably, the intermediate polymer layer C covers the through-hole in the carrier layer as a hole-covering layer. Preferably, the intermediate polymer layer C is obtainable from a polymer composition C. A preferred polymer composition C is a polymer granulate or a polymer melt. Preferably, the polymer composition C consists of the same material or the same materials as the intermediate polymer layer C. If the intermediate polymer layer C consists of more than one material, the polymer composition C preferably consists of the same materials in the same proportions.

### Intermediate polymer layer D

The intermediate polymer layer D preferably is an adhesion promoter layer. Accordingly, the intermediate polymer layer D is preferably based on an adhesion promoter polymer. Preferably, the intermediate polymer layer D consists of an adhesion promoter polymer. Preferably, the intermediate polymer layer D is disposed between the intermediate polymer layer C and the barrier layer. Additionally or alternatively preferred, the intermediate polymer layer D adjoins the barrier layer or the intermediate polymer layer C or both. Preferably, the intermediate polymer layer D covers the through-hole in the carrier layer as a hole-covering layer. Preferably, the intermediate polymer layer D is obtainable from a polymer composition D. A preferred polymer composition D is a polymer granulate or a polymer melt. Preferably, the polymer composition D consists of the same material or the same materials as the intermediate polymer layer D. If the intermediate polymer layer D consists of more than one material, the polymer composition D preferably consists of the same materials in the same proportions.

### Inner polymer layer F

The inner polymer layer F preferably is a thermoplastic polymer layer. The inner polymer layer F preferably comprises, preferably consists of, at least one polyolefin, more preferably at least one polyethylene or at least one polypropylene or both. Here, particularly preferred polyethylenes are LDPEs, HDPEs and LLDPEs, preferably mLLDPEs. A preferred inner polymer layer F comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, more preferably at least 90 % by weight, most preferably 100 % by weight, in each case based on the total weight of the inner polymer layer F. Preferably, the inner polymer layer F comprises a polymer blend in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, most preferably at least 90 % by weight, in each case based on the total weight of the inner polymer layer H. It is particularly preferred that the inner polymer layer F consists of the polymer blend. A preferred polymer blend comprises at least two polyolefins, more preferably at least two polyethylenes. Preferred polyethylenes are those given above for the inner polymer layer F.

Preferably, the inner polymer layer F covers the through-hole in the carrier layer as a hole-covering layer. Preferably, the inner polymer layer F is disposed between the barrier layer and the inner polymer layer G. Preferably, the inner polymer layer F adjoins the barrier layer or the inner polymer layer G or both. Preferably, the inner polymer layer F is obtainable from a polymer composition F. A preferred polymer composition F is a polymer granulate or a polymer melt. Preferably, the polymer composition F consists of the same material or the same materials as the inner polymer layer F. If the inner polymer layer F consists of more than one material, the polymer composition F preferably consists of the same materials in the same proportions.

Preferably, the inner polymer layer F consists of a mPE or of the polymer blend. In a preferred embodiment of the invention, the mPE of the inner polymer layer F has at least one of, preferably two of, more preferably all of, the following features:
a] the mPE has a molecular weight distribution with
   i] exactly 1 local maximum, or
   ii] exactly 2 local maxima;
b] the mPE has
   i] exactly 1 melting temperature, or
   ii] exactly 2 melting temperatures;
c] the mPE is a mLLDPE;
d] the mPE comprises
   i] C₈-α-olefin-derived units, or
   ii] C₆-α-olefin-derived units.

A particularly preferred mPE of the inner polymer layer F has one of the following combinations of the above features: a], b], c], d], a] + b] + c] + d], a]i], a]ii], b]i], b]ii], d]i], d]ii], a]i] + b]i], a]i] + b]i] + c], a]i] + b]i] + c] + d]i], c] + d]i], b]i] + c], a]ii] + b]ii], a]ii] + b]ii] + c], a]ii] + b]ii] + c] + d]ii], c] + d]ii], b]ii] + c].

A preferred LDPE of the inner polymer layer F, preferably of the polymer blend, has a melt flow index in the range from 5 to 9 g/10 min, preferably from 6 to 8 g/10 min, more preferably from 6.5 to 7.5 g/10 min.

### Inner polymer layer G

The inner polymer layer G preferably is a thermoplastic polymer layer. The inner polymer layer G preferably comprises, preferably consists of, at least one polyolefin, more preferably at least one polyethylene or at least one polypropylene or both. Here, particularly preferred polyethylenes are HDPEs and LDPEs. In this context, a preferred LDPE has a melt flow index in the range from 5 to 9 g/10 min, preferably from 6 to 8 g/10 min, more preferably from 6.5 to 7.5 g/10 min. Preferably, the inner polymer layer G comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, more preferably at least 90 % by weight, most preferably 100 % by weight, in each case based on the total weight of the inner polymer layer G. A preferred inner polymer layer G comprises at least 50 % by weight, preferably at least 60 % by weight, more preferably at least 70 % by weight, more preferably at least 80 % by weight, even more preferably at least 90 % by weight, most preferably 100 % by weight, in each case based on the weight of the inner polymer layer G, of one or more LDPEs. A preferred inner polymer layer G consists of one or more LDPEs. Preferably, the inner polymer layer G is disposed between the inner polymer layer F and the inner polymer layer H. Preferably, the inner polymer layer G adjoins the inner polymer layer F or the inner polymer layer H or both. Preferably, the inner polymer layer G covers the through-hole in the carrier layer as a hole-covering layer. Preferably, the inner polymer layer G is obtainable from a polymer composition G. A preferred polymer composition G is a polymer granulate or a polymer melt. Preferably, the polymer composition G consists of the same material or the same materials as the inner polymer layer G. If the inner polymer layer G consists of more than one material, the polymer composition G preferably consists of the same materials in the same proportions

### Inner polymer layer H

The inner polymer layer H preferably is a thermoplastic polymer layer. The inner polymer layer H preferably comprises, preferably consists of, at least one polyolefin, more preferably at least one polyethylene or at least one polypropylene or both. Here, particularly preferred polyethylenes are LDPEs and LLDPEs, preferably mLLDPEs. In this context, a preferred LDPE has a melt flow index in the range from 5 to 9 g/10 min, preferably from 6 to 8 g/10 min, more preferably from 6.5 to 7.5 g/10 min. A preferred inner polymer layer H comprises the at least one polyolefin, more preferably the at least one polyethylene or the at least one polypropylene or both together, in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, more preferably at least 90 % by weight, most preferably 100 % by weight, in each case based on the total weight of the inner polymer layer H.

Preferably, the inner polymer layer H comprises a polymer blend in a proportion of at least 20 % by weight, more preferably at least 30 % by weight, more preferably at least 40 % by weight, more preferably at least 50 % by weight, more preferably at least 60 % by weight, more preferably at least 70 % by weight, more preferably at least 80 % by weight, more preferably at least 90 % by weight, most preferably 100 % by weight, in each case based on the total weight of the inner polymer layer H. It is particularly preferred that the inner polymer layer H consists of the polymer blend. A preferred polymer blend comprises at least two polyolefins, more preferably at least two polyethylenes. Preferred polyethylenes are those given above for the inner polymer layer H. In a preferred embodiment, the inner polymer layer H comprises the LDPE, preferably of the polymer blend, in a proportion in a range from 50 to 90 wt.-%, preferably from 60 to 80 wt.-%, most preferably from 65 to 75 wt.-%, and the mPE, preferably of the polymer blend, in a proportion in a range from 10 to 50 wt.-%, preferably from 20 to 40 wt.-%, most preferably from 25 to 35 wt.-%, wherein the proportions in wt.-% are in each case based on the total weight of the inner polymer layer H. In a particularly preferred embodiment, the inner polymer layer H comprises the LDPE, preferably of the polymer blend, in a proportion in a range from 65 to 75 wt.-%, and the mPE, preferably of the polymer blend, in a proportion in a range from 25 to 35 wt.-%, wherein the proportions in wt.-% are in each case based on the total weight of the inner polymer layer H. In a further preferred embodiment, the inner polymer layer H comprises the LDPE, preferably of the polymer blend, in a proportion in a range from 5 to 40 wt.-%, preferably from 10 to 30 wt.-%, most preferably from 15 to 25 wt.-%, and the mPE, preferably of the polymer blend, in a proportion in a range from 60 to 95 wt.-%, preferably from 70 to 90 wt.-%, most preferably from 75 to 85 wt.-%, wherein the proportions in wt.-% are in each case based on the total weight of the inner polymer layer H.

Preferably, the inner polymer layer H is the innermost layer of the sheet-like composite. Thus, the inner surface of the sheet-like composite is preferably a surface of the inner polymer layer H. Additionally or alternatively preferred, the inner polymer layer H adjoins the inner polymer layer G. Preferably, the inner polymer layer H covers the through-hole in the carrier layer as a hole-covering layer. Preferably, the inner polymer layer H is obtainable from a polymer composition H. A preferred polymer composition H is a polymer granulate or a polymer melt. Preferably, the polymer composition H consists of the same material or the same materials as the inner polymer layer H. If the inner polymer layer H consists of more than one material, the polymer composition H preferably consists of the same materials in the same proportions.

### Further polymer layer

If present, the further polymer layer is disposed between the barrier substrate layer and the barrier material layer. Preferably, the further polymer layer adjoins the barrier substrate layer or the barrier material layer or both. A preferred further polymer layer comprises a polyvinyl alcohol (PVOH) or an ethylene vinyl alcohol (EVOH) or a blend of both, in each case preferably in a proportion of at least 50 wt.-%, more preferably at least 60 wt.-%, more preferably at least 70 wt.-%, more preferably at least 80 wt.-%, more preferably at least 90 wt.-%, even more preferably at least 95 wt.-%, in each case based on the weight of the further polymer layer. Preferably, the further polymer layer essentially consists of the PVOH or the EVOH or the blend of both. Preferably, the sublayer sequence comprises the further polymer layer. In this case, the barrier layer comprises the further polymer layer, i.e. the further polymer layer is a sublayer of the barrier layer. A preferred barrier layer is a prefabricated film which has been laminated to the carrier layer. In the technical field of prefabricated films for packaging, the further polymer layer may also be referred to as a skin layer as it forms a thin skin of the barrier substrate layer.

### Polyolefin

In the context of the invention, a preferred polyolefin is a polyethylene (PE) or a polypropylene (PP) or both. A preferred polyethylene is one selected from the group consisting of a LDPE, a LLDPE, and a HDPE, or a combination of at least two thereof. A further preferred polyolefin is a mPolyolefin (polyolefin produced by means of a metallocene catalyst). Suitable polyethylenes have a melt flow rate (MFI - melt flow index = MFR - melt flow rate) in a range from 1 to 25 g/10 min, preferably in a range from 2 to 20 g/10 min and particularly preferably in a range from 2.5 to 15 g/10 min, and/or a density in a range of 0.910 g/cm³ to 0.935 g/cm3, preferably in a range of 0.912 g/cm³ to 0.932 g/cm³, and more preferably in a range of 0.915 g/cm³ to 0.930 g/cm³.

### mPolymer

A mPolymer is a polymer produced by means of a metallocene catalyst. A metallocene is an organometallic compound in which a central metal atom is located between two organic ligands, such as cyclopentadienyl ligands. A preferred mPolymer is a mPolyolefin, preferably a mPolyethylene (mPE) or a mPolypropylene or both. A preferred mPolyethylene is one selected from the group consisting of a mLDPE, a mLLDPE, and a mHDPE, or a combination of at least two thereof. A preferred mPolyolefin is characterised by at least a first melting temperature and a second melting temperature. Preferably, the mPolyolefin is characterised by a third melting temperature in addition to the first and second melting temperatures. A preferred first melting temperature is in a range from 84 to 108 °C, preferably from 89 to 103 °C, more preferably from 94 to 98 °C. A preferred second melting temperature is in a range from 100 to 124 °C, preferably from 105 to 119 °C, more preferably from 110 to 114 °C.

### Polypropylene

In the context of the invention, in particular in the context of the barrier substrate layer, a preferred polypropylene is a homopolymer or a copolymer which comprises propylene-derived units in a proportion the range from 60 to 100 wt.-%, preferably from 70 to 100 wt.-%, more preferably from 80 to 100 wt.-%, more preferably from 85 to 100 wt.-%, more preferably from 90 to 100 wt.-%, more preferably from 95 to 100 wt.-%, even more preferably from 98 to 100 wt.-%, most preferably from 99 to 100 wt.-%, based in each case on the weight of the polypropylene. Additionally or alternatively preferred, the polypropylene comprises C₂-α-olefin-derived units, or C₄ to C₁₀-α-olefin-derived units, or both in a proportion the range from 0 to 40 wt.-%, preferably from 1 to 30 wt.-%, more preferably from 5 to 20 wt.-%, even more preferably from 5 to 15 wt.-%, most preferably from 5 to 10 wt.-%, based in each case on the weight of the polypropylene. The polypropylene may be produced by any suitable process which is known to the skilled person using any suitable catalyst which is known to the skilled person. A preferred polypropylene has been produced using a Ziegler-Natter catalyst, or a single-site catalyst, or both. A preferred single-site catalyst is a metallocene-catalyst. Additionally or alternatively preferred, the polypropylene has been produced by a process, selected from the group, consisting of a solution process, a slurry process, a high pressure process, and a gas phase process, or a combination of at least two thereof.

### Colour application

Preferably, the colour application is a printed layer or a decoration or both. Additionally or alternatively preferred, the colour application is disposed between the outer polymer layer A and the carrier layer, or superimposed to the outer polymer layer A on a side of the outer polymer layer A which faces away from the carrier layer. In the latter case, the colour application is preferably not superimposed by any layer of the sheet-like composite on the side of the colour application which faces away from the carrier layer. Preferably, the colour application adjoins the outer polymer layer A or the carrier layer or both. Preferably, the colour application includes at least one colourant, more preferably at least 2, more preferably at least 3, more preferably at least 4, even more preferably at least 5 and most preferably at least 6 colourants.

### Colourant

Useful colourants include both solid and liquid colourants that are known to the person skilled in the art and are suitable for the present invention. According to DIN 55943:2001-10, colourant is the collective term for all colouring substances, especially for dyes and pigments. A preferred colourant is a pigment. A preferred pigment is an organic pigment. Pigments that are notable in connection with the invention are especially the pigments mentioned in DIN 55943:2001-10 and those mentioned in *"*Industrial Organic Pigments, Third Edition" (Willy Herbst, Klaus Hunger Copyright© 2004 WILEY-VCH Verlag GmbH & Co. KGaA, Weinheim ISBN: 3-527-30576-9). A pigment is a colourant that is preferably insoluble in the application medium. A dye is a colourant that is preferably soluble in the application medium.

### Adhesion promoter polymer/adhesion promoter layer

An adhesion promoter layer is a layer of the sheet-like composite that includes at least one adhesion promoter polymer in a proportion which is sufficient for the adhesion promoter layer to improve adhesion between layers adjacent to the adhesion promoter layer. Accordingly, the adhesion promoter layers are preferably polymer layers. An adhesion promoter layer may be located between every two layers of the sheet-like composite which do not adjoin one another. Suitable adhesion promoter polymers in an adhesion promoter layer are all polymers which, by functionalisation by means of suitable functional groups, are suitable for producing a firm bond by forming ionic bonds or covalent bonds to a surface of a respective adjacent layer. A preferred adhesion promoter polymer is a functionalised polyolefin. A preferred functionalised polyolefin is an acrylic acid copolymer obtained by co-polymerisation of ethylene with an acrylic acid.

According to the invention, it is preferred that the adhesion between the carrier layer, a polymer layer or the barrier layer to the respective next layer is at least 0.5 N/15mm, preferably at least 0.7 N/15mm and particularly preferably at least 0.8 N/15mm. In one embodiment according to the invention, it is preferred that the adhesion between a polymer layer and a carrier layer is at least 0.3 N/15mm, preferably at least 0.5 N/15mm and particularly preferably at least 0.7 N/15mm. Furthermore, it is preferred that the adhesion between the barrier layer and a polymer layer is at least 0.8 N/15mm, preferably at least 1.0 N/15mm and particularly preferably at least 1.4 N/15mm. In the case that the barrier layer indirectly follows a polymer layer via an adhesion promoter layer, it is preferred that the adhesion between the barrier layer and the adhesion promoter layer is at least 1.8 N/15mm, preferably at least 2.2 N/15mm and particularly preferably at least 2.8 N/15mm. In an embodiment, the adhesion between the individual layers is so strong that the adhesion test results in a tearing of the carrier layer, in particular, in the case of cardboard as the carrier layer in a so-called cardboard fibre tear.

### Outer surface

The outer surface of the sheet-like composite is a surface of the sheet-like composite which is intended to be in contact with the environment of the container in a container to be produced from the sheet-like composite. This does not contradict with the outer surface in various regions of the composite being folded onto itself and joined to itself, for example sealed to itself, in individual regions of the container.

### Inner surface

The inner surface of the sheet-like composite is a surface of the sheet-like composite which is intended to be in contact with the contents of the container, preferably a food or drink product, in a container to be produced from the sheet-like composite.

### Crease line

In the context of the invention, a crease line, is a linear material modification intended to facilitate folding of the sheet-like composite or blank thereof along the crease line. In particular, the crease line is intended to allow a fold to be produced as precisely as possible along the crease line. Accordingly, a closed container can be formed from the sheet-like composite or a blank thereof, in each case having a corresponding crease line pattern consisting of multiple crease lines, by folding along the crease lines. The sheet-like composite may include multiple such crease line patterns, each of which is arranged and configured to form a respective container. Preferably, all the crease line patterns of the sheet-like composite are identical. Thus, the term *"crease line"* does not refer to the material modification which is caused by folding. In other words, the term *"crease line"* does not refer to a fold.

Along the crease line, the carrier layer preferably has a linear depression, preferably in the form of a linear material displacement, on one side, preferably the side which faces the outer surface. On the opposite side, preferably the side of the inner surface, the carrier layer preferably has a bulge along the crease line.

In addition to the aforementioned folding, the production of the closed container includes the joining of areas of the sheet-like composite that have been contacted by way of the folding. Creasing tools are used to introduce the crease lines into the carrier layer, a process known as creasing. A creasing tool in the context of the invention may be any tool suitable for creasing a sheet-like composite or a carrier layer. For creasing, the creasing tool preferably includes a linear elevation which has a shape of the linear depression. By contacting the sheet-like composite or carrier layer with the linear elevation, the linear depression can be introduced into the sheet-like composite or carrier layer. Thus, the creasing tool can also be referred to as a pressing tool. As a counterpart to the aforementioned positive tool, the creasing tool may also include a negative tool. The negative tool includes a linear recess, which may also be referred to as groove-shaped. The linear recess preferably has, in a direction of its linear extension, the shape of the linear elevation of the positive tool and is further configured to at least partially receive material of the sheet-like composite or carrier layer displaced by the positive tool during creasing.

### Extruding / extruder

In the context of the invention, every extruder known to the skilled person and which appears to him to be suitable for purposes of the invention comes into consideration. An extruder is a device for shaping a mass, preferably a polymer mass, by pressing through a shaping orifice. A preferred extruder is a screw extruder. A melt extrusion coating is an application of a mass by pressing a melt, forming the mass, through the shaping orifice of an extruder onto a substrate so that a planar layer of the mass superimposing the substrate is obtained. In the case of a polymer composition as a mass, the mass is preferably melted for extrusion coating. During extrusion, the polymers are typically heated to temperatures of 210 to 350 °C, measured at the molten polymer film below the exit at the extruder die. Extrusion can be carried out by means of commercially available extrusion tools known to the person skilled in the art, such as extruders, extruder screws, feedblocks, etc. At the end of the extruder there is preferably an orifice through which the polymer melt is pressed. The orifice can have any shape that allows the polymer melt to be extruded. For example, the orifice may be angular, oval or round. Preferably, the orifice has the shape of a slot of a funnel. After the melt layer has been applied to the substrate by means of the method described above, the melt layer is allowed to cool for the purpose of heat-setting, this cooling preferably being effected by quenching via contact with a surface maintained at a temperature in a range from 5 to 50 °C, more preferably in a range from 10 to 30 °C. Subsequently, at least the flanks are separated from the surface. The separation can be carried out in any way that is familiar to the skilled person and appears suitable in order to separate the flanks quickly, as accurately as possible and cleanly. Preferably, the separation is carried out by means of a knife, laser beam or water jet, or a combination of two or more of these, whereby the use of knives, in particular a pot knife, is particularly preferred.

### Laminating

Prefabricated films or layers may be joined to one another by laminating. In this case, the prefabricated layers or films are joined with the aid of one or more suitable laminating agents. A preferred laminating agent comprises, preferably consists of, a polymer composition from which a thermoplastic polymer layer, preferably the intermediate polymer layer C, or an adhesion promoter layer, preferably the intermediate polymer layer D, is obtainable.

### Joining

Any joining method which appears to the skilled person to be suitable for use according to the invention and by which a sufficiently strong connection can be obtained may be considered in the context of the invention. A preferred joining method is a material-to-material joining method. A material-to-material joint is understood herein to be a joint between joining partners which is produced by attractive forces between materials or within a material. A distinction must be made between this and, in particular, form-fitting and friction-fitting joints that are created by geometric shapes or frictional forces. A preferred material-to-material joining method may be one selected from the group consisting of a sealing, a welding, and a gluing, or a combination of at least two of them. In the cases of sealing and welding, the joint is created by means of a liquid and its solidification. In the case of gluing, chemical bonds are formed between the surfaces of the two objects to be joined, which create the joint. It is often advantageous in the case of sealing, welding or gluing to press the surfaces to be joined together. A preferred pressing of two layers is a pressing of a respective first surface of a first of the two layers onto a second surface of the second of the two layers facing the first surface over at least 20 %, preferably at least 30 %, more preferably at least 40 %, more preferably at least 50 %, more preferably at least 60 %, more preferably at least 70 %, still more preferably at least 80 %, still more preferably at least 90 %, most preferably at least 95 %, of the first surface. A particularly preferred joining is a sealing or welding. A preferred sealing or welding includes as steps a contacting, a heating and a pressing, wherein the steps are preferably performed in this sequence. Another sequence is also conceivable, in particular the sequence of heating, contacting and pressing.

### Food or drink product

In the context of the invention, the sheet-like composite and the container precursor are preferably designed for production of a food or drink product container, also referred to as foodstuff container. In addition, the closed container according to the invention is preferably a food or drink product container. Food and drink products, also referred to as foodstuff, include all kinds of food and drink known to those skilled in the art for human consumption and also animal feeds. Preferred food and drink products are liquid above 5 °C, for example milk products, soups, sauces, non-carbonated drinks.

### Container precursor

A container precursor is a preliminary stage of the container that is created during the production of a, preferably closed, container. In this case, the container precursor includes the sheet-like composite or a blank thereof. The sheet-like composite can be unfolded or folded. Preferably, the container precursor consists of the blank. A preferred container precursor is cut to size and designed to produce a single, preferably closed, container. A preferred container precursor which is cut to size and designed to produce a single container is also referred to as a sleeve. Here the sleeve includes the blank folded, preferably along at least 2 longitudinal folds, more preferably along 4 longitudinal folds. These longitudinal folds are preferably, but not necessarily, arranged and configured to form longitudinal fold edges of a closed container formed at least in part from the container precursor. Further, the sleeve includes a longitudinal seam along which a first longitudinal edge of the blank is joined to a further longitudinal edge. Here, the sleeve is open in a top region and a bottom region. A preferred container precursor is formed in one piece.

### Container

The closed container according to the invention may have a multitude of different forms, but preference is given to an essentially cuboidal structure. In addition, the full area of the container may be formed from the sheet-like composite or a blank thereof, or it may have a two-part or multipart construction. In the case of a multipart construction, it is conceivable that, as well as the sheet-like composite, other materials are also used, for example plastic, which can be used especially in the top or base regions of the container. In this context, however, it is preferable that the container is formed from the sheet-like composite to an extent of at least 50 %, especially preferably to an extent of at least 70 % and further preferably to an extent of at least 90 % of the area. In addition, the container may have a device for emptying the contents. This may be formed, for example, from a polymer or mixture of polymers and be attached on the outer face of the container. It is also conceivable that this device has been integrated into the container by *"direct injection moulding".* In a preferred configuration, the container according to the invention has at least one fold edge. Preferably, a number of fold edges of the container is in the range from 4 to 22, especially preferably from 7 to 12. Fold edges in the context of the present invention are understood to mean regions which arise in the folding of the sheet-like composite. Examples of fold edges include the longitudinal contact regions between two wall areas of the container, also referred to as longitudinal fold edges herein. In the container, the container walls are preferably the areas of the container framed by the fold edges. Preferably, the interior of a container according to the invention comprises a food or drink product. Preferably, the closed container does not comprise any lid or base, or either, that has not been formed in one piece with the sheet-like composite. A preferred closed container comprises a food or drink product. A preferred closed container is a food or drink product container or a dimensionally stable container or both.

### Edges

Herein, fold edges or folds are defined as the linear regions of the sheet-like composite which are formed by a folding of the sheet-like composite and at which in each case two, preferably flat, regions of the sheet-like composite adjoin each other. Fold edges are to be distinguished from cut edges. Herein, cut edges are the linear regions of the sheet-like composite which delimit the dimensions of the sheet-like composite laterally. The term *"cut edge"* herein does not necessarily mean that the sheet-like composite has actually been cut. The region of the sheet-like composite which runs along a cut edge and which forms the vicinity of the cut edge is referred to herein as edge. In regard of fold edges, cut edges and edges, the term *"longitudinal"* herein means that the respective fold edge, cut edge or edge essentially runs long the height of the container made from the sheet-like composite. In regard of fold edges, cut edges and edges, the term *"transversal"* means that the respective fold edge, cut edge or edge in the plane of the sheet-like composite runs essentially perpendicular to respective longitudinal fold edge, cut edge or edge.

### Through-hole

The through-hole in the carrier layer may have any shape that is known to a person skilled in the art and suitable for various closures or drinking straws. The through-holes often have rounded portions in plan view. Thus, the through-holes may be essentially circular, oval, elliptical or drop-shaped. The area of the through-hole in the carrier layer is the area over which the carrier layer is missing in plan view and which is laterally surrounded by the carrier layer.

The area of a preferred through-hole is a full-surface area, preferably a circular area, an elliptical area or an oval area. A full-surface area is to be distinguished from a linear or loop-shaped area. The shape of the through-hole in the carrier layer usually also predetermines the shape of the opening that is produced either by an openable closure which is connected to the container and through which the content of the container is dispensed from the container after opening, or by a drinking straw in the container. Consequently, the openings of the opened container often have shapes that are comparable to or even the same as the at least one through-hole in the carrier layer. Configurations of the sheet-like composite with a single through-hole primarily serve for letting out the food or drink product located in the container that is produced from the sheet-like composite. A further through-hole may be provided, especially for letting air into the container while the food or drink product is being let out.

The through-hole in the carrier layer is completely covered at least by the hole-covering region of the barrier layer. Thus, the barrier layer is a hole-covering layer. The sheet-like composite may comprise additional hole-covering layers. It is preferred that the hole-covering layers are at least partly joined to one another, preferably to an extent of at least 30 %, preferably at least 70 % and especially preferably at least 90 %, of the area formed by the through-hole. This leads to a good leak-tightness of the container formed from the sheet-like composite, and consequently to a desired long shelf life of the food or drink products kept in the container. It is also preferred that the hole-covering layers are joined to one another at the edges of the through-hole and preferably lie against the edges joined to one another, in order in this way to achieve an improved leak-tightness over a join that extends across the entire area of the through-hole.

### Opening/opening aid

The opening of the container is usually brought about by at least partially destroying the hole-covering layer(s) that cover(s) the through-hole. This destruction can be effected by cutting, pressing into the container or pulling out of the container. The destruction can be effected by means of an opening aid which is joined to the container and is arranged in the region of the through-hole, usually above the through-hole, for example also by a drinking straw which is pushed through the hole-covering layers. It is also preferred in a configuration according to the invention that an opening aid is provided in the region of the at least one hole. It is preferred here that the opening aid is provided on the outer surface of the sheet-like composite. The container also preferably comprises a closure, for example a lid, on the outer surface. It is in this case preferred that the closure covers the through-hole at least partially, preferably completely. Consequently, the closure protects the hole-covering layers, which are less robust in comparison with the regions outside the through-hole, from damaging mechanical effects. For opening the hole-covering layers that cover the through-hole, the closure often comprises the opening aid. Suitable as such an opening aid are for example hooks for tearing out at least part of the hole-covering layers, edges or cutting edges for cutting into the hole-covering layers or spikes for puncturing the hole-covering layers, or a combination of at least two of these. These opening aids are often mechanically coupled to a screw lid or a cap of the closure, for example by way of a hinge, so that the opening aids act on the hole-covering layers to open the closed container when the screw lid or the cap is actuated. Closure systems of this kind, comprising composite layers covering a through-hole, openable closures that cover this through-hole and have opening aids, are sometimes referred to in the specialist literature as *"overcoated holes"* with *"applied fitments".*

### Depth and height

The depth of a depression is the longest straight line which starts at the height level of the direct vicinity of the depression, runs perpendicularly to the surface of the direct vicinity of the depression and ends at the deepest level of the depression. The height of a bulge is the longest straight line which starts at the height level of the direct vicinity of the bulge, runs perpendicularly to the surface of the direct vicinity of the bulge and ends at the highest level of the bulge.

### Distance

The distance between two items is the shortest straight line which connects the edge of the one item to the edge of the other item. The minimum distance between any two sub-regions of the first kind is the distance between the two sub-regions of the first kind of a plurality of sub-regions of the first kind which are closest to one another.

### Regular arrangement

A plurality of items is arranged in a regular arrangement if there is an elementary cell which is equidistantly repeated in one or two dimensions to form the arrangement. The elementary cell consists of one or more of the items of the arrangement.

### Method steps

The method steps of the methods according to the invention are carried out in the order of their symbols. In principle, method steps with immediately successive symbols can be carried out one after the other, at the same time or overlapping in time.

### TEST METHODS

The following test methods were used within the context of the invention. Unless stated otherwise, the measurements were conducted at an ambient temperature of 23 °C, an ambient air pressure of 100 kPa (0.986 atm) and a relative air humidity of 50 %.

### Separation of layers

If individual layers of a laminate are to be examined separately herein, the layer(s) to be examined is/are first separated from the laminate as described below. Three specimens of the sheet-like composite are cut to size. For this purpose, unless stated otherwise, regions of the sheet-like composite without crease lines and folds are used. Unless stated otherwise, the specimens have dimensions of 4 cm × 4 cm. Should other dimensions of the layer to be examined be necessary for the examination to be conducted, sufficiently large specimens are cut out of the laminate. The layer to be examined is separated out of each of the preceding specimen. In order to release a joint between layers, the specimens are introduced into an acetic acid bath (30% acetic acid solution: 30% by weight of CH₃COOH, remainder to 100 % by weight H₂O) heated to 60 °C for 30 minutes. This detaches the layers from one another. If required, the layers may also be cautiously manually pulled apart. Should the desired layer not be sufficiently readily detachable, as an alternative, new specimens with the above dimensions are used and these are treated in an ethanol bath (99 % ethanol) as described above. If residues of the carrier layer (especially in the case of a cardboard layer as carrier layer) are present on the layer to be examined (for example the outer polymer layer A or the intermediate polymer layer C), these are cautiously removed with a brush. In any case, one sample of size sufficient for the examination to be conducted (unless stated otherwise, with an area of 4 cm²) is cut out of each of the three films of the layer to be examined that have been prepared as described above. These samples are then stored at 23 °C for 4 hours and hence dried. Subsequently, the three samples can be examined. Unless stated otherwise, the result of the examination is the arithmetic mean of the results for the three samples.

### Bending stiffness

The following devices are used to determine the bending stiffness of a sheet-like material, in particular a sheet-like composite or carrier layer:
- bending stiffness tester L&W Bending Tester Code 160, type 977682 from Lorentzen & Wettre, Sweden,
- punching machine for bending stiffness samples.

The material to be tested is climatised for 24 h in a standard climate (23 °C, 50 % relative humidity). The measurement is also carried out in a standard climate. Specimens with a width of 38.1 mm and a length of 69.85 mm are punched out of the material to be tested. In the case of roll material, the specimens are taken at 5 positions distributed over the width of the web. In any case, for each bending direction of the material to be tested, 2 specimens with their length in the corresponding bending direction of the material are punched out of the material at each specimen-taking position. Specimens may only be taken from areas of the material to be tested which neither have grooves nor folds.

Per bending direction to be considered, the bending stiffness (in mN) of the outer side and the opposite inner side is determined. For this purpose, the specimen is placed in the bending stiffness tester with the side to be measured facing forwards and the measurement is started by pressing the green button. For each combination of bending direction and material side (outer side or inner side), the same number of specimens is measured. A 2-point bending test is carried out by the bending stiffness measuring device. In this test, the specimen clamped at one end is deflected at its other end by a measuring edge through a bending angle of 15°. Here, a direction in which the material has the bending stiffness, i.e., the bending direction, is the direction of a straight line connecting the two points at which bending forces are exerted to the specimen in the 2-point bending test. In the case of the bending stiffness tester, this direction is the direction of the shortest straight line from the clamp to the measuring edge. In this direction, the specimen forms a curve during bending. Perpendicular to this direction, a straight fold line would form if the specimen were bent far enough for this. The free clamping length of the specimen is 50 mm. Each specimen may only be used for one measurement. Measurements of the outer side and the inner side on the same specimen are not permitted. The individual measured values are read from the display.

If multiple specimens were measured for each of the combinations of bending direction and material side, the arithmetic mean over the specimens is calculated for each of the combinations individually. The arithmetic mean values are then used as values for each of the combinations of bending direction and material side. The bending stiffness in a specific bending direction is the geometric mean over the values for the combinations of this bending direction/outer side and this bending direction/inner side.

### Oxygen transmission rate (OTR)

Oxygen transmission rate of a sheet-like composite or of a barrier layer or a combination of layers, including a barrier layer, is determined according to standard ASTM F1927-07 (humidified conditions). The sample to be tested, unless stated otherwise, is taken from a region of the laminate without crease lines or folds. In addition, the sample is tested with the side facing outward in the laminate facing the test gas. The area of the sample is 50 cm². The measurements are conducted at an ambient temperature of 23°C, an ambient air pressure of 100 kPa (0.986 atm) and a relative air humidity of 50%. The test instrument is an Ox-Tran 2/22 from Mocon, Neuwied, Germany. The measurement is conducted without compressed air compensation. For the measurements, samples at ambient temperature are used. Further, 0 % oxygen at the outer side of the sample and 100 % oxygen at the inner side are used for the measurement. Further settings and factors that affect the measurement - especially the rest of those listed under point 16 of the standard ASTM F1927-07 (humidified conditions) - are defined by the instrument used and the proper use and maintenance thereof according to the manufacturer's handbook.

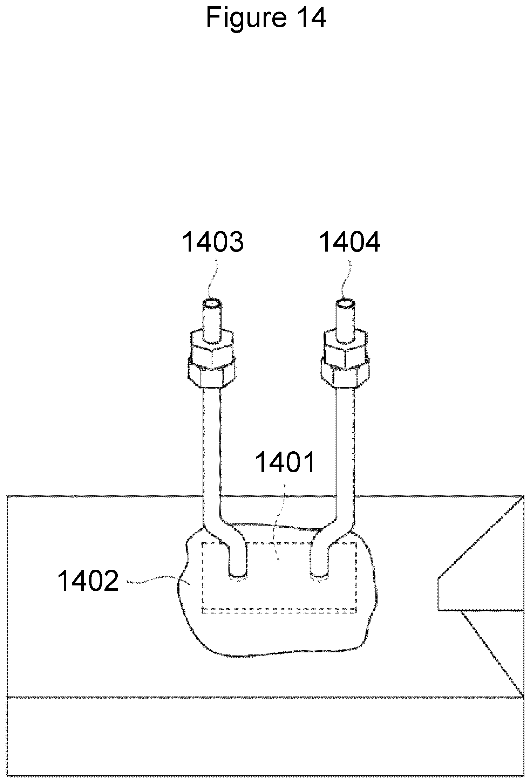

In order to determine the oxygen transmission rate of a container, a hole is cut into a side panel of the filled closed container. The dimensions of the hole are 10 mm × 40 mm. The container is emptied through the hole. Afterwards, a metal plate having tubes as gas inlet and gas outlet is put on the hole of the container such that the hole is fully covered by the plate. The gas inlet and the gas outlet extend through the hole into the interior of the container. In order to obtain a gas tight connection between plate and container, an epoxy resin, Devcon 5 Minute^{®} Epoxy by company ITW Engineered Polymers, is used as sealing compound. The resulting setup is shown in Figure 14. Further, the container is connected to the measurement device Ox-tran Model 2/21, Mocon, Neuwied, Germany via the tubes. The device is operated according to the software which comes along with the device. Measurement of the OTR is conducted with the Ox-tran Model 2/21 device (Mocon, Neuwied, Germany) and the according software. Therein, the measurement is in accordance with the standards ASTM D3985 (2010), DIN 53380-3 (1998-07), ASTM F-2622, ISO 14663-2 Annex C or ISO 15105-2 (2003-02). Measurement is conducted at 23 °C and 50 % relative air humidity for a duration of 24 h. Five containers which are identical in construction and which have been produced identically are prepared and studied as described above and the arithmetic mean is calculated and presented in volume of O₂ in ml / (package · year).

### Water vapour transmission rate (WVTR)

Water vapour transmission rate of a sheet-like composite or a barrier layer or a combination of layers, including a barrier layer, is determined according to standard ASTM F1249-13. The sample to be tested, unless stated otherwise, is taken from a region of the laminate without crease lines or folds. In addition, the sample is tested with its side facing inward in the laminate (the side facing the contents of the container) facing the elevated humidity. The measurement area of the sample is 50 cm². The measurements are conducted at an ambient temperature of 23°C, an ambient air pressure of 100 kPa (0.986 atm) and a relative air humidity of 50 % on the outer side of the sample and of 0 % on the inner side of the sample. The test instrument is a Permatran - W Model 3/34 from Mocon, Neuwied, Germany. For the measurements, samples at ambient temperature are used. Further settings and factors that affect the measurement - especially the rest of those listed under point 12 of the standard ASTM F1249-13 - are defined by the instrument used and the proper use and maintenance thereof according to the manufacturer's handbook.

### MFR value

The MFR value (mass-based melt flow rate in g/10 min) is measured in accordance with the standard DIN EN ISO 1133-1:2012-03 (unless otherwise stated at 190°C with 2.16 kg). Therein, method A as defined in the standard is used applying the standardised extrusion tool. The sample is conditioned in accordance with DIN EN ISO 1872-1. Sample mass and time interval for cutting off the extrudate are selected in accordance with table 4 on page 16 of DIN EN ISO 1133-1:2012-03. In accordance with the comment under the index c below the table 4, the mass is to be determined at an accuracy of 0.1 g.

### Density of polyolefin

The density of a polyolefin is measured in accordance with the standard DIN EN ISO 1183-1:2012-04. Therein, method B (section 5.2 of the standard), applying a liquid pycnometer, is used. The sample to be studied is conditioned in accordance with DIN EN ISO 1872-1:199-10. Distilled water is used as the immersion liquid. The test temperature is 23 °C. No buoyancy correction is applied.

### Scott Bond value

The Scott Bond value is determined in accordance with Tappi 569.

### Melting temperature

Sample preparation for differential scanning calorimetry (DSC):
In case of a layer of a laminate, the material to be studied is separated from the other layers of the laminate as described above. A sample of at least 1.0 mg is weighed with a Kern 770 precision balance from Kern & Sohn GmbH, Balingen, Germany. For this purpose, the empty DSC pan is tared one the balance. Then the sample is weighed. Subsequently, the pan is closed with a lid on a press. The lid should have a small hole, so that the pan will not be deformed during DSC measurement. The sample and the crucible must not be deformed during the DSC measurement. Care must be taken not to touch the sample or the crucible by bare hand during sample preparation.

### Differential scanning calorimetry (DSC):

The melting temperature is determined in accordance with standard DIN EN ISO 11357-3:2011(E). As described therein by reference, the differential scanning calorimetry is conducted according to standard DIN EN ISO 11357-1, here version 11357-1:2010-03. The following details apply in addition to what is given in the standard or deviating from the standard. The calorimeter is a DSC 8000 from PerkinElmer Inc. In the DSC-method, the heat flow is measured as a function of the temperature. The graph of the measurement therefore shows the heat flow (dQ/dt) on the ordinate axis as a function of the temperature (T) on the abscissa axis. The endothermic direction is always upwards, as in note 2 to section 3.1 of DIN EN ISO 11357-1:2010-03. According to section 4.2 of standard DIN EN ISO 11357-1:2010-03, a heat flow differential calorimetry is carried out. In this case, the reference crucible is always empty and, according to section 3.10 of DIN EN ISO 11357-1:2010-03, the reference position is always used for the temperature. Nevertheless, a reference crucible must always be used. The flushing gas used (sections 5.5 and 9.1.2 of DIN EN ISO 11357-1:2010-03 is nitrogen. Prior to each measurement, the DSC instrument is calibrated according to sections 8.2 to 8.4 of DIN EN ISO 11357-1:2010-03 using the calibrating substances (section 3.2 and 5.4 of DIN EN ISO 11357-1:2010-03) indium and zinc (as per annex C of DIN EN ISO 11357-1:2010-03). As recommended in 8.4.2 of DIN EN ISO 11357-1:2010-03, the heat calibration is carried out using indium as calibrating substance. The crucible is fed to the calorimeter via the auto-sampler. Details about the sample are entered via the editor (name, weight, method of measurement, position on the auto sampler, memory location). The measurements are carried out in dynamic mode (3.9.5 of DIN EN ISO 11357-1:2010-03). In this case the sample is pre-treated by first heating from 35 °C to 300 °C at 20 °C/min and maintaining the temperature for 1 minute. Thereafter, the sample is cooled to 35 °C at 2 °C/min. After that, the measurement process is carried out with a heating rate of 20°C/min up to 300 °C.

### Evaluation:

For the evaluation of the measurement, only the second heating curve described above is used. The curve can be selected in the menu under *"curves"* and there *"heat flow".* The selected curve is coloured in blue, the rest of the data is red and can be removed via *"remove curve".* Then, the melting temperature can be determined from the data via selecting *"peak area"* in the menu *"calc".* The peak is marked and then evaluated automatically. The sample has exactly as many melting temperatures as its second heating curve has endothermic peaks. If a sample has more than one peak, i.e., more than one melting temperature, the one of these at the lowest temperature is meant in case of any reference herein to a single melting temperature.

### Residual moisture content of cardboard

The residual moisture content of the cardboard is measured according to the ISO 287:2009 standard.

### Adhesion

The adhesion of two adjacent layers is determined by fixing them in a 90° peel test instrument, for example the Instron *"German rotating wheel fixture*", on a rotatable roller which rotates at 40 mm/min during the measurement. The samples had been cut beforehand into strips 15 mm wide. On one side of the sample, the laminas are detached from one another and the detached end is clamped in a tensile device directed vertically upward. A measuring instrument to determine the tensile force is attached to the tensile device. As the roller rotates, the force needed to separate the laminas from one another is measured. This force corresponds to the adhesion of the layers to one another and is reported in N/15 mm. The separation of the individual layers can be effected mechanically, for example, or by means of a controlled pre-treatment, for example by soaking the sample in 30 % acetic acid at 60 °C for 3 min.

### Detection of colourants

Detection of organic colourants can be conducted in accordance with the methods described in *"*Industrial Organic Pigments, Third Edition" (Willy Herbst, Klaus Hunger Copyright© 2004 WILEY-VCH Verlag GmbH & Co. KGaA, Weinheim ISBN: 3-527-30576-9).

### Molecular weight distribution of polyolefins

To determine the molecular weight distribution of a polyolefin, such as a mPE, the high-temperature size exclusion chromatography (HT-SEC) is applied. For this purpose, the high-temperature chromatograph PL 220 from Polymer Laboratories (Agilent) is used. 2 mg of the material to studied is weighed and dissolved in 1,2,4-trichlorobenzene at 150 °C. The injection volume is 200 µL and the flow rate is 1 ml/min. The stationary phase are Plgel Olexis columns, Agilent, which are calibrated with narrowly distributed polystyrene standards from Polymer Standards Services, Germany. The control and evaluation of the measurements is carried out with the WinGPC unity software of the device manufacturer.

### Molecular structure of polyolefins

To determine the molecular structure of polyolefins, such as mPE, Nuclear Magnetic Resonance Spectroscopy (NMR Spectroscopy) is used. More specifically, ¹H-NMR spectra and ¹³C-NMR spectra are recorded with a NMR spectrometer from Varian (Agilent) at 400 MHz and 100.6 MHz, respectively. The solvent is CDCl₃ at 27 °C. Poorly soluble samples can be examined at 120 °C with C₂D₄Cl₂ as solvents. The NMR spectroscopy is, in particular, used to determine if an mPE comprises C₈-α-olefin-derived units or C₆-α-olefin-derived units.

### Average thickness of layers

To determine the average thickness of a layer, in particular of the barrier layer and its sub-layers, samples are taken only from regions outside of the hole-covering region of the respective layer. Further, samples are taken only from regions without crease lines or folds. The layer thickness of a sample having an area of 0.5 cm² is determined by means of a scanning electron microscope (SEM). For this purpose, a cross-section through the layer structure to be determined is prepared manually with a blade (Leica Microtome Blades 819). The cross-section is sputtered with gold (Cressington 108auto from Cressington Scientific Instruments Ltd., Watford (UK)) and then analysed by SEM (Quanta 450, FEI Deutschland GmbH, Frankfurt) under high vacuum (pressure < 7.0·10⁻⁵ Pa). The layer thicknesses of the individual layers are ascertained with the *"xT Microscope Control"* software, version 6.2.11.3381, FEI Company, Frankfurt, Germany. To determine the average thickness, three samples are taken, the layer thickness in each sample is determined as described above, and the arithmetic mean is formed.

### Thicknesses of barrier substrate and barrier material layers in sub-regions of first, second and third kinds

A sample which includes the through-hole in the carrier layer and the hole-covering layers in the through-hole, in particular, the hole-covering region of the barrier layer, is cut from the laminate to be studied. If a barrier layer as such is to be studied, a sample which includes the sub-regions of the first kind is cut from the barrier layer. Depending on the size of the sub-regions of the first kind, the naked eye or an optical microscope is used to identify the positions and shape of the sub-regions of the first kind in plan view on the sample. Depending on the shape of the sub-regions of the first kind, multiple cross-sections are necessary to determine the thickness profiles of the barrier substrate layer and the barrier material layer in the different sub-regions. For example, if the sub-regions of the first kind are rectangular in shape, the thickness profiles of the barrier substrate layer and the barrier material layer should be determined at least in two cross-sections, wherein each of these cross-section intersects the geometric centre of the rectangle but each cross-section runs parallel to a different side of the rectangle. This means that the cross-sections are perpendicular to one another. For each cross-section another but identical sample is used.

In each case, the sample is embedded in an epoxy cast resin. For this purpose, the resin is poured into a mould which ensures that one side of the embedded sample will be smooth and flat. This side is glued onto a microscope slide of glass using an UV-curable adhesive. The sample is shortened with a diamond bandsaw from EXAKT Advanced Technologies GmbH to produce a section through the (sub-) layer sequence. This section is polished with a polishing device of the type EXAKT 400CS rom EXAKT Advanced Technologies GmbH and sputtered with gold (Cressington 108auto from Cressington Scientific Instruments Ltd., Watford (UK)). The thickness profiles of the barrier substrate layer and the barrier material layer through the sub-regions of the first kind and in each case a sub-region of the second kind which at least partially surrounds the respective sub-region of the first kind and, if present, a sub-region of the third kind located between and directly adjoining the respective sub-regions of the first and second kinds are exposed in the section. The thicknesses of layers are determined using a SEM (Quanta 450, FEI Deutschland GmbH, Frankfurt) under high vacuum (pressure < 7.0·10⁻⁵ Pa) and the "*xTMi-croscope Control"* software, version 6.2.11.3381, FEI Company, Frankfurt, Germany.

### Depth of depressions, height of bulges and cutting angles of a barrier layer as part of a laminate

If a barrier layer as part of a laminate is to be studied, a sample is prepared as described in the preceding test method. The sample is analysed using a SEM (Quanta 450, FEI Deutschland GmbH, Frankfurt) under high vacuum (pressure < 7.0·10⁻⁵ Pa) and the *"xT Microscope Control"* software, version 6.2.11.3381, FEI Company, Frankfurt, Germany.

### Depth of depressions, height of bulges and cutting angles of a barrier layer alone

If a barrier layer as such is to be studied, a sample which includes the sub-regions of the first kind is cut from the barrier layer. The side of the sample to be studied is identified. Depending on the size of the sub-regions of the first kind, the naked eye or an optical microscope is used to identify the positions of the sub-regions of the first kind in plan view on this side of the respective sample. Depth profiles along straight lines on the respective side of the sample are measured using a digital microscope VHX-X1 from Keyence Deutschland GmbH (comes with a computer and software version 1.7.0.4).

Depending on the shape of the sub-regions of the first kind, depth profiles in multiple directions need to be measured to determine the shape and depth or height of depressions or bulges. For example, if the sub-regions of the first kind are rectangular in shape, depth profiles should be determined at least along two straight lines, wherein each straight line intersects the geometric centre of the rectangle and each straight line runs parallel to a different side of the rectangle. This means that the straight lines are perpendicular to one another. The depths profiles are used to determine the depth of depressions and height of bulges. Further, cutting angles between tangents or a tangent and the barrier layer plane can be determined using the depth profiles.

### Surface area of sub-regions of the first kind and of hole-covering region, distances of sub-regions of the first kind

A sample which includes the through-hole in the carrier layer and the hole-covering layers in the through-hole, in particular, the hole-covering region of the barrier layer, is cut from the laminate to be studied. If a barrier layer as such is to be studied, a sample which includes the sub-regions of the first kind is cut from the barrier layer. A digital microscope VHX-X1 from Keyence Deutschland GmbH (comes with a computer and software version 1.7.0.4) is used to take a picture of the hole-covering region or the region of interest of the barrier layer in plan view. The software of the microscope is used to determine the total surface area of the hole-covering region and the surface areas of the sub-regions of the first kind. Further, the software is used to determine the distance between neighbouring sub-regions of the first kind and between the edge of the through-hole to a sub-region of the first kind.

### Fraction of leaking container tops

Crystal oil 60 from Shell Chemicals with methylene blue is used as the test agent for testing the liquid tightness of the container top. For this test, 1,000 containers of each type of container to be tested are produced and filled with water as described below. Each of the 1,000 closed and filled containers is cut open along its circumference so as to obtain a first open cup-like container part including the sealed container base and a second open cup-like container part including the sealed top region of the container. The second container parts are first emptied and then filled with approximately 20 ml of the test agent each and then stored for 24 hours. After 24 hours, the outer side of the container top of each second container part is examined with the naked eye to see whether the test agent has produced a blue discolouration in the region of the overcoated through-hole. Such a discolouration clearly indicates a leak in the container top. The fraction of container tops with leaks out of 1,000 tested containers is determined.

### Opening work

An opening aid of the type disclosed in EP1 812 298 B1 is glued to the container to be tested over the through-hole in the carrier layer using the adhesive Euromelt 510, Henkel, Düsseldorf. This opening aid is designed to penetrate the hole-covering regions of the hole-covering layers in the through-hole by a circular cutting movement and thus create a circular pouring hole in the container. A Torque Pro torque-controlled force transducer from SEA Datentechnik, Cologne, Germany, is used to determine the average opening work required for this opening process.

To prepare for the measurement, the containers to be tested are stored at 23 °C for 24 hours with the opening aids attached. For the measurement, the respective container is fixed in the measuring device and the lid of the opening aid is fixed with the force transducer. For each measurement, 5 identical containers are measured in succession. The opening work (in mJ) required to open the containers with the opening aid is determined. The arithmetic mean of the values obtained for the 5 containers is calculated for the average opening work.

### Puncture force

The puncture force is determined on closed and filled containers. For this purpose, a universal tensile testing machine Tira test 28025 (force transducer: 20 N) is used. The testing machine is equipped with a cylindrical mandrel which points vertically downward. A drinking straw is pushed over the tip of the mandrel to fix it to the mandrel. Before, the drinking straw is cut such that a length of 2.5 cm of the drinking straw protrudes vertically downward from the end of the mandrel to an obliquely cut end piece of the drinking straw. A Ming Yang Paper Straw from Mingyang Paper Products Co., Putian, China is used as drinking straw.

For the test, the container is placed below the mandrel with the overcoated hole (OCH) in horizontal alignment and thus perpendicular to the mandrel and the drinking straw. The testing machine moves the mandrel and thus the drinking straw vertically downward at a constant speed of 1,000 mm/min. The testing machine automatically adapts the force applied to the drinking straw to the resistance of the OCH when the hole-covering layers are pierced in order to keep the speed constant. Further, the testing machine measures the force applied to the mandrel/drinking straw over time. The maximum of the force applied until the OCH is pierced through is referred to as puncture force. The test is conducted 10 times with identical containers and drinking straws. For each test, a new drinking straw and a new container are used. The arithmetic mean of the 10 puncture forces is calculated.

### Reduction of average opening force

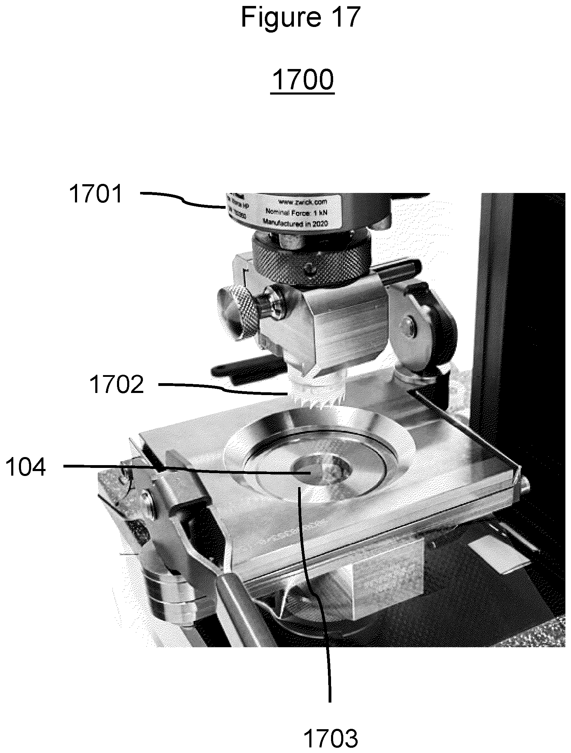

The setup for testing the effect of treating the barrier layer on the openability of a barrier layer alone is shown in Figure 17. It includes a tensile/compression tester from Zwick Roell and a holder for the barrier layer. The holder holds the barrier layer and a circular hole in the holder simulates a through-hole which is covered only by the barrier layer. For the test a cutting ring of an opening aid of the type described in EP 3943408 B1 and made from PP is attached to test device. The circular hole of the holder is positioned below the cutting ring. If a treated barrier layer is to be studied, the treated area should fully cover the circular hole of the holder. The sample of the barrier layer to be tested in the circular hole as well as the cutting ring are in horizontal alignment. The testing device moves the cutting ring vertically downward at a constant speed of 100 mm/min. The testing device automatically adapts the force applied to the cutting ring to the resistance of the sample while the latter is pierced by the cutting ring. This way, the speed of the cutting ring is kept constant. The force which is applied to puncture the sample is measured over time. The maximum of the force applied until the sample is pierced through is referred to as *"opening force*". The test is conducted 10 times with identical samples and cutting rings. For each test, a new cutting ring and a new sample of the barrier layer are used. The arithmetic mean of the 10 opening forces is calculated and referred to as *"average opening force*". To test the effect of a specific treatment of the barrier layer on the openability of the barrier layer, the average opening force is determined for untreated and treated samples of the barrier layer. The reduction of the average opening force of the treated samples is calculated in % based on the average opening force of the untreated samples.

### Vicat softening temperature

The Vicat softening temperature is determined according to the standard ISO 306:2004, method VST-A50 (load = 10 N, increase in temperature = 50 K/h) using an oil heating bath.

### EXAMPLES

The invention is illustrated further by way of examples and figures. The invention is not restricted to the examples and figures.

### Laminate construction

For the Examples (according to the invention) and the Comparative Examples (not according to the invention), Laminates A, B and C with the layer constructions and layer sequences specified in Tables 1 to 3 below, respectively, are each prepared.

**Table 1: Layer structure of Laminate A which is used for all Examples A and Comparative Examples A**

| **Layer designation** | **Material** | | **Basis weight [g/m²**] |
|---|---|---|---|
| Outer polymer layer A | LDPE 23L430 from Ineos GmbH, Cologne, Germany | | 15 |
| Carrier layer | Liquid Packaging Board 76272/9L from Stora Enso | | 270 |
| Intermediate polymer layer C | Blend of | | 10 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Intermediate polymer layer D | Bynel 21E4817 from DOW | | 4 |
| Barrier layer | AlOx | CFLEX PE OP03 Alox from Constantia Flexibles | here: thickness 20 µm |
| | MoPE | | |
| Inner Polymer layer F | blend of | | 3 |
| | (1) 80 wt.-% of mLLDPE Eltex PF1315AZ from Ineos GmbH, Cologne, Germany, and | | |
| | (2) 20 wt.-% of LDPE 19N430 from Ineos GmbH, Cologne, Germany | | |
| Inner Polymer layer G | LDPE 19N430 from Ineos GmbH, Cologne, Germany | | 7 |
| Inner polymer layer H | Blend of | | 10 |
| | (1) 30 wt.-% of mLLDPE Eltex PF1315AZ from Ineos GmbH, Cologne, Germany, and | | |
| | (2) 70 wt.-% of LDPE 19N430 from Ineos GmbH, Cologne, Germany | | |

**Table 2: Layer structure of Laminate B which is used for all Examples B and Comparative Examples B**

| **Layer designation** | **Material** | | **Basis weight [g/m²**] |
|---|---|---|---|
| Outer polymer layer A | LDPE 23L430 from Ineos GmbH, Cologne, Germany | | 15 |
| Carrier layer | Liquid Packaging Board 76272/9L from Stora Enso | | 270 |
| Intermediate polymer layer C | Blend of | | 10 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Intermediate polymer layer D | Bynel 21E4817 from DOW | | 4 |
| Barrier layer | AlOx | CFLEX PE OP03 Alox from Constantia Flexibles | here: thickness 20 µm |
| | MoPE | | |
| Inner Polymer layer F | HDPE HD6070FA from Ineos GmbH, Cologne, Germany | | 3 |
| Inner Polymer layer G | Blend of | | 7 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Inner polymer layer H | Blend of | | 10 |
| | (1) 30 wt.-% of mLLDPE Eltex PF1315AZ from Ineos GmbH, Cologne, Germany, and | | |
| | (2) 70 wt.-% of LDPE 19N430 from Ineos GmbH, Cologne, Germany | | |

**Table 3: Layer structure of Laminate C which is used for all Examples C and Comparative Examples C**

| **Layer designation** | **Material** | | **Basis weight [g/m²**] |
|---|---|---|---|
| Outer polymer layer A | LDPE 23L430 from Ineos GmbH, Cologne, Germany | | 15 |
| Carrier layer | Liquid Packaging Board 76272/9L from Stora Enso | | 270 |
| Intermediate polymer layer C | Blend of | | 10 |
| | (1) 40 wt.-% of HDPE HD6070FA from Ineos GmbH, Cologne, Germany, and | | |
| | (2) 60 wt.-% of LDPE 23L430 from Ineos GmbH, Cologne, Germany | | |
| Intermediate polymer layer D | Bynel 21E4817 from DOW | | 4 |
| Barrier layer | AlOx | Jindal Alox-lyte 16AO894 from Jindal films Europe S. a r. L. | here: thickness 16 µm |
| | BoPP | | |
| Inner Polymer layer F | blend of | | 3 |
| | (1) 80 wt.-% of mLLDPE Eltex PF1315AZ from Ineos GmbH, Cologne, Germany, and | | |
| | (2) 20 wt.-% of LDPE 19N430 from Ineos GmbH, Cologne, Germany | | |
| Inner Polymer layer G | LDPE 19N430 from Ineos GmbH, Cologne, Germany | | 7 |
| Inner polymer layer H | Blend of | | 10 |
| | (1) 30 wt.-% of mLLDPE Eltex PF1315AZ from Ineos GmbH, Cologne, Germany, and | | |
| | (2) 70 wt.-% of LDPE 19N430 from Ineos GmbH, Cologne, Germany | | |

### Treatment of barrier layer

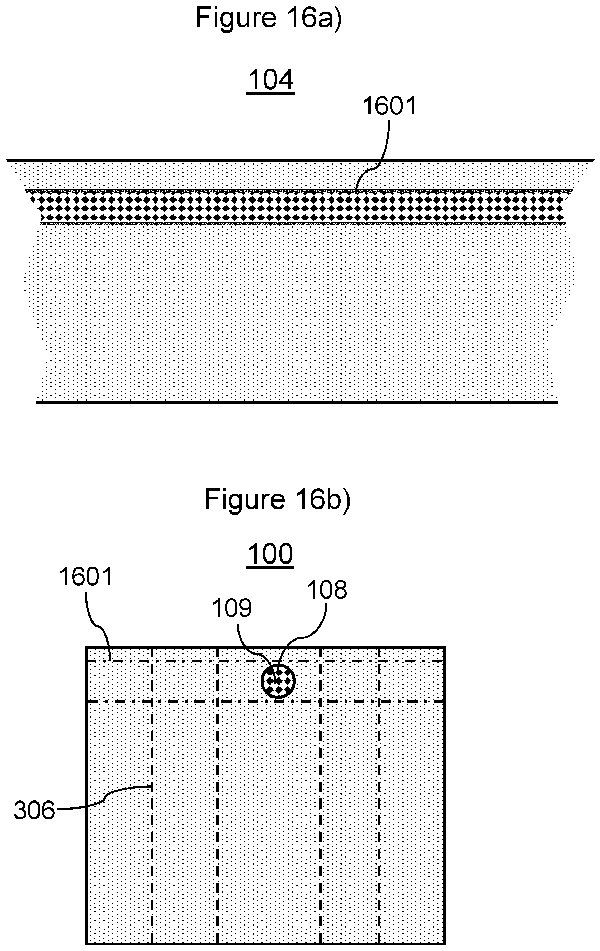

The barrier layers of the Laminates A to C are provided by the manufacturers as preprepared films in the form of webs. Except for the Comparative Examples A, B and C, the respective barrier layer is treated before incorporating into the respective laminate. Treatment is done by either applying ultrasound only, by embossing only, or by simultaneously embossing and applying ultrasound. In each case, a 10 mm wide stripe along the length of the barrier layer in the form of a web is treated. In the Laminates A to C, the through-hole in the carrier layer will be located entirely in the region of this stripe so that the treated stripe comprises the hole-covering region of the barrier layer which covers the through-hole. This is illustrated in Figures 16a) and 16b).

### Treatment by ultrasound only:

The barrier layer in the form of a web is fed between a rotational sonotrode and a further roller as an anvil to the sonotrode. Here, the barrier layer's side which is closer to the barrier material layer faces the sonotrode and the barrier layer's side which is closer to the barrier substrate layer faces the anvil. The surface of the anvil is flat, i.e., without any embossing structure. While the barrier layer moves between the rolls at a speed of 100 m/min, the sonotrode vibrates at 30 kHz with an amplitude of 18 µm and thus applies ultrasound to the barrier layer. The contact pressure exerted by the sonotrode and the anvil on the barrier layer is 300 N.

### Treatment by embossing only:

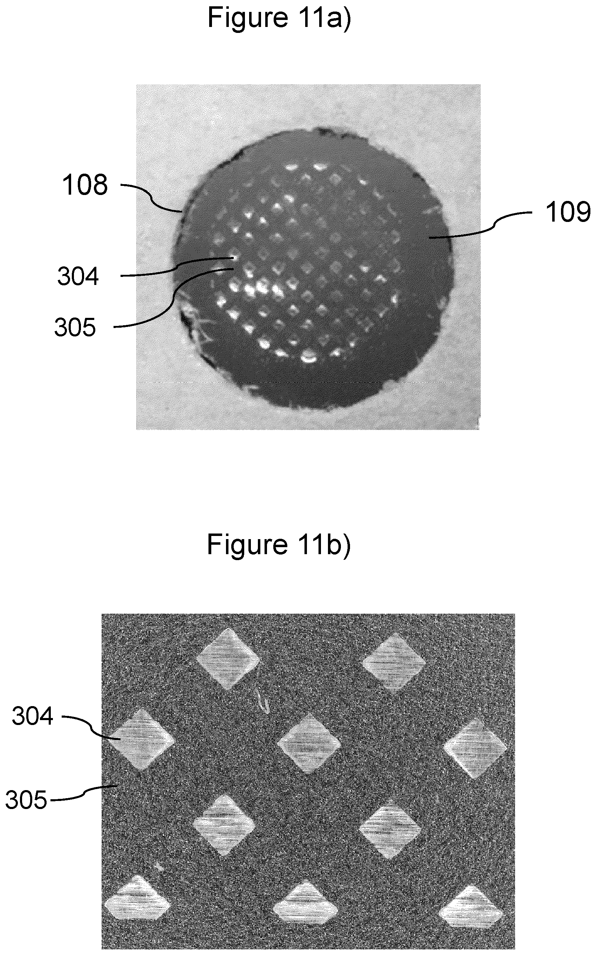

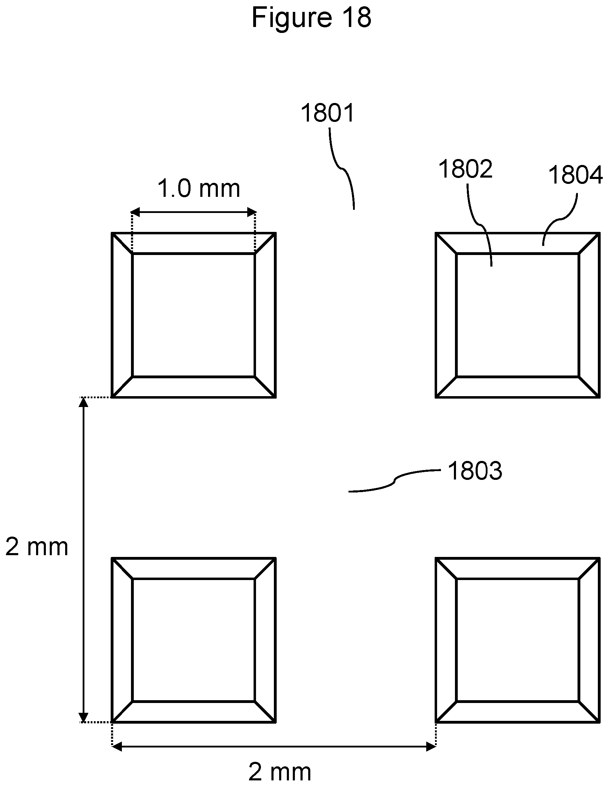

The barrier layer is treated in the same way as described above for the treatment by ultrasound only, with the following exceptions. For the embossing only treatment, the sonotrode does not vibrate. Further, the anvil is a roller with an embossing structure on its surface. Figure 18 shows details of this embossing structure. It includes a regular pattern of truncated pyramids in a 10 mm wide stripe along the circumference of the roller. The embossing pattern which this anvil creates on the barrier layer is shown in Figures 11a) and 11b).

### Treatment by combination of embossing and ultrasound:

The barrier layer is treated in the same way as described above for the treatment by embossing only with the exception that the sonotrode vibrates at 30 kHz with an amplitude of 18 µm and thus applies ultrasound to the barrier layer which moves at 100 m/min.

### Laminate production

The Laminates A to C are produced with an extrusion coating system from Davis Standard. For application of the individual polymer layers by melt extrusion, the polymers are melted in an extruder. The resultant melt is transferred via a feed block into a nozzle and extruded onto the substate. The extrusion temperature here is in the range from about 280 to 330 °C. In the first step, the carrier layer is provided with a circular through-hole of diameter 8 mm for each container to be produced from the laminate by die cutting and then the outer polymer layer A is applied directly to the carrier layer by melt extrusion coating. Thereby, the holes in the carrier layer are covered with the outer polymer layer A. In the second step, the barrier layer is laminated with the intermediate polymer layers C and D as laminating agents to the carrier layer that has been coated with the outer polymer layer A beforehand. The barrier layer, immediately prior to lamination, is subjected to surface treatment on both sides in order to increase the surface tension. The surface treatment is carried out with an AVE-250E instrument from AFS Entwick-lungs- und Vertriebs GmbH, Germany. The input power and the voltage of the surface treatment to be conducted in the form of a corona treatment are chosen so as to give a surface tension of the barrier layer on both sides of 55 dyne/cm (= 10⁻³ N/m) directly after the corona treatment. Subsequently, the inner polymer layers F, G and H are co-extruded onto the barrier layer. The through-holes in the carrier layer are covered with the outer polymer layer A, the intermediate polymer layers C and D, the barrier layer and the inner polymer layers F, G and H.

### Container production

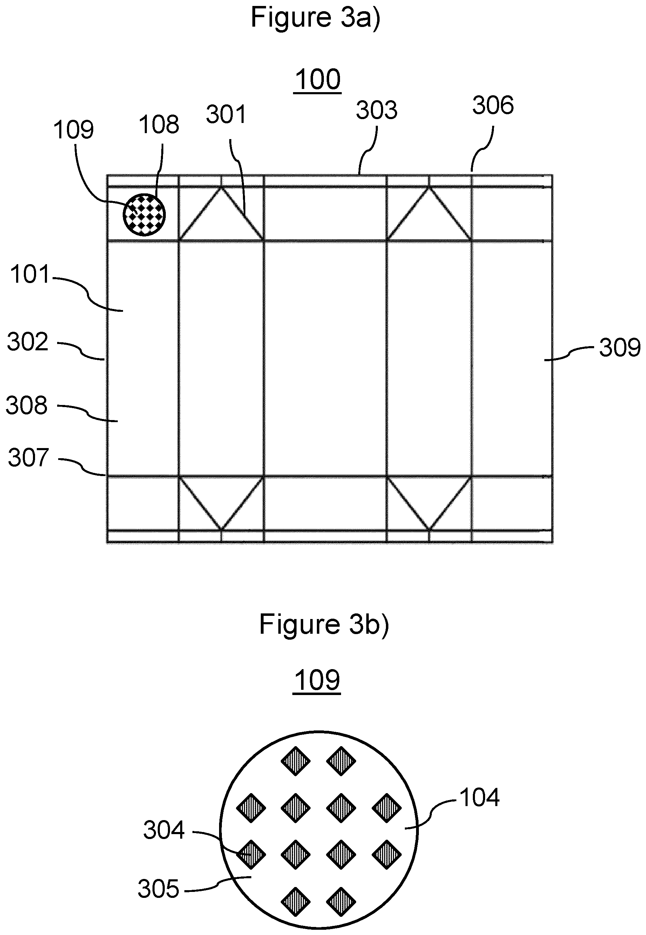

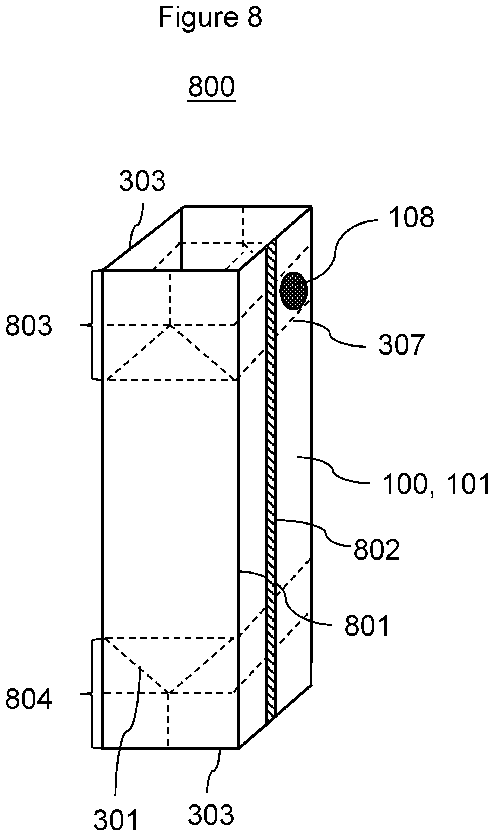

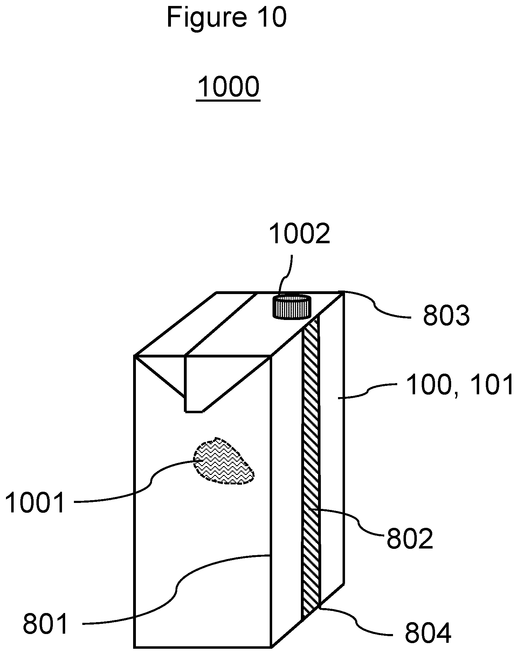

Crease lines, especially longitudinal crease lines, are introduced into the laminate obtained as described above so that grooves are on the outer side (side of the outer polymer layer A). In addition, the creased laminate is divided into multiple blanks for individual containers, each blank including one of the above through-holes in the carrier layer (illustrated in Figures 3a) and 16b)). By folding along the 4 longitudinal crease lines of each and every blank and heat sealing of overlapping fold faces, a sleeve-like container precursor of the shape shown in Figure 8 is obtained in each case. This sleeve is used to produce a closed container of the cuboid shape shown in Figure 10 in a CFA812 standard filling machine from SIG Combibloc, Linnich, Germany. This involves producing a container base by folding and closing by hot air sealing. This gives rise to a beaker that is open at the top. The beaker is sterilised with hydrogen peroxide. Then, the beaker is filled with water. By folding and ultrasound sealing, the top region of the beaker including the hole in the carrier layer is closed and hence a closed container is obtained.

### Measurements

The liquid tightness of the container top and the OTR of containers which have been prepared as described above are determined for each of the Examples and Comparative Examples as described above in the test methods section.

### Evaluation

In Tables 4 to 6. "++" means a more favourable result than "+", which is still more favourable than "-".

**Table 4: Test results obtained for containers made from Laminate A**

| | **Type of treatment** | **Low puncture force** | **Low opening work** | **Low fraction of leaking container tops** | **Low OTR of containers** |
|---|---|---|---|---|---|
| Comparative Example A | / | - | - | + | + |
| Example A | embossing | + | + | + | + |

**Table 5: Test results obtained for containers made from Laminate B**

| | **Type of treatment** | **Low puncture force** | **Low opening work** | **Low fraction of leaking container tops** | **Low OTR of containers** |
|---|---|---|---|---|---|
| Comparative Example B | / | - | - | + | + |
| Example B | embossing | + | + | + | + |

**Table 6: Test results obtained for containers made from Laminate C**

| | **Type of treatment** | **Low puncture force** | **Low opening work** | **Low fraction of leaking container tops** | **Low OTR of containers** |
|---|---|---|---|---|---|
| Comparative Example C | / | - | - | + | + |
| Example C1 | embossing | + | + | + | + |
| Example C2 | embossing + ultrasound | ++ | ++ | + | + |

### Further examples

Further tests are carried out to study the effects of the treatment by a combination of embossing and ultrasound. For these further tests, barrier layers of the type Jindal Alox-lyte 16AO894 from Jindal films Europe S. a r. L. are used. Untreated samples of the barrier layer are compared to samples of the barrier layer which were treated by the combination of embossing and ultrasound. For simplicity, no laminates are produced for the further examples. If not given otherwise for the specific example, the treatment is carried out as described above. The results of the further tests are shown in Tables 7 and 8. In Table 8 "+" means a more favourable result than "-", which is still more favourable than "--".

**Table 7: Test results obtained for Jindal Alox-lyte 16AO894 from Jindal films Europe S. a r. L. alone**

| | **Contact Force [N]** | **Speed [m/min]** | **Reduction of Average Opening Force [%]** |
|---|---|---|---|
| Example D1 | 250 | 100 | 13.7 |
| Example D2 | 300 | 100 | 13.7 |
| Example D3 | 400 | 100 | 14.1 |
| Example D4 | 400 | 400 | 16.1 |

**Table 8: Test results obtained for Jindal Alox-lyte 16AO894 from Jindal films Europe S. a r. L. alone**

| | **Contact Force [N]** | **Reduction of Average Opening Force** |
|---|---|---|
| Example E1 | 150 | -- |
| Example E2 | 200 | + |
| Example E3 | 250 | + |
| Example E4 | 300 | + |
| Example E5 | 350 | + |
| Example E6 | 400 | + |
| Example E7 | 450 | - |

The figures respectively show, in schematic form and not to scale, unless stated otherwise in the description or the respective figure:
- Figure 1: a schematic diagram of a sheet-like composite of the invention in cross-section;
- Figure 2: a schematic diagram of a further sheet-like composite of the invention in cross-section;
- Figure 3a): a diagram of a sheet-like composite of the invention in plan view;
- Figure 3b): an enlarged view of the hole-covering region of the barrier layer in Figure 3a);
- Figure 4a): a schematic cross-section of a barrier layer of a sheet-like composite of the invention;
- Figure 4b): a schematic cross-section of a barrier layer of a further sheet-like composite of the invention;
- Figure 5a): a schematic cross-section of a barrier layer of a further sheet-like composite of the invention;
- Figure 5b): a schematic cross-section of a barrier layer of a further sheet-like composite of the invention;
- Figure 6: a flow chart of a method according to the invention for producing a sheet-like composite;
- Figure 7: a flow chart of a method according to the invention for producing a container precursor;
- Figure 8: a schematic diagram of a container precursor of the invention;
- Figure 9: a flow chart of a method according to the invention for producing a closed container;
- Figure 10: a schematic diagram of a closed container of the invention;
- Figure 11a): a photograph of a through-hole of a sheet-like composite of the invention;
- Figure 11b): a microscopic image showing a detail of Figure 11a);
- Figure 12a): a photograph of a through-hole of a further sheet-like composite of the invention;
- Figure 12b): a microscopic image of a cross-section through the hole-covering region in Fig- ure 12a);
- Figure 13a): a photograph of a through-hole of a further sheet-like composite of the invention;
- Figure 13b): a microscopic image of a cross-section through the hole-covering region in Fig- ure 13a);
- Figure 14: a schematic partial view of a closed container prepared for the above-described test method to determine the OTR of a container;
- Figure 15: a schematic illustration of the maximum of the smaller cutting angles between any tangent and a plane of the barrier layer;
- Figure 16a): a schematic illustration of a treated barrier layer in plan view;
- Figure 16b): a schematic illustration of a sheet-like composite comprising the treated barrier layer of Figure 16a); and
- Figure 17: a setup for the test method *"Opening test barrier layer";* and
- Figure 18: a detail of a first tool surface of a first tool in plan view.

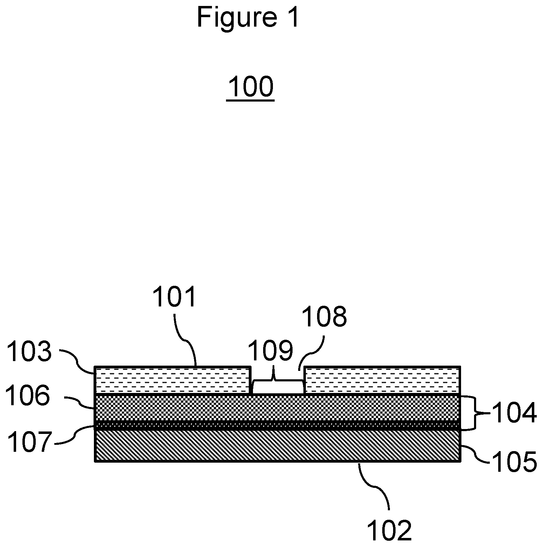

Figure 1 shows a schematic diagram of a sheet-like composite 100 of the invention in cross-section. The sheet-like composite 100 comprises a layer sequence which comprises a carrier layer 103, a barrier layer 104 and an inner polymer layer H 105. The layers of the layer sequence are superimposed to one another in the preceding order from an outer surface 101 of the sheet-like composite 100 to an inner surface 102 of the sheet-like composite 100. The barrier layer 104 comprises a sublayer sequence which comprises as sublayers that are superimposed to one another a barrier material layer 107 and a barrier substrate layer 106. The carrier layer 103 has a through-hole 108 which is completely covered by hole-covering regions 109 of the barrier layer 104 and the inner polymer layer H 105. The barrier layer 104 and the inner polymer layer H 105 are joined to one another to form a membrane in the region of the through-hole 108.

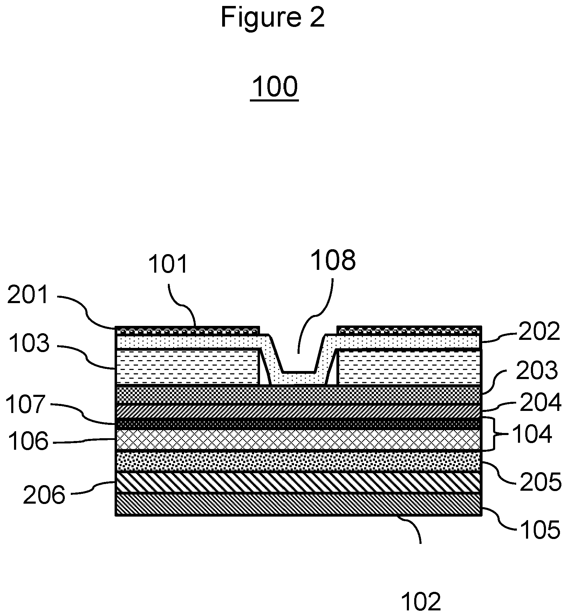

Figure 2 shows a schematic diagram of a further sheet-like composite 100 of the invention in cross-section. The sheet-like composite 100 consists of a layer sequence which comprises a colour application 201, obtained by intaglio printing, an outer polymer layer A 202 of a LDPE, a carrier layer 103 of cardboard, an intermediate polymer layer C 203, an intermediate polymer layer D 204 of an adhesion promoter polymer, a barrier layer 104, an inner polymer layer F 205, an inner polymer layer G 206 of a LDPE and an inner polymer layer H 105. The layers of the layer sequence are superimposed to one another in the preceding order from an outer surface 101 of the sheet-like composite 100 to an inner surface 102 of the sheet-like composite 100. The intermediate polymer layer C 203 consists of a polymer blend which consists of 40 wt.-% of a HDPE and 60 wt.-% of a LDPE, wherein the proportions in wt.-% are based on the total weight of the intermediate polymer layer C 203. The inner polymer layer F 205 consists of a polymer blend which consists of 80 wt.-% of a mPE and 20 wt.-% of a LDPE, wherein the proportions in wt.-% are based on the total weight of the inner polymer layer F 205. The inner polymer layer H 105 consists of a polymer blend which consists of 30 wt.-% of a mPE and 70 wt.-% of a LDPE, wherein the proportions in wt.-% are based on the total weight of the inner polymer layer H 105. The barrier layer 104 is a prefabricated film which comprises a sublayer sequence which comprises as sublayers that are superimposed to one another in a direction from the outer surface 101 of the sheet-like composite 100 to the inner surface 102 of the sheet-like composite 100 a barrier material layer 107 of an aluminium oxide and a barrier substrate layer 106 of a polyolefin. The carrier layer 103 has a through-hole 108 which is completely covered by hole-covering regions 109 of each of the outer polymer layer A 202, the intermediate polymer layer C 203, the intermediate polymer layer D 204, the barrier layer 104, the inner polymer layer F 205, the inner polymer layer G 206 and the inner polymer layer H 105. These hole-covering layers are joined to one another to form a membrane in the region of the through-hole 108.

Figure 3a) shows a diagram of a sheet-like composite 100 of the invention in plan view on its outer surface 101. This sheet-like composite 100 is a blank for producing a single container. The blank was obtained by creating crease lines 301, including 4 longitudinal crease lines 306 and transversal crease lines 307, in the sheet-like composite 100 of Figure 2 and cutting to size the sheet-like composite 100 by punching. Longitudinal cut edges 302 and transversal cut edges 303 of the blank were obtained. Further, the blank comprises a first longitudinal edge 308 and a further longitudinal edge 309.

Figure 3b) shows an enlarged view of the hole-covering region 109 of the barrier layer 104 in Figures 2 and 3a) in plan view. A thickness of the barrier substrate layer 106 is a two-dimensional function of a position on a surface of the barrier substrate layer 106 which faces away from the barrier material layer 107. The hole-covering region 109 of the barrier layer 104 comprises a plurality of square sub-regions of a first kind 304 and a single contiguous sub-region of a second kind 305 which fully surrounds each of the sub-regions of the first kind 304. Each of the sub-regions of the first kind 304 includes exactly the positions on the surface of the barrier substrate layer 106 which faces away from the barrier material layer 107 at which the two-dimensional function has the same local minimum. Additionally, in each of the sub-regions of the first kind 304 a thickness of the barrier material layer 107 does not differ by more than 20 % from an average thickness of the barrier material layer 107.

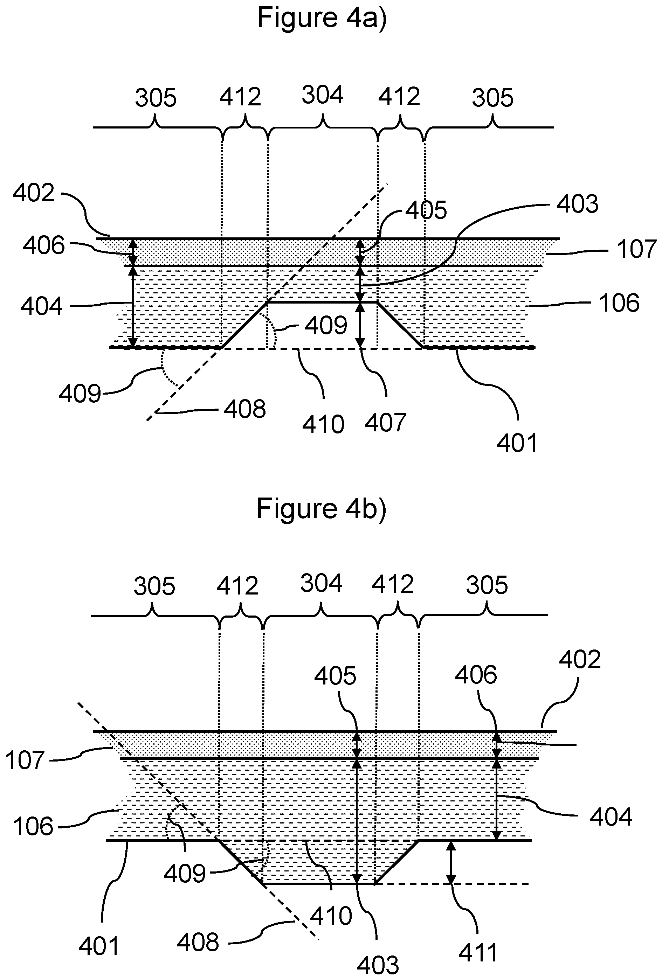

Figure 4a) shows a schematic cross-section of a barrier layer 104 of a sheet-like composite 100 of the invention. The cross-section is in a hole-covering region 109 of the barrier layer 104. The hole-covering region 109 comprises a plurality of sub-regions of a first kind 304, at least one sub-region of a second kind 305 and a plurality of sub-regions of a third kind 412. The cross-section shows one of the sub-regions of the first kind 304, a sub-region of the second kind 305, which at least partially surrounds the sub-region of the first kind 304 on both sides in the cross-section, and one of the sub-regions of the third kind 412, which is located between and directly adjoins the sub-region of the first kind 304 and the sub-region of the second kind 305 in the Figure. The barrier layer 104 comprises a sublayer sequence which comprises a barrier material layer 107 and a barrier substrate layer 106. The barrier layer 104 has a first side 401 and a further side 402 which is opposite the first side 401. The further side 402 of the barrier layer 104 is essentially flat. Each sub-region of the first kind 304 is part of a depression on the first side 401 of the barrier layer 104. A thickness of the barrier substrate layer 106 is a two-dimensional function of a position on the surface of the first side 401 of the barrier layer 104. This is a surface of the barrier substrate layer 106. Each of the sub-regions of the first kind 304 includes exactly the positions on the preceding surface of the barrier substrate layer 106 at which the two-dimensional function has the same local minimum. Thus, in each sub-region of the first kind 304 the thickness 403 of the barrier substrate layer 106 is essentially constant. Additionally, in each of the sub-regions of the first kind 304 a thickness 405 of the barrier material layer 107 is the same as the average thickness of the barrier material layer 107 and as a thickness 406 of the barrier material layer 107 in the sub-region of the second kind 305 which at least partially surrounds the respective sub-region of the first kind 304. Each sub-region of the second kind 305 includes exactly the positions on the surface of the barrier substrate layer 106 which forms the first side 401 of the barrier layer 104 at which the two-dimensional function has the same local maximum. Thus, in each sub-region of the second kind 305 the thickness 404 of the barrier substrate layer 106 is essentially constant. In each sub-region of the third kind 412 the thickness of the barrier substrate layer 106 is between the local minimum in the sub-region of the first kind 304 which directly adjoins the respective sub-region of the third kind 412 and the local maximum in the sub-region of the second kind 305 which directly adjoins the respective sub-region of the third kind 412. Further, in each sub-region of the third kind 412 the thickness of the barrier substrate layer 106 strictly monotonically increases in a direction from the sub-region of the first kind 304 which directly adjoins the respective sub-region of the third kind 412 to the sub-region of the second kind 305.The depressions have a depth 407 of 1 mm. Figure 4a) shows the tangent 408 on the sub-region of the third kind 412 on the first side 401 of the barrier layer 104 which includes the maximum smaller cutting angles 409 with the plane 410 of the barrier layer 104 in the cross-section. The maximum of the smaller cutting angles 409 is 45°.

Figure 4b) shows a schematic cross-section of a barrier layer 104 of a further sheet-like composite 100 of the invention. The cross-section is in a hole-covering region 109 of the barrier layer 104. The hole-covering region 109 comprises a plurality of sub-regions of a first kind 304, at least one sub-region of a second kind 305 and a plurality of sub-regions of a third kind 412. The cross-section shows one of the sub-regions of the first kind 304, a sub-region of the second kind 305 which at least partially surrounds and adjoins the sub-region of the first kind 304 on both sides in the cross-section, and one of the sub-regions of the third kind 412, which is located between and directly adjoins the sub-region of the first kind 304 and the sub-region of the second kind 305 in the Figure. The barrier layer 104 comprises a sublayer sequence which comprises a barrier material layer 107 and a barrier substrate layer 106. The barrier layer 104 has a first side 401 and a further side 402 which is opposite the first side 401. The further side 402 of the barrier layer 104 is essentially flat. Each sub-region of the first kind 304 is part of a bulge on the first side 401 of the barrier layer 104. A thickness of the barrier substrate layer 106 is a two-dimensional function of a position on the surface of the first side 401 of the barrier layer 104. This is a surface of the barrier substrate layer 106. Each of the sub-regions of the first kind 304 includes exactly the positions on the preceding surface of the barrier substrate layer 106 at which the two-dimensional function has the same local maximum. Thus, in each sub-region of the first kind 304 the thickness 403 of the barrier substrate layer 106 is essentially constant. Additionally, in each of the sub-regions of the first kind 304 a thickness 405 of the barrier material layer 107 is the same as the average thickness of the barrier material layer 107 and as a thickness 406 of the barrier material layer 107 in the sub-region of the second kind 305 which at least partially surrounds the respective sub-region of the first kind 304. Each sub-region of the second kind 305 includes exactly the positions on the surface of the barrier substrate layer 106 which forms the first side 401 of the barrier layer 104 at which the two-dimensional function has the same local minimum. Thus, in each sub-region of the second kind 305 the thickness 404 of the barrier substrate layer 106 is essentially constant. In each sub-region of the third kind 412 the thickness of the barrier substrate layer 106 is between the local maximum in the sub-region of the first kind 304 which directly adjoins the respective sub-region of the third kind 412 and the local minimum in the sub-region of the second kind 305 which directly adjoins the respective sub-region of the third kind 412. Further, in each sub-region of the third kind 412 the thickness of the barrier substrate layer 106 strictly monotonically decreases in a direction from the sub-region of the first kind 304 which directly adjoins the respective sub-region of the third kind 412 to the sub-region of the second kind 305. The bulges have a height 411 of 1 mm. Figure 4b) shows the tangent 408 on the sub-region of the third kind 412 on the first side 401 of the barrier layer 104 which includes the maximum smaller cutting angles 409 with the plane 410 of the barrier layer 104 in the cross-section. The maximum of the smaller cutting angles 409 is 45°.

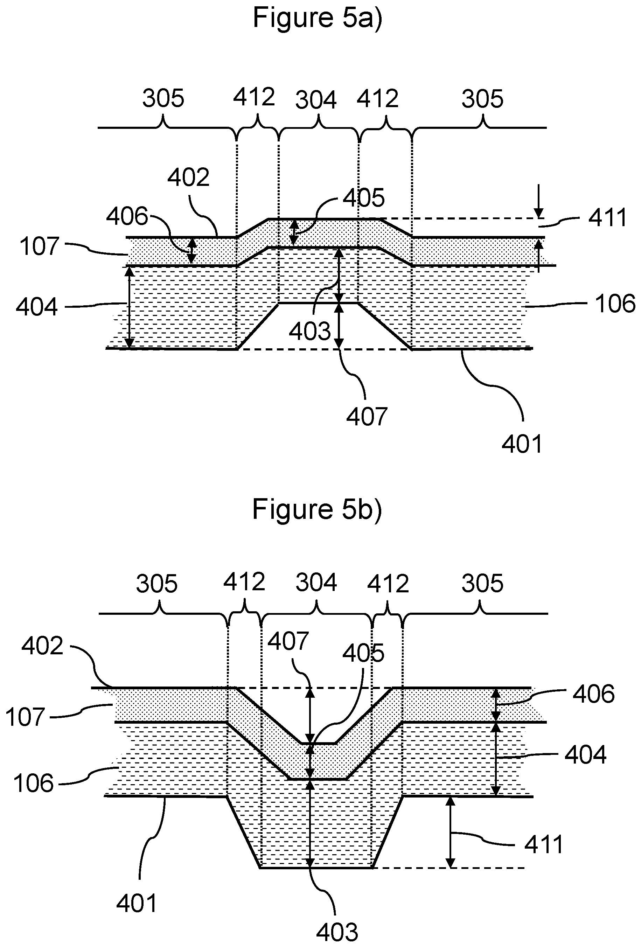

Figure 5a) shows a schematic cross-section of the barrier layer 104 of the sheet-like composite 100 in Figure 3a). The cross-section is in the hole-covering region 109 of the barrier layer 104. The cross-section shows one of the sub-regions of the first kind 304 and part of the sub-region of the second kind 305 which surrounds the sub-region of the first kind 304. Additionally, the Figure shows that a sub-region of a third kind 412 is located between the sub-region of the first kind 304 and the sub-region of the second kind 305, and directly adjoins the sub-region of the first kind 304 and the sub-region of the second kind 305. The barrier layer 104 has a first side 401 which faces the inner surface 102 of the sheet-like composite 100 and a further side 402 which is opposite the first side 401 and thus faces the outer surface 101 of the sheet-like composite 100. On the first side 401, the barrier layer 104 has a depression which is formed by the sub-region of the first kind 304 and the sub-region of the third kind 412. On the further side 402, the barrier layer 104 has a corresponding bulge. A thickness 403 of the barrier substrate layer 106 in the depression is less than a thickness 404 of the barrier substrate layer 106 in the sub-region of the second kind 305. Further, in the sub-region of the first kind 304 a thickness 405 of the barrier material layer 107 is the same as the thickness 406 of the barrier material layer 107 in the sub-region of the second kind 305 and as the thickness of the barrier material layer 107 in the sub-region of the third kind 412. The depression has a depth 407 of 1 mm. The bulge has a height 411 which is also 1 mm.

Figure 5b) shows a schematic cross-section of a barrier layer 104 of a further sheet-like composite 100 of the invention. The cross-section is in a hole-covering region 109 of the barrier layer 104. The hole-covering region 109 comprises a plurality of sub-regions of a first kind 304, at least one sub-region of a second kind 305 and a plurality of sub-regions of a third kind 412. The cross-section shows one of the sub-regions of the first kind 304, a sub-region of the second kind 305 which at least partially surrounds the sub-region of the first kind 304 on both sides in the cross-section, and one of the sub-regions of the third kind 412 which is located between and directly adjoins the sub-region of the first kind 304 and the sub-region of the second kind 305 in the Figure. The barrier layer 104 comprises a sublayer sequence which comprises a barrier material layer 107 and a barrier substrate layer 106. The barrier layer 104 has a first side 401 and a further side 402 which is opposite the first side 401. Each sub-region of the first kind 304 is part of a bulge on the first side 401 of the barrier layer 104. A thickness of the barrier substrate layer 106 is a two-dimensional function of a position on the surface of the first side 401 of the barrier layer 104. This is a surface of the barrier substrate layer 106. Each of the sub-regions of the first kind 304 includes exactly the positions on the preceding surface of the barrier substrate layer 106 at which the two-dimensional function has the same local maximum. Thus, in each sub-region of the first kind 304 the thickness 403 of the barrier substrate layer 106 is essentially constant. Additionally, in each of the sub-regions of the first kind 304 a thickness 405 of the barrier material layer 107 is the same as the average thickness of the barrier material layer 107 and as a thickness 406 of the barrier material layer 107 in the sub-region of the second kind 305 which at least partially surrounds the respective sub-region of the first kind 304. Each sub-region of the second kind 305 includes exactly the positions on the surface of the barrier substrate layer 106 which forms the first side 401 of the barrier layer 104 at which the two-dimensional function has the same local minimum. Thus, in each sub-region of the second kind 305 the thickness 404 of the barrier substrate layer 106 is essentially constant. In each sub-region of the third kind 412 the thickness of the barrier substrate layer 106 is between the local maximum in the sub-region of the first kind 304 which directly adjoins the respective sub-region of the third kind 412 and the local minimum in the sub-region of the second kind 305 which directly adjoins the respective sub-region of the third kind 412. Further, in each sub-region of the third kind 412 the thickness of the barrier substrate layer 106 strictly monotonically decreases in a direction from the sub-region of the first kind 304 which directly adjoins the respective sub-region of the third kind 412 to the sub-region of the second kind 305. Each of the bulges on the first side 401 of the barrier layer 104 is formed by a sub-region of the first kind 304 and the sub-region of the third kind 412 which directly adjoins the respective sub-region of the first kind 304. On the further side 402, the barrier layer 104 has a corresponding depression. In each of the bulges, a thickness 403 of the barrier substrate layer 106 is more than a thickness 404 of the barrier substrate layer 106 in the sub-region of the second kind 305 which at least partially surrounds the respective sub-region of the first kind 304. Further, in each sub-region of the first kind 304 a thickness 405 of the barrier material layer 107 is the same as a thickness 406 of the barrier material layer 107 in the sub-region of the second kind 305 which at least partially surrounds the respective sub-region of the first kind 304 and as a thickness of the barrier material layer 107 in the sub-region of the third kind 412 which directly adjoins the respective sub-region of the first kind 304. The bulges have a height 411 of 1 mm. The depressions have a depth 407 which is also 1 mm.

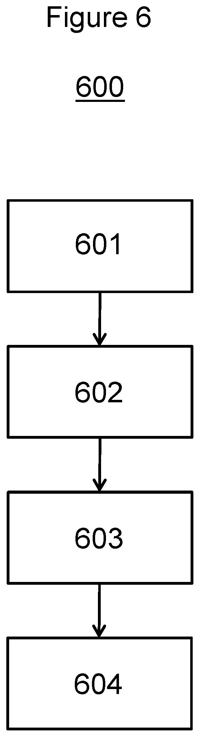

Figure 6 shows a flow chart of a method 600 according to the invention for producing the sheet-like composite 100 of Figure 1. This method 600 comprises a method step a) 601 of providing the carrier layer 103 and the barrier layer 104. In a method step b) 602, the through-hole 108 is punched into the carrier layer 103. In a further method step c) 603, the barrier layer 104 is joined to a side of the carrier layer 103 which, in the sheet-like composite 100, faces an inner surface 102 of the sheet-like composite 100 as shown in Figure 1. Thereby, the through-hole 108 in the carrier layer 103 is completely covered with the hole-covering region 109 of the barrier layer 104. In a further method step d) 604, a polymer composition H is extrusion-coated onto the barrier layer 104 on a side of the barrier layer 104 which faces away from the carrier layer 103. Thereby, the inner polymer layer H 105 is obtained from the polymer composition H. Before method step c) 603, the method 600 additionally includes a treatment step which comprises pressing at least the hole-covering region 109 of the barrier layer 104 between a first tool surface of a first tool and a further tool surface of a further tool. The first tool surface comprises a plurality of areas of a first kind and at least one area of a second kind. Each area of the first kind is elevated with respect to an area of the second kind which at least partially surrounds the respective area of the first kind.

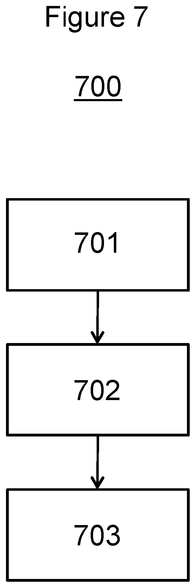

Figure 7 shows a flow chart of a method 700 according to the invention for producing the container precursor 800 in Figure 8. In a method step a. 701, the blank of the sheetlike composite 100 in Figure 3a) is provided. In a method step b. 702, the blank is folded along the longitudinal crease lines 306. In a method step c. 703, the first longitudinal edge 308 and the further longitudinal edge 309 are pressed against one another and joined to one another by heat-sealing. Thus, a longitudinal seam 802 is obtained.

Figure 8 shows a schematic diagram of a container precursor 800 of the invention. The container precursor 800 has been obtained from the blank in Figure 3a) by the method 700 of Figure 7. The container precursor 800 has 4 longitudinal folds 801, each of which was formed along a longitudinal crease line 306 and forms a longitudinal fold edge 801. In the container precursor 800, the outer surface 101 of the sheetlike composite 100 faces outward. The container precursor 800 is in the form of a sleeve and comprises a longitudinal seam 802 in which the first longitudinal edge 308 and the further longitudinal edge 309 of the blank are sealed to one another. By folding along further crease lines 301, including transversal crease lines 307, and joining of fold regions in a top region 803 and a base region 804 of the container precursor 800, a closed container 1000 is obtainable. Such a closed container 1000 is shown in Figure 10.

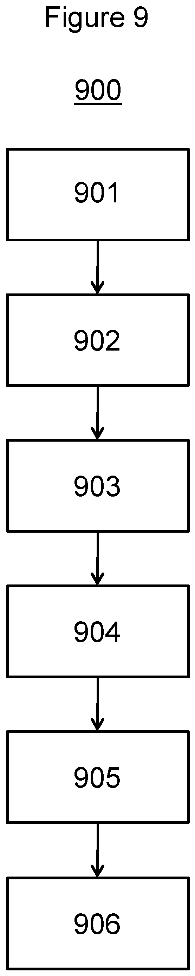

Figure 9 shows a flow chart of method 900 according to the invention for producing the closed container 1000 of Figure 10. In a method step A] 901, the container precursor 800 of Figure 8 is provided. In a method step B] 902, a base region 804 of the container precursor 800 is formed by folding the blank along crease lines 301. In a method step C] 903, the base region 804 is closed by sealing with hot air at a temperature of 300 °C. In a method step D] 904, the container precursor 800 is filled with a food or drink product 1001 and, in a method step E] 905, the container precursor 800 is closed by ultrasound sealing in a top region 803. In a method step F] 906, an opening aid 1002 is joined to the closed container 1000 with a hot melt adhesive.

Figure 10 shows a schematic diagram of a closed container 1000 of the invention. The closed container 1000 has been produced from the container precursor 800 in Figure 8 by the method 900 of Figure 9. The closed container 1000 contains a food or drink product 1001 and has 12 fold edges. In addition, a lid comprising an opening aid 1002 which covers the through-hole 108 in the carrier layer 103 on the outer surface 101 of the sheetlike composite 100 is glued to the closed container 1000. Here, the lid 1002 comprises a cutting tool as opening aid in its interior.

Figure 11a) shows a photograph of the through-hole 108 of the sheet-like composite 100 in Fig- ure 2. Figure 11a) shows that the through-hole 108 in the carrier layer 103 is completely covered by hole-covering regions 109 of the other layers of the sheet-like composite 100, including the barrier layer 104. Further, the square sub-regions of the first kind 304 and the single contiguous sub-region of the second kind 305 can be seen. The sub-regions of the first kind 304 are distributed in a regular arrangement.

Figure 11b) shows a microscopic image showing a detail of Figure 11a).

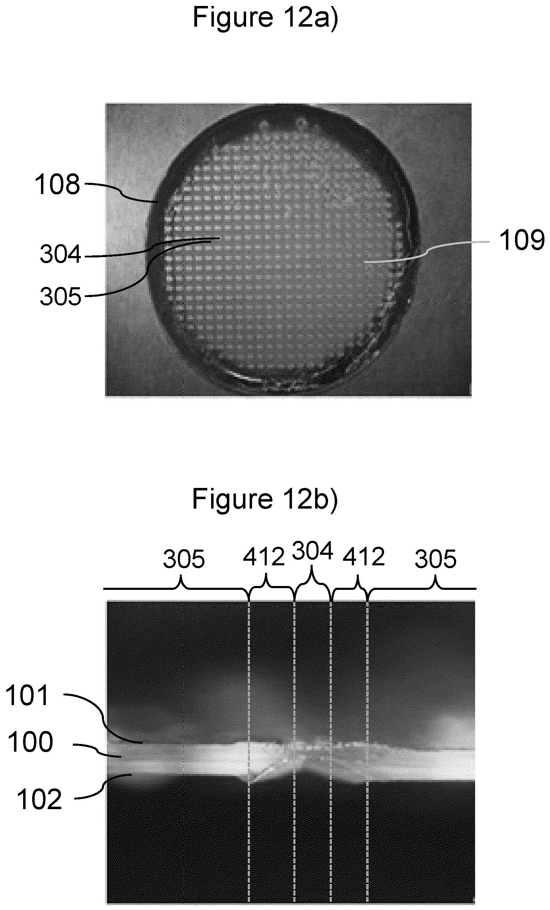

Figure 12a) shows a photograph of a through-hole 108 of a further sheet-like composite 100 of the invention. A plurality of sub-regions of a first kind 304 and a single contiguous sub-region of a second kind 305, in each case of a hole-covering region 109 of a barrier layer 104 which completely covers the through-hole 108 in a carrier layer 103, can be seen. The square sub-regions of the first kind 304 are distributed in a regular arrangement.

Figure 12b) shows a microscopic image of a cross-section through the hole-covering region 109 in Figure 12a). It can be seen that there is a sub-region of the third kind 412 located between each sub-region of the first kind 304 and the sub-region of the second kind 305, where the sub-region of the third kind 412 directly adjoins the respective sub-region of the first kind 304 and the sub-region of the second kind 305. Each sub-region of the first kind 304 and the directly adjoining sub-region of the third kind 412 form a depression on the first side 401 of the barrier layer 104 which faces the inner surface 102 of the sheet-like composite 100.

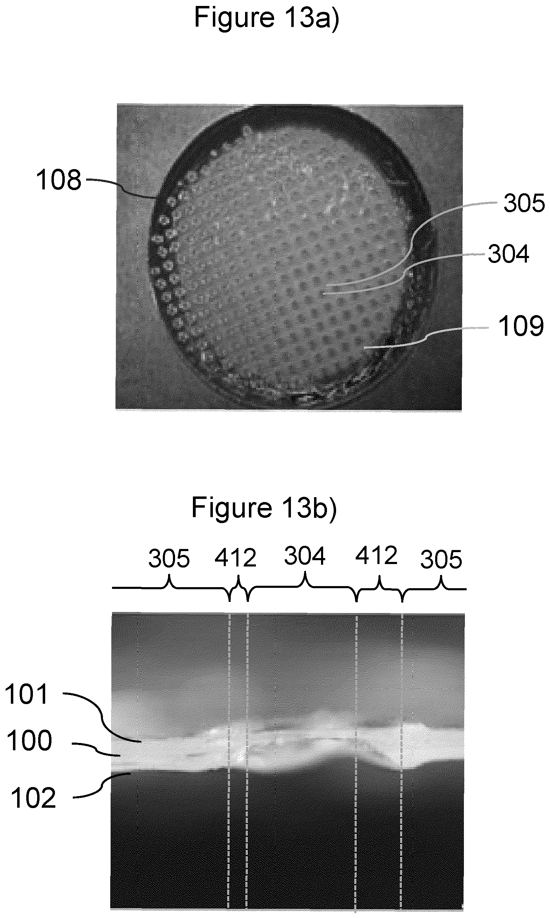

Figure 13a) shows a photograph of a through-hole 108 of a further sheet-like composite 100 of the invention. A plurality of sub-regions of a first kind 304 and a single contiguous sub-region of a second kind 305, in each case of a hole-covering region 109 of a barrier layer 104 which completely covers the through-hole 108 in a carrier layer 103, can be seen. The sub-regions of the first kind 304 are distributed in a regular arrangement.

Figure 13b) shows a microscopic image of a cross-section through the hole-covering region 109 in Figure 13a). It can be seen that there is a sub-region of the third kind 412 located between each sub-region of the first kind 304 and the sub-region of the second kind 305, where the sub-region of the third kind 412 directly adjoins the respective sub-region of the first kind 304 and the sub-region of the second kind 305. Each sub-region of the first kind 304 and the directly adjoining sub-region of the third kind 412 form a depression on the first side 401 of the barrier layer 104 which faces the inner surface 102 of the sheet-like composite 100.

Figure 14 shows a schematic partial view of a closed container prepared for the above-described test method to determine the OTR of a container. The metal plate 1401 having the gas inlet 1403 and the gas outlet 1404 can be seen. The metal plate 1401 is glued to the container in a gas tight manner via the sealing compound 1402. For measuring the OTR of the container, the measurement device is to be connected to the gas inlet 1403 and the gas outlet 1404.

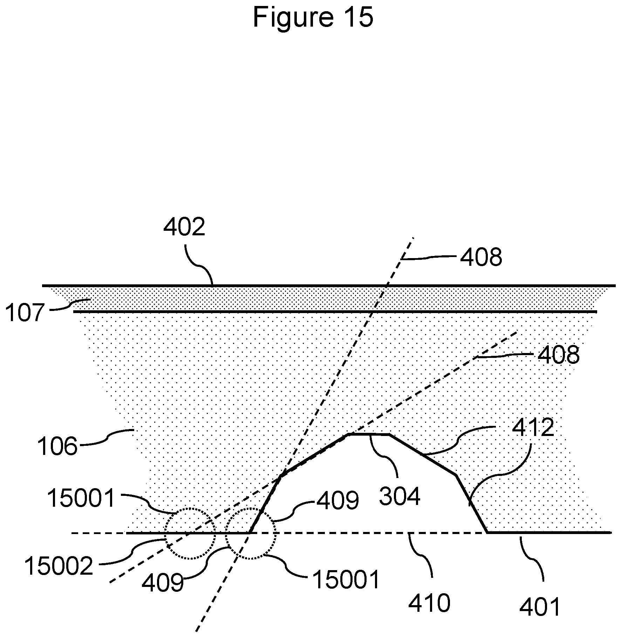

Figure 15 shows a schematic illustration of the maximum smaller cutting angles 409 between any tangent 408 and a plane 410 of the barrier layer 104. The Figure shows a cross-section through a sub-region of a first kind 304 and a directly adjoining sub-region of a third kind 412, in each case of a hole-covering region 109 of the barrier layer 104. On its first side 401, the barrier layer 104 comprises a depression. The depression is formed by the sub-region of the first kind 304 and the sub-region of the third kind 412. Further, there are two tangents 408 on the depression in the sub-region of the third kind 412. Each of the tangents 408 intersects the plane 410 of the barrier layer. Each intersection has two identical larger cutting angles 15001 and two identical smaller cutting angles 1502. According to basic geometry, neighbouring larger 15001 and smaller cutting angles 15002 sum up to 180°. One of the two tangents 408 includes the maximum smaller cutting angles 409 with the plane 410 of the barrier layer 104. This is the tangent 408 on the depression with the steepest slope.

Figure 16a) shows a schematic illustration of a treated barrier layer 104 in plan view. The barrier layer 104 is in the form of a web. A treated area 1601 of the barrier layer 104 is in the form of a stripe which longitudinally extends along the length of the web.

Figure 16b) shows a schematic illustration of a sheet-like composite 100 comprising a section of the treated barrier layer 104 of Figure 16a). The sheet-like composite 100 is in the form of a blank for producing a single container. A hole-covering region 109 of the barrier layer 104 completely covers a through-hole 108 in a carrier layer 103 of the sheet-like composite 100. The hole-covering region 109 is located entirely in the treated area 1601 of the barrier layer 104.

Figure 17 shows a custom-made setup 1700 for the test method *"Opening test barrier layer".* The setup includes a tensile/compression tester from Zwick Roell 1701 and a holder 1703 for the barrier layer 104 to be tested. The holder 1703 holds the barrier layer and a circular hole in the holder 1703 simulates a through-hole which is covered only by the barrier layer 104. For the tests cutting rings 1702 of an opening aid of the type disclosed in EP1 812 298 B1 are used.

Figure 18 shows a detail of a first tool surface 1801 of a first tool in plan view. The first tool is a counter-tool to a sonotrode. The counter-tool is also referred to as an anvil. The first tool surface 1801 comprises a plurality of areas of a first kind 1802 and exactly one contiguous area of a second kind 1803. In the plan view of Figure 18, the areas of the first kind 1802 are distributed in a regular arrangement on the first tool surface 1801. Since Figure 18 shows a detail of the first tool surface 1801, only 4 of the areas of the first kind 1802 can be seen. The area of the second kind 1803 fully surrounds each of the areas of the first kind 1802. Each area of the first kind 1802 is elevated at a constant height of 1 mm with respect to the area of the second kind 1803. A minimum distance between any two areas of the first kind 1802 is 1.0 mm. Here, each area of the first kind 1802 has a distance of 1.0 mm from each neighbouring area of the first kind 1802. The first tool surface 1802 further comprises a plurality of areas of a third kind 1804. Each area of the third kind 1804 is located between and directly adjoins an area of the first kind 1802 and the area of the second kind 1803.In each area of the third kind 1804 a height with respect to the area of the second kind 1803 strictly monotonically increases in a direction from the area of the second kind 1803 to the area of the first kind 1802 which directly adjoins the respective area of the third kind 1804. For 100 % of the areas of the third kind 1804 a maximum of the smaller cutting angles which any first tangent and any further tangent include is 70°. Each first tangent and each further tangent are tangents on the first tool surface 1802 in a cross-section through the first tool, wherein each first tangent is a tangent in the respective area of the third kind 1804. Each further tangent is a tangent in the area of the second kind 1803. Here, each area of the first kind 1802 and the surrounding and directly adjoining area of the third kind 1804 form a truncated pyramid. The areas of the first kind 1802 form the plateau tops of the truncated pyramids, whereas the areas of the third kind 1804 form the flanks of the truncated pyramids. The flanks are inclined by 20° to the vertical.

### LIST OF REFERENCE SIGNS

- **100**: sheet-like composite according to the invention
- **101**: outer surface
- **102**: inner surface
- **103**: carrier layer
- **104**: barrier layer
- **105**: inner polymer layer H
- **106**: barrier substrate layer
- **107**: barrier material layer
- **108**: through-hole
- **109**: hole-covering region
- **201**: colour application
- **202**: outer polymer layer A
- **203**: intermediate polymer layer C
- **204**: intermediate polymer layer D
- **205**: inner polymer layer F
- **206**: inner polymer layer G
- **301**: crease line
- **302**: longitudinal cut edge
- **303**: transversal cut edge
- **304**: sub-region of the first kind
- **305**: sub-region of the second kind
- **306**: longitudinal crease line
- **307**: transversal crease line
- **308**: first longitudinal edge
- **309**: further longitudinal edge
- **401**: first side of barrier layer
- **402**: further side of barrier layer
- **403**: thickness of barrier substrate layer in sub-region of the first kind
- **404**: thickness of barrier substrate layer in sub-region of the second kind
- **405**: thickness of barrier material layer in sub-region of the first kind
- **406**: thickness of barrier material layer in sub-region of the second kind
- **407**: depth of depression
- **408**: tangent on sub-region of the third kind
- **409**: maximum smaller cutting angle
- **410**: plane of barrier layer
- **411**: height of bulge
- **412**: sub-region of the third kind
- **600**: method according to the invention for producing a sheet-like composite
- **601**: method step a)
- **602**: method step b)
- **603**: method step c)
- **604**: method step d)
- **700**: method according to the invention for producing a container precursor
- **701**: method step a.
- **702**: method step b.
- **703**: method step c.
- **800**: container precursor according to the invention
- **801**: longitudinal fold/longitudinal fold edge
- **802**: longitudinal seam
- **803**: top region
- **804**: base region
- **900**: method according to the invention for producing a closed container
- **901**: method step A]
- **902**: method step B]
- **903**: method step C]
- **904**: method step D]
- **905**: method step E]
- **906**: method step F]
- **1000**: closed container according to the invention
- **1001**: food or drink product
- **1002**: lid with opening aid
- **1401**: metal plate
- **1402**: sealing compound
- **1403**: gas inlet
- **1404**: gas outlet
- **15001**: larger cutting angle
- **15002**: smaller cutting angle
- **1601**: treated area of barrier layer
- **1700**: setup for the test method *"Reduction of Average Opening Force"*
- **1701**: tensile/compression tester from Zwick Roell
- **1702**: cutting ring of opening aid of the type disclosed in EP1 812 298 B1
- **1703**: holder for barrier layer
- **1801**: first tool surface
- **1802**: area of the first kind
- **1803**: area of the second kind
- **1804**: area of the third kind

## Claims

1. A sheet-like composite (100) comprising a layer sequence which comprises the following layers, superimposed to one another, in the following order from an outer surface (101) of the sheet-like composite (100) to an inner surface (102) of the sheet-like composite (100):
a. a carrier layer (103),
b. a barrier layer (104), and
c. an inner polymer layer H (105);
wherein the carrier layer (103) has a through-hole (108) which is completely covered at least by a hole-covering region (109) of the barrier layer (104);
wherein the barrier layer (104) comprises a sublayer sequence which comprises:
- a barrier material layer (107), and
- a barrier substrate layer (106)
as sublayers which are superimposed to one another;
wherein a thickness of the barrier substrate layer (106) is a two-dimensional function of a position on a surface of the barrier substrate layer (106) which faces away from the barrier material layer (107);
wherein the hole-covering region (109) of the barrier layer (104) comprises a plurality of sub-regions of a first kind (304);
wherein either:
a] each sub-region of the first kind (304) includes exactly the positions on the surface of the barrier substrate layer (106) which faces away from the barrier material layer (107) at which the two-dimensional function has a local minimum; or
b] each sub-region of the first kind (304) includes exactly the positions on the surface of the barrier substrate layer (106) which faces away from the barrier material layer (107) at which the two-dimensional function has a local maximum;
wherein in each sub-region of the first kind (304) a thickness of the barrier material layer (107) does not differ by more than 20 % from an average thickness of the barrier material layer (107).

2. The sheet-like composite (100) according to claim 1, wherein the hole-covering region (109) of the barrier layer (104) comprises at least one sub-region of a second kind (305); wherein each sub-region of the first kind (304) is at least partially surrounded by a sub-region of the second kind (305);
wherein either:
a] each sub-region of the second kind (305) includes exactly the positions on the surface of the barrier substrate layer (106) which faces away from the barrier material layer (107) at which the two-dimensional function has a local maximum; or
b] each sub-region of the second kind (305) includes exactly the positions on the surface of the barrier substrate layer (106) which faces away from the barrier material layer (107) at which the two-dimensional function has a local minimum;
wherein in each sub-region of the first kind (304) a thickness (405) of the barrier material layer (107) does not differ by more than 20 % from a thickness (406) of the barrier material layer (107) in the sub-region of the second kind (305) which is at least partially surrounds the respective sub-region of the first kind (304).

3. The sheet-like composite (100) according to claim 2, wherein the hole-covering region (109) of the barrier layer (104) comprises a plurality of sub-regions of a third kind (412); wherein each sub-region of the third kind (412) is located between and directly adjoins a sub-region of the first kind (304) and a sub-region of the second kind (305);
wherein in each sub-region of the third kind (412) a thickness of the barrier substrate layer (106) is either:
a] between the local minimum in the sub-region of the first kind (304) which directly adjoins the respective sub-region of the third kind (412) and the local maximum in the sub-region of the second kind (305) which directly adjoins the respective sub-region of the third kind (412); or
b] between the local maximum in the sub-region of the first kind (304) which directly adjoins the respective sub-region of the third kind (412) and the local minimum in the sub-region of the second kind (305) which directly adjoins the respective sub-region of the third kind (412).

4. A method (600) for producing a sheet-like composite (100), the method (600) comprising as method steps:
a) providing a carrier layer (103);
b) creating a through-hole (108) in the carrier layer (103);
c) superimposing, preferably laminating, a barrier layer (104) to a side of the carrier layer (103) which, in the sheet-like composite (100), faces an inner surface (102) of the sheet-like composite (100), thereby completely covering the through-hole (108) in the carrier layer (103) with a hole-covering region (109) of the barrier layer (104); and
d) superimposing, preferably extrusion coating, a polymer composition H to the barrier layer (104) on a side of the barrier layer (104) which faces away from the carrier layer (103), thereby obtaining an inner polymer layer H (105) from the polymer composition H;
wherein the barrier layer (104) comprises a sublayer sequence which comprises:
- a barrier material layer (107), and
- a barrier substrate layer (106)
as sublayers which are superimposed to one another;
wherein the method (600) additionally includes a treatment step which comprises pressing at least the hole-covering region (109) of the barrier layer (104) between a first tool surface of a first tool and a further tool surface of a further tool;
wherein the first tool surface comprises a plurality of areas of a first kind and at least one area of a second kind;
wherein either:
A) each area of the first kind is elevated with respect to an area of the second kind which at least partially surrounds the respective area of the first kind, or
B) each area of the first kind is lowered with respect to an area of the second kind which at least partially surrounds the respective area of the first kind.

5. The method (600) according to claim 4, wherein in the treatment step the further tool surface vibrates:
- at a frequency in the range from 10 to 100 kHz; or
- with an amplitude in the range from 3 to 100 µm; or
- both.

6. The method (600) according to claim 4 or 5, wherein in the treatment step at least the hole-covering region (109) of the barrier layer (104) is pressed between the first tool surface and the further tool surface with a contact force in the range from 50 N to 1kN.

7. A container precursor (800) comprising:
- a sheet-like region of the sheet-like composite (100) according to any of the claims 1 to 3 or of a sheet-like composite (100) which is obtainable by the method (600) according to any of the claims 4 to 6, wherein the sheet-like region comprises the through-hole (108), or
- the sheet-like composite (100) according to any of the claims 1 to 3 or a sheet-like composite (100) which is obtainable by the method (600) according to any of the claims 4 to 6.

8. A closed container (1000) comprising:
- a sheet-like region of the sheet-like composite (100) according to any of the claims 1 to 3 or of a sheet-like composite (100) which is obtainable by the method (600) according to any of the claims 4 to 6, wherein the sheet-like region comprises the through-hole (108), or
- the sheet-like composite (100) according to any of the claims 1 to 3 or a sheet-like composite (100) which is obtainable by the method (600) according to any of the claims 4 to 6.

9. A method (700) comprising, as method steps:
a. providing:
A. a sheet-like region of the sheet-like composite (100) according to any of the claims 1 to 3 or of a sheet-like composite (100) which is obtainable by the method (600) according to any of the claims 4 to 6, wherein the sheet-like region comprises (100) the through-hole (108), a first longitudinal edge and a further longitudinal edge, or
B. the sheet-like composite (100) according to any of the claims 1 to 3 or a sheet-like composite (100) which is obtainable by the method (600) according to any of the claims 4 to 6, wherein the sheet-like composite (100) comprises a first longitudinal edge and a further longitudinal edge;
b. folding the sheet-like region or the sheet-like composite (100); and
c. contacting and joining the first longitudinal edge to the further longitudinal edge, thereby obtaining a longitudinal seam (802).

10. A method (900) comprising, as method steps:
A] providing the container precursor (800) according to claim 7 or a container precursor (800) which is obtainable by the method (700) according to claim 9;
B] forming a base region (804) of the container precursor (800) by folding the sheet-like region or the sheet-like composite (100);
C] closing the base region (804);
D] filling the container precursor (800) with a food or drink product (1001); and
E] closing the container precursor (800) in a top region (803), thereby obtaining a closed container (1000).

11. A use of the sheet-like composite (100) according to any of the claims 1 to 3 or of a sheet-like composite (100) which is obtainable by the method (600) according to any of the claims 4 to 6 for production of a food or drink product container.

12. A use of a sonotrode as the further tool in the method (600) according to any of the claims 4 to 6.

13. A use of a combination of a sonotrode and an anvil for treating at least a region of a single ply of a barrier layer (104);
where the anvil comprises a plurality of areas of a first kind and at least one area of a second kind;
wherein either:
A) each area of the first kind is elevated with respect to an area of the second kind which at least partially surrounds the respective area of the first kind, or
B) each area of the first kind is lowered with respect to an area of the second kind which at least partially surrounds the respective area of the first kind.

14. A barrier layer (104), which comprises a sublayer sequence comprising:
- a barrier material layer (107), and
- a barrier substrate layer (106)
as sublayers which are superimposed to one another;
wherein, on a side of the barrier substrate layer (106) which faces away from the barrier material layer (107), the barrier layer (104) comprises a plurality of depressions or a plurality of bulges.

15. A method comprising as method steps:
a} providing a barrier layer (104) which comprises a sublayer sequence comprising:
- a barrier material layer (107), and
- a barrier substrate layer (106)
as sublayers which are superimposed to one another; and
b} pressing at least a region of the barrier layer (104) between a first tool surface of a first tool and a further tool surface of a further tool;
wherein the first tool surface comprises a plurality of areas of a first kind and at least one area of a second kind; wherein either:
A) each area of the first kind is elevated with respect to an area of the second kind which at least partially, preferably fully, surrounds the respective area of the first kind, or
B) each area of the first kind is lowered with respect to an area of the second kind which at least partially, preferably fully, surrounds the respective area of the first kind.
